(19) Europäisches Patentamt
European Patent Office
Office européen des brevets

(11) **EP 4 465 723 A1**

(12) **EUROPEAN PATENT APPLICATION**
published in accordance with Art. 153(4) EPC

(43) Date of publication:
**20.11.2024 Bulletin 2024/47**

(21) Application number: **23737149.7**

(22) Date of filing: **06.01.2023**

(51) International Patent Classification (IPC):
**H04W 72/04** (2023.01)

(52) Cooperative Patent Classification (CPC):
**H04W 72/04; H04W 72/0446; H04W 72/0453; H04W 72/23**

(86) International application number:
**PCT/CN2023/070971**

(87) International publication number:
**WO 2023/131287 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022 CN 202210022490**

(71) Applicant: VIVO MOBILE COMMUNICATION CO., LTD.
Dongguan, Guangdong 523863 (CN)

(72) Inventors:
• LIU, Siqi
Dongguan, Guangdong 523863 (CN)
• JI, Zichao
Dongguan, Guangdong 523863 (CN)
• LI, Gen
Dongguan, Guangdong 523863 (CN)

(74) Representative: **Conti, Marco**
Bugnion S.p.A.
Via di Corticella, 87
40128 Bologna (IT)

(54) **RESOURCE DETERMINATION METHOD, RESOURCE DETECTION METHOD, AND APPARATUSES, DEVICE, AND STORAGE MEDIUM**

(57) This application provides a resource determining method, a resource monitoring method, an apparatus, a device, and a storage medium. The resource determining method includes: A terminal determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of the terminal for the target resource includes at least one of the following: a first behavior related to at least one of reception and monitoring; a second behavior related to at least one of non-reception and non-monitoring; a third behavior related to repetition transmission; a fourth behavior related to a subsequent resource of the target resource; a fifth behavior related to resource allocation or resource mapping; and a sixth behavior related to resource non-allocation or resource non-mapping.

EP 4 465 723 A1

```
           ┌─────────┐
           │  Start  │
           └─────────┘
                │
                ▼
 ┌──────────────────────────────────────────┐
 │ A terminal determines a target resource  │──── 201
 └──────────────────────────────────────────┘
                │
                ▼
           ┌─────────┐
           │   End   │
           └─────────┘
```

FIG. 2

**Description**

**CROSS-REFERENCE TO RELATED APPLICATIONS**

This application claims priority to Chinese Patent Application No. 202210022490.X, filed in China on January 10, 2022, which is incorporated herein by reference in its entirety.

**TECHNICAL FIELD**

This application pertains to the field of communication technologies, and specifically, to a resource determining method, a resource monitoring method, an apparatus, a device, and a storage medium.

**BACKGROUND**

In some communication systems, for a terminal and a network side device, there may be a plurality of resources, such as a cell reference signal (Cell Reference Signal, CRS) resource and a demodulation reference signal (Demodulation Reference Signal, DMRS) resource of a physical downlink control channel (physical downlink control channel, PDCCH). However, in some scenarios, the terminal or the network side device may be incapable of determining a specific behavior of a resource. For example, for an overlapping resource of a CRS and a DMRS resource of a PDCCH, the terminal and the network side device may be incapable of determining a specific behavior of the overlapping resource. As a result, transmission performance of the terminal is relatively poor.

**SUMMARY**

Embodiments of this application provide a resource determining method, a resource monitoring method, an apparatus, a device, and a storage medium, to resolve a problem of relatively poor transmission performance of a terminal.
According to a first aspect, a resource determining method is provided, including:

a terminal determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where
a target behavior of the terminal for the target resource includes at least one of the following:

a first behavior related to at least one of reception and monitoring;
a second behavior related to at least one of non-reception and non-monitoring;
a third behavior related to repetition transmission;
a fourth behavior related to a subsequent resource of the target resource;
a fifth behavior related to resource allocation or resource mapping; and
a sixth behavior related to resource non-allocation or resource non-mapping.

According to a second aspect, a resource monitoring method is provided, including:

a terminal determines a control resource, where the control resource includes at least one of the following: a first control resource for self-scheduling on a first cell and a second control resource for scheduling on the first cell from a second cell; and
the terminal monitors the control resource, where
the first control resource is determined based on first carrier information for self-scheduling on the first cell, and the first carrier information includes at least one of the following:
first carrier indication information and a first carrier indicator field (carrier indicator field, CIF).

According to a third aspect, a resource determining method is provided, including:

a network side device determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where
a target behavior of the network side device for the target resource includes at least one of the following:

    a first behavior related to sending;
    a second behavior related to non-sending;
    a third behavior related to repetition transmission;
    a fourth behavior related to a subsequent resource of the target resource;
    a fifth behavior related to resource allocation or resource mapping; and
    a sixth behavior related to resource non-allocation or resource non-mapping.

According to a fourth aspect, a resource monitoring method is provided, including:

    a network side device determines a control resource, where the control resource includes at least one of the following:
    a first control resource for self-scheduling on a first cell and a second control resource for scheduling on the first cell
    from a second cell; and
    the network side device sends the control resource, where
    the first control resource is determined based on first carrier information for self-scheduling on the first cell, and the first
    carrier information includes at least one of the following: first carrier indication information and a first CIF.

According to a fifth aspect, a resource determining apparatus is provided, including:

    a determining module, configured to determine a target resource, where the target resource includes one of the
    following: an available resource, a resource object associated with the available resource, an overlapping resource, a
    resource object associated with the overlapping resource, another resource, a resource object associated with the
    another resource, a reference resource, and a resource object associated with the reference resource, and the
    another resource is resource overlapping for preset transmission, where
    a target behavior of the terminal for the target resource includes at least one of the following:

    a first behavior related to at least one of reception and monitoring;
    a second behavior related to at least one of non-reception and non-monitoring;
    a third behavior related to repetition transmission;
    a fourth behavior related to a subsequent resource of the target resource;
    a fifth behavior related to resource allocation or resource mapping; and
    a sixth behavior related to resource non-allocation or resource non-mapping.

According to a sixth aspect, a resource monitoring apparatus is provided, including:

    a determining module, configured to determine a control resource, where the control resource includes at least one of
    the following: a first control resource for self-scheduling on a first cell and a second control resource for scheduling on
    the first cell from a second cell; and
    a monitoring module, configured to monitor the control resource, where
    the first control resource is determined based on first carrier information for self-scheduling on the first cell, and the first
    carrier information includes at least one of the following: first carrier indication information and a first CIF.

According to a seventh aspect, a resource determining apparatus is provided, including:

    a determining module, configured to determine a target resource, where the target resource includes one of the
    following: an available resource, a resource object associated with the available resource, an overlapping resource, a
    resource object associated with the overlapping resource, another resource, a resource object associated with the
    another resource, a reference resource, and a resource object associated with the reference resource, and the
    another resource is resource overlapping for preset transmission, where
    a target behavior of the network side device for the target resource includes at least one of the following:

    a first behavior related to sending;
    a second behavior related to non-sending;
    a third behavior related to repetition transmission;
    a fourth behavior related to a subsequent resource of the target resource;
    a fifth behavior related to resource allocation or resource mapping; and

a sixth behavior related to resource non-allocation or resource non-mapping.

According to an eighth aspect, a resource monitoring apparatus is provided, including:

a determining module, configured to determine a control resource, where the control resource includes at least one of the following: a first control resource for self-scheduling on a first cell and a second control resource for scheduling on the first cell from a second cell; and
a sending module, configured to send the control resource, where
the first control resource is determined based on first carrier information for self-scheduling on the first cell, and the first carrier information includes at least one of the following: first carrier indication information and a first CIF.

According to a ninth aspect, a terminal is provided. The terminal includes a processor and a memory. The memory stores a program or instructions that can be run on the processor, and when the program or the instructions are executed by the processor, steps of the method according to the first aspect or the second aspect are implemented.

According to a tenth aspect, a terminal is provided, including a processor and a communication interface. The processor is configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of the terminal for the target resource includes at least one of the following: a first behavior related to at least one of reception and monitoring; a second behavior related to at least one of non-reception and non-monitoring; a third behavior related to repetition transmission; a fourth behavior related to a subsequent resource of the target resource; a fifth behavior related to resource allocation or resource mapping; and a sixth behavior related to resource non-allocation or resource non-mapping. Alternatively, the processor is configured to determine a control resource, where the control resource includes at least one of the following: a first control resource for self-scheduling on a first cell and a second control resource for scheduling on the first cell from a second cell; and the communication interface is configured to monitor the control resource, where the first control resource is determined based on first carrier information for self-scheduling on the first cell, and the first carrier information includes at least one of the following: first carrier indication information and a first CIF.

According to an eleventh aspect, a network side device is provided. The network side device includes a processor and a memory. The memory stores a program or instructions that can be run on the processor, and when the program or the instructions are executed by the processor, steps of the method according to the third aspect or the fourth aspect are implemented.

According to a twelfth aspect, a network side device is provided, including a processor and a communication interface. The processor is used by the network side device to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of the network side device for the target resource includes at least one of the following: a first behavior related to sending; a second behavior related to non-sending; a third behavior related to repetition transmission; a fourth behavior related to a subsequent resource of the target resource; a fifth behavior related to resource allocation or resource mapping; and a sixth behavior related to resource non-allocation or resource non-mapping. Alternatively, the processor is configured to determine a control resource, where the control resource includes at least one of the following: a first control resource for self-scheduling on a first cell and a second control resource for scheduling on the first cell from a second cell; and the communication interface is configured to send the control resource, where the first control resource is determined based on first carrier information for self-scheduling on the first cell, and the first carrier information includes at least one of the following: first carrier indication information and a first CIF.

According to a thirteenth aspect, a system is provided, including: a terminal and a network side device. The terminal may be configured to perform steps of the method according to the first aspect or the second aspect. The network side device may be configured to perform steps of the method according to the third aspect or the fourth aspect.

According to a fourteenth aspect, a readable storage medium is provided. The readable storage medium stores a program or instructions, and when the program or the instructions are executed by a processor, steps of the method according to the first aspect are implemented, or steps of the method according to the second aspect are implemented, or steps of the method according to the third aspect are implemented, or steps of the method according to the fourth aspect are implemented.

According to a fifteenth aspect, a chip is provided. The chip includes a processor and a communication interface, and the communication interface is coupled to the processor. The processor is configured to run a program or instructions to implement the method according to the first aspect, or implement steps of the method according to the second aspect, or implement steps of the method according to the third aspect, or implement steps of the method according to the fourth aspect.

According to a sixteenth aspect, a computer program/program product is provided. The computer program/program product is stored in a storage medium. The computer program/program product is executed by at least one processor to implement steps of the method according to the first aspect, or the computer program/program product is executed by at least one processor to implement steps of the method according to the second aspect, or the computer program/program product is executed by at least one processor to implement steps of the method according to the third aspect, or the computer program/program product is executed by at least one processor to implement steps of the method according to the fourth aspect.

According to a seventeenth aspect, a communication device is provided, configured to perform the method according to the first aspect, or perform steps of the method according to the second aspect, or perform steps of the method according to the third aspect, or perform steps of the method according to the fourth aspect.

In embodiments of this application, a terminal determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of the terminal for the target resource includes at least one of the following: a first behavior related to at least one of reception and monitoring; a second behavior related to at least one of non-reception and non-monitoring; a third behavior related to repetition transmission; a fourth behavior related to a subsequent resource of the target resource; a fifth behavior related to resource allocation or resource mapping; and a sixth behavior related to resource non-allocation or resource non-mapping. In this way, the terminal can determine a specific behavior for the target resource, so that transmission performance of the terminal is improved.

## BRIEF DESCRIPTION OF THE DRAWINGS

FIG. 1 is a block diagram of a wireless communication system to which an embodiment of this application is applicable;
FIG. 2 is a flowchart of a resource determining method according to an embodiment of this application;
FIG. 3 is a diagram of resource overlapping according to an embodiment of this application;
FIG. 4 is a flowchart of a resource monitoring method according to an embodiment of this application;
FIG. 5 is a flowchart of another resource determining method according to an embodiment of this application;
FIG. 6 is a flowchart of another resource monitoring method according to an embodiment of this application;
FIG. 7 is a diagram of a structure of a resource determining apparatus according to an embodiment of this application;
FIG. 8 is a diagram of a structure of a resource monitoring apparatus according to an embodiment of this application;
FIG. 9 is a diagram of a structure of another resource determining apparatus according to an embodiment of this application;
FIG. 10 is a diagram of a structure of another resource monitoring apparatus according to an embodiment of this application;
FIG. 11 is a diagram of a structure of a communication device according to an embodiment of this application;
FIG. 12 is a diagram of a structure of a terminal according to an embodiment of this application; and
FIG. 13 is a diagram of a structure of a network side device according to an embodiment of this application.

## DETAILED DESCRIPTION

The following clearly describes the technical solutions in embodiments of this application with reference to the accompanying drawings in embodiments of this application. It is clear that the described embodiments are some rather than all of embodiments of this application. Based on embodiments of this application, all other embodiments obtained by a person of ordinary skill in the art fall within the protection scope of this application.

The terms "first", "second", and the like in the specification and claims of this application are used to distinguish between similar objects, but are not used to describe a specific sequence or order. It should be understood that terms used in this way may be interchangeable in an appropriate case, so that embodiments of this application can be implemented in a sequence other than those shown or described herein, objects distinguished by "first" and "second" are generally of one type, and a quantity of objects is not limited. For example, there may be one or more first objects. In addition, in the specification and claims, "and/or" represents at least one of connected objects, and the character "/" generally represents an "or" relationship between associated objects.

It should be noted that the technology described in embodiments of this application is not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in embodiments of this application are often used interchangeably. The described technology may be used in the foregoing system and radio technology, or may be used in another system and radio technology. The following describes a new radio (New Radio, NR) system as an example, and NR terms are used in most of the following descriptions. However, these technologies may also be applied to applications other than NR system applications, for example, a 6th generation (6$^{th}$ Generation, 6G) communication system.

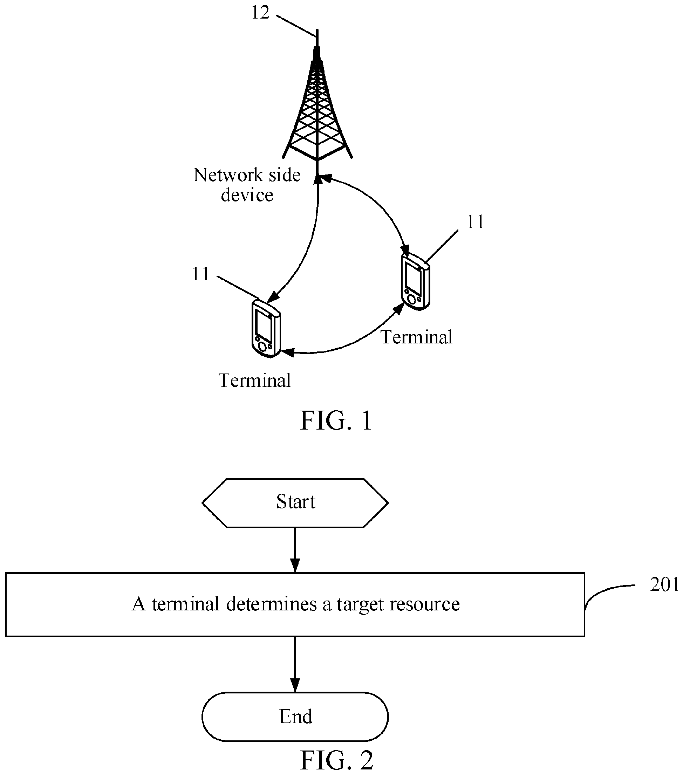

FIG. 1 is a block diagram of a wireless communication system to which an embodiment of this application is applicable. The wireless communication system includes a terminal 11 and a network side device 12. The terminal 11 may be a terminal side device such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle-mounted device (VUE), a pedestrian terminal (PUE), a smart home (a home device having a wireless communication function, for example, a refrigerator, a television, a washer, or furniture), a game console, a personal computer (personal computer, PC), a teller machine, or a self-service machine. The wearable device includes: a smart watch, a smart band, a smart headset, smart glasses, smart jewelry (a smart bracelet, a smart hand chain, a smart ring, a smart necklace, a smart anklet, a smart ankle chain, or the like), a smart wristband, smart clothing, or the like. It should be noted that, a specific type of the terminal 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the field. Provided that a same technical effect is achieved, the base station is not limited to a specific technical term. It should be noted that, in embodiments of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in embodiments of this application, only a core network device in an NR system is used as an example for description, and a specific type of the core network device is not limited.

With reference to the accompanying drawings, the following describes in detail a resource determining method, a resource monitoring method, an apparatus, a device, and a storage medium in embodiments of this application by using some embodiments and application scenarios thereof.

Refer to FIG. 2. FIG. 2 is a flowchart of a resource determining method according to an embodiment of this application. As shown in FIG. 2, the following steps are included.

Step 201: A terminal determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where

a target behavior of the terminal for the target resource includes at least one of the following:

   a first behavior related to at least one of reception and monitoring;

a second behavior related to at least one of non-reception and non-monitoring;
a third behavior related to repetition transmission;
a fourth behavior related to a subsequent resource of the target resource;
a fifth behavior related to resource allocation or resource mapping; and
a sixth behavior related to resource non-allocation or resource non-mapping.

The available resource may include at least a part of a resource that can be used as an NR PDCCH, a control resource set (Control Resource Set, CORESET), a control channel element (control channel element, CCE), or an NR PDCCH DMRS, or the available resource may include at least a part of a resource actually used as an NR PDCCH, a CORESET, a CCE, or an NR PDCCH DMRS. In addition, the at least a part of a resource that can be used as a target downlink resource may include: at least a part of a resource determined to be used as a target downlink resource after being shifted or punctured.

The overlapping resource may also be referred to as a collision resource or a conflict resource, and may be specifically an overlapping resource between two or more resources.

The reference resource may be a predefined reference resource, for example, NR PDCCH DMRS RE#1/5/9 specified in a protocol. Alternatively, the reference resource may be an available resource for at least one of an RS, a downlink control channel, and a downlink control signal. In some implementations, the reference resource is also an available resource.

The preset transmission may include CRS transmission, that is, the another resource includes a CRS resource; or the preset transmission may include LTE transmission, that is, the another resource may include an LTE transmission resource, for example, downlink transmission. This is not limited in this application. The preset transmission may be specifically configured based on an actual requirement.

The first behavior related to at least one of reception and monitoring may include at least one of the following: a reception-related behavior and a monitoring-related behavior.

The reception-related behavior may be reception on the target resource, or assuming that the target resource is used for downlink signal transmission.

The monitoring-related behavior may be monitoring on the target resource, or assuming that the target resource is used for downlink signal transmission.

The first behavior related to at least one of non-reception and non-monitoring may include at least one of the following:
a non-reception-related behavior and a non-monitoring-related behavior.

The non-reception-related behavior may be non-reception on the target resource, or assuming that the target resource is not used for downlink signal transmission.

The non-monitoring-related behavior may be non-monitoring on the target resource, or assuming that the target resource is not used for downlink signal transmission.

The third behavior related to repetition transmission may be assuming that the target resource is configured for a configuration related to repetition transmission.

The fourth behavior related to the subsequent resource of the target resource may be reception or monitoring on the subsequent resource.

The fifth behavior related to resource allocation or resource mapping may be that the terminal assumes or considers that a resource corresponding to the target resource is allocated to the terminal, or is mapped.

The sixth behavior related to resource non-allocation or resource non-mapping may be that the terminal assumes or considers that a resource corresponding to the target resource is not allocated or mapped.

In this embodiment of this application, a specific behavior for the target resource can be determined by using the foregoing steps, to improve transmission performance of the terminal. For example, in the foregoing steps, a collision between a PDCCH DMRS and a CRS can be avoided, to avoid affecting use of the PDCCH DMRS for channel estimation and PDCCH monitoring. In addition, this embodiment of this application is not only applicable to the DMRS, but also avoids a collision between another RS and a CRS to avoid affecting transmission performance of the terminal.

In an optional implementation, the available resource includes at least one of the following:

at least a part of a resource that can be used as a target downlink resource; and
at least a part of a resource actually used as a target downlink resource;
and/or
the resource object associated with the available resource includes at least one of the following:
a resource object associated with at least a part of a resource that can be used as a target downlink resource; and
a resource object associated with at least a part of a resource actually used as a target downlink resource, where the target downlink resource includes at least one of the following: a reference signal RS resource and a physical downlink control resource.

The physical downlink control resource may include at least one of the following:
a PDCCH resource, a control resource set (Control Resource Set, CORESET), and a control channel element (control channel element, CCE).

For example, the available resource includes at least a part of a resource that can be used for at least one of an NR PDCCH, a CORESET, a CCE, and an NR PDCCH DMRS, or the available resource includes at least a part of a resource actually used for at least one of an NR PDCCH, a CORESET, a CCE, and an NR PDCCH DMRS.

In addition, in some implementations, the available resource may include a resource other than the overlapping resource. In some implementations, the reference resource may be an available resource.

The associated resource object may include at least one of the following:
a located resource object, a belonging resource object, and an associated object.

Optionally, the at least a part of a resource that can be used as a target downlink resource includes:

at least a part of a resource that can be used as a target downlink resource after being shifted or punctured;
and/or
the at least a part of a resource actually used as a target downlink resource includes:
at least a part of a resource actually used as a target downlink resource after being shifted or punctured;
and/or
the resource object associated with at least a part of a resource that can be used as a target downlink resource includes:

a resource object associated with at least a part of a resource that can be used as a target downlink resource after being shifted or punctured;
and/or
the resource object associated with at least a part of a resource that can be actually used as a target downlink resource includes:
a resource object associated with at least a part of a resource that can be actually used as a target downlink resource after being shifted or punctured.

In this implementation, more available resources may be obtained through shifting or puncturing, to improve resource utilization.

In an optional implementation, the overlapping resource includes at least one of the following:

at least a part of where at least one of the available resource and the reference resource overlaps the another resource;
and/or
the resource object associated with the overlapping resource includes at least one of the following:
a resource object associated with at least a part of where at least one of the available resource and the reference resource overlaps the another resource.

The at least a part of where the at least one of the available resource and the reference resource overlaps the another resource may be at least a part of where the at least one of the available resource and the reference resource overlaps the another resource in frequency domain, or may be at least a part of where the at least one of the available resource and the reference resource overlaps the another resource in time domain.

In this way, the terminal may determine at least one of an RS resource and a physical downlink control resource based on at least a part of the overlapping resource, or determine at least one of an RS resource and a physical downlink control resource based on at least a part of a resource object associated with at least a part of the overlapping resource.

In addition, the overlapping may be possible overlapping or actual overlapping.

Optionally, the at least a part of where at least one of the available resource and the reference resource overlaps the another resource includes:

at least a part of where at least one of the available resource and the reference resource obtained after being shifted or punctured overlaps the another resource;
and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

It should be noted that, in some implementations, resource overlapping can be avoided through shifting or puncturing. For example, after an NR PDCCH or an NR PDCCH DMRS is punctured or shifted, there is no overlapping/collision between the NR PDCCH or the NR PDCCH DMRS and a CRS resource, or the punctured or shifted NR PDCCH DMRS still overlaps the CRS resource.

In an optional implementation, the resource object includes at least one of the following:
a symbol, a slot, a resource element (Resource Element, RE), a resource block (Resource Block, RB), a resource element group (Resource Element Group, REG), a REG bundle (REG BUNDLE), a CCE, a candidate PDCCH (PDCCH candidate), a CORESET, a span (span, or translated as extent), a PDCCH monitoring occasion (Monitoring occasion, MO), a search space (search space, SS), timer running time (timer), a period, a duration (duration), a bandwidth part (Bandwidth Part, BWP), a carrier, a subcarrier spacing (subcarrier spacing, SCS), a cell, a bandwidth, a frequency band, and a frequency range (frequency range).

For example, the resource object associated with the overlapping resource includes at least one of the following:
a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the overlapping resource.

For example, an overlapping part is an RE on an RB or a symbol, but an object associated with the overlapping part may be interpreted as an RB to which the overlapping part belongs, or a symbol to which the overlapping part belongs, or a slot to which the overlapping part belongs, or may be all RBs, REs, symbols, and/or slots corresponding to an index of the RB, the RE, the symbol, and/or the slot.

For example, if an NR PDCCH DMRS and a CRS overlap on an RE#9 of a symbol 1, the resource object associated with the overlapping resource may include: a symbol, a CCE, a REG, a REG BUNDLE, a PDCCH candidate, and/or a CORESET to which the overlapping resource belongs. In addition, the terminal may further determine a behavior on the symbol, the CCE, the REG, the REG BUNDLE, the PDCCH candidate, and/or the CORESET, for example, determine whether a PDCCH needs to be further detected on the symbol, the CCE, the REG, the REG BUNDLE, the PDCCH candidate, and/or the CORESET.

The resource object associated with the available resource may include at least one of the following:
a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the available resource.

The resource object associated with the another resource may include at least one of the following:
a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the another resource.

The resource object associated with the reference resource may include at least one of the following:
a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the reference resource.

In an optional implementation, the first behavior related to at least one of reception and monitoring for the target resource includes at least one of the following:

    monitoring the target resource;
    receiving the target resource;
    assuming that the target resource is used for transmission of at least one of an RS, a downlink control channel, and a downlink control signal; and
    determining that the target resource is used for transmission of at least one of an RS, a downlink control channel, and a downlink control signal;
    and/or
    the second behavior related to at least one of non-reception and non-monitoring for the target resource includes at least one of the following:

        refraining from monitoring the target resource;
        refraining from receiving the target resource;
        assuming that the target resource is not used for transmission of at least one of an RS, a downlink control channel, and a downlink control signal; and
        determining that the target resource is not used for transmission of at least one of an RS, a downlink control channel, and a downlink control signal;
        and/or
        the third behavior related to repetition transmission for the target resource includes at least one of the following:

assuming that the target resource is configured for at least one of downlink control channel repetition transmission and downlink control signal repetition transmission;

assuming that the target resource is configured for RS repetition transmission;

assuming that at least one of a downlink control channel repetition transmission and a downlink control signal repetition transmission is performed on the target resource;

assuming that an RS repetition transmission is performed on the target resource;

determining that the target resource is configured for at least one of downlink control channel repetition transmission and downlink control signal repetition transmission;

determining that the target resource is configured for RS repetition transmission;

determining that at least one of a downlink control channel repetition transmission and a downlink control signal repetition transmission is performed on the target resource; and

determining that an RS repetition transmission is performed on the target resource;

and/or

the fourth behavior related to the subsequent resource of the target resource for the target resource includes at least one of the following:

monitoring the subsequent resource of the target resource; and

receiving the subsequent resource of the target resource; and/or

the fifth behavior related to resource allocation or resource mapping for the target resource includes at least one of the following:

assuming that a resource corresponding to the target resource is allocated or mapped; and

determining that a resource corresponding to the target resource is allocated or mapped; and/or

the sixth behavior related to resource non-allocation or resource non-mapping for the target resource includes at least one of the following:

assuming that a resource corresponding to the target resource is not allocated or mapped; and

determining that a resource corresponding to the target resource is not allocated or mapped.

The monitoring the target resource may be performing downlink signal monitoring on the target resource, and the receiving the target resource may be performing downlink signal reception on the target resource.

In this implementation, through the first behavior, the terminal can perform a communication operation on the target resource, to improve transmission performance of the terminal.

Through the second behavior, the terminal can avoid a conflict on the target resource, to improve transmission performance of the terminal.

Through the third behavior, the terminal can perform repetition transmission on the target resource, to improve transmission performance of the terminal.

Through the fourth behavior, the terminal can perform a communication operation on the subsequent resource of the target resource, to improve transmission performance of the terminal.

It should be noted that, for the RS repetition transmission, the downlink control channel repetition transmission, and the downlink control signal repetition transmission (for example, PDCCH repetition transmission), refer to RS repetition transmission and PDCCH repetition transmission defined in a protocol. Details are not described herein.

For a network side device, the fifth behavior may be that the network side device maps or allocates a (control) resource corresponding to the target resource, and the terminal assumes or considers that the (control) resource corresponding to the target resource is allocated or mapped. Optionally, when at least one of a first condition, a second condition, a third condition, and a fourth condition described in embodiments of this application is met, the fifth behavior is performed.

In addition, if the target resource exceeds a preset limitation, the resource corresponding to the target resource is not mapped or allocated, and/or if the target resource does not exceed the preset limitation, the resource corresponding to the target resource is mapped or allocated. The preset limitation may be a rule defined in the protocol. The preset limitation may be corresponding to at least one of the first condition, the second condition, the third condition, and the fourth condition described in embodiments of this application.

For example, the target resource is a search space (Search Space, SS) 1 associated with the overlapping part. In this case, during search space mapping, if a corresponding limitation (for example, a resource quantity limitation or a blind monitoring quantity limitation) is not exceeded after the SS1 is mapped, the SS1 is mapped; and/or if the corresponding limitation is exceeded after the SS1 is mapped, the SS1 is not mapped. For another example, the target resource is an MO or a slot associated with the overlapping part (for example, the overlapping part is some slots or some MOs in the SS1). In this case, during search space mapping on the MO or the slot to which the overlapping part belongs, if a corresponding limitation (for example, a resource quantity limitation or a blind monitoring quantity limitation) is not exceeded after the SS1 is mapped, the SS1 is mapped; and/or otherwise, the SS1 is not mapped.

For a network side device, the sixth behavior may be that the network side device does not map or allocate a (control) resource corresponding to the target resource, and the terminal assumes or considers that the (control) resource corresponding to the target resource is not allocated or mapped. Optionally, when at least one of a first condition, a second condition, a third condition, and a fourth condition described in embodiments of this application is met, the sixth behavior is performed.

For example, if overlapping occurs, and the target resource is a search space (SS1) associated with the overlapping part, the SS1 is not mapped. This is equivalent to discarding the SS1. For another example, the target resource is an MO or a slot associated with the overlapping part (for example, the overlapping part is some slots or some MOs in the SS 1). In this case, during search space mapping on the MO or the slot to which the overlapping part belongs, the SS1 is not mapped, which is equivalent to discarding the SS1; and/or if there is a search space that does not overlap another resource on the MO or the slot, the search space may be mapped.

In an implementation, the terminal performs the fifth behavior when the first condition and/or the third condition are/is met.

In an implementation, the terminal performs the fifth behavior when the fourth condition and/or the third condition are/is met.

Optionally, the monitoring the target resource includes:

monitoring at least one of an RS, a downlink control channel, and a downlink control signal on the target resource; and/or
the receiving the target resource includes:

receiving at least one of an RS, a downlink control channel, and a downlink control signal on the target resource; and/or
the monitoring the subsequent resource of the target resource includes:

monitoring at least one of an RS, a downlink control channel, and a downlink control signal on the subsequent resource of the target resource;
and/or
the receiving the subsequent resource of the target resource includes:

receiving at least one of an RS, a downlink control channel, and a downlink control signal on the subsequent resource of the target resource;
and/or
the refraining from monitoring the target resource includes:

refraining from monitoring at least one of an RS, a downlink control channel, and a downlink control signal on the target resource;
and/or
the refraining from receiving the target resource includes:
refraining from receiving at least one of an RS, a downlink control channel, and a downlink control signal on the target resource.

In this implementation, when at least one of the RS, the downlink control channel, and the downlink control signal is detected or received, transmission performance for the RS, the downlink control channel, and the downlink control signal can be improved. When at least one of the RS, the downlink control channel, and the downlink control signal is not detected or received, a conflict between the RS, the downlink control channel, and the downlink control signal can be avoided.

In an optional implementation, in a case that the target resource meets a preset condition, the terminal performs at least one of the following on the target resource:
the first behavior, the second behavior, the third behavior, the fourth behavior, the fifth behavior, and the sixth behavior.

The preset condition may be defined in a protocol or configured by a network side device.

For example, for resources that may have good performance or small impact after being punctured or shifted, the terminal determines to monitor these resources or associated resource objects of these resources, and/or the terminal allocates or maps these resources or associated resource objects (that is, participates in overbooking).

For another example, for resources that may have poor performance or large impact after being punctured/-shifted, the terminal skips these resources or associated resource objects of these resources; and/or the terminal does not allocate or map these resources or associated resource objects (that is, does not participate in overbooking).

Optionally, the preset condition includes a first condition, and the first condition includes at least one of the following:

the target resource is a terminal specific (UE specific) resource, or the target resource is a dedicated (dedicated) resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network (Multicast Broadcast Single Frequency Network, MBSFN) resource or a normal subframe;

a value of a precoding granularity control parameter (precoderGranularity) is set to all contiguous RBs (allContiguousRBs) or a precoding granularity (precoderGranularity);

there is no overlapping on at least a part (such as REG BUNDLE or RE or RB, or such as symbol or MO or span or slot) of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

It should be noted that, all the foregoing thresholds may be defined in a protocol or configured by a network side, and a specific value may be set based on an actual scenario requirement. This is not limited.

The resource quantity of the target resource may be a quantity of time domain resource units of the target resource, such as a symbol quantity or a slot quantity. For example, it is assumed that an NR PDCCH occupies three consecutive symbols. It is assumed that when an RE1, an RE5, and an RE9 on an RB to which the PDCCH belongs are reference resources, there is overlapping on only one PDCCH symbol, and there is no overlapping on the other two NR PDCCH symbols. In this case, it is considered that the target resource is only the overlapping symbol. Therefore, a PDCCH DMRS may not be mapped on the overlapping PDCCH symbol. In this way, an overlapping part (which may also be interpreted as a collision part) is small, and it is considered that removing a DMRS in this part does not affect performance. Therefore, the collision part is used for a CRS.

The resource proportion corresponding to the target resource may be a proportion of the target resource in a corresponding resource set, for example, a proportion of the overlapping resource in the reference resource.

The resource proportion of the at least a part of the non-target resource may be a proportion of the at least a part of the non-target resource in a corresponding resource set.

The MBSFN resource may be an MBSFN subframe or slot.

In some implementations, a common resource (for example, a common CORESET) may be shared by the foregoing terminal and a legacy terminal (legacy UE) at the same time, so that the foregoing terminal may maintain a behavior consistent with that of the legacy UE. For example, the legacy UE always does not consider that there is collision/overlapping, and therefore always normally receives an RS on a reference signal (Reference Signal, RS) resource. Therefore, in this implementation, the foregoing terminal also receives an RS on the common resource.

The first condition is applicable to at least one of the overlapping resource, the resource object associated with the overlapping resource, the another resource, the resource object associated with the another resource, the reference resource, and the resource object associated with the reference resource.

In addition, under the first condition, at least one of the first behavior, the third behavior, the fourth behavior, and the fifth behavior may be performed, or at least one of the second behavior, the third behavior, the fourth behavior, and the sixth behavior may be performed.

In a preferred manner, at least one of the first behavior, the third behavior, the fourth behavior, and the fifth behavior is performed under the first condition.

It should be noted that, in this embodiment of this application, the target resource includes one of the following: the available resource, the resource object associated with the available resource, the overlapping resource, the resource object associated with the overlapping resource, the another resource, the resource object associated with the another resource, the reference resource, and the resource object associated with the reference resource. Therefore, when it is determined in this application that the target resource meets the first condition (the following second condition, third condition, fourth condition, first information, and second information), the target resource that matches the condition may be the same as or different from the target resource corresponding to the first behavior, the second behavior, the third behavior, the fourth behavior, the fifth behavior, and the sixth behavior. For example, when the overlapping resource meets the first condition, at least one of the first behavior, the second behavior, the third behavior, the fourth behavior, the fifth behavior, and the sixth behavior may be performed for the resource object associated with the overlapping resource. Alternatively, when the resource object associated with the overlapping resource meets the first condition, at least one of the first behavior, the second behavior, the third behavior, the fourth behavior, the fifth behavior, and the sixth behavior may be performed for the overlapping resource object. The following second condition, third condition, fourth condition, first information, and second information are not described. For example, in the present invention, the first information and the second information may be same information or different information.

Optionally, in at least one of the following cases, a network side device configures, a protocol specifies, or the terminal determines that the target resource meets the first condition:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and
at least one of an RS, a downlink control channel, and a downlink control signal possibly has a resource conflict with the another resource.

In this implementation, through configuration of the network side device, specification of the protocol, or determining of the terminal, it can be ensured that the target resource meets the first condition. For example, the network side device configures, the protocol specifies, or the terminal determines that when an NR PDCCH resource/NR PDCCH DMRS resource is determined, it is ensured that the target resource meets the first condition. For example, if the NR PDCCH or the NR PDCCH DMRS is punctured or shifted, or the NR PDCCH or the NR PDCCH DMRS and a CRS resource may overlap/conflict, it is ensured that the target resource meets the first condition.

Optionally, the preset condition includes a second condition, and the second condition includes at least one of the following:

the target resource is a cell specific (cell specific) resource, or the target resource is a common (common) resource, or the target resource is a resource for broadcast transmission;
the target resource is used for cell specific PDCCH transmission, or the target resource is used for common PDCCH transmission, or the target resource is used for broadcast PDCCH transmission;
the target resource is used for cell specific DCI transmission, or the target resource is used for common DCI transmission, or the target resource is used for broadcast DCI transmission;
the target resource is used for cell specific CCE transmission, or the target resource is used for common CCE transmission, or the target resource is used for CCE for broadcast transmission;
an aggregation level corresponding to the target resource is less than or equal to a seventeenth threshold;
a bundle size corresponding to the target resource is less than or equal to an eighteenth threshold;
a resource quantity of the target resource is equal to or exceeds a nineteenth threshold;
a resource proportion corresponding to the target resource is equal to or exceeds a twentieth threshold;
a resource quantity of at least a part of a non-target resource is equal to or less than a twenty-first threshold;
a resource proportion of at least a part of a non-target resource is equal to or less than a twenty-second threshold;
a code rate corresponding to the target resource is equal to or exceeds a twenty-third threshold;
a DCI size corresponding to the target resource is equal to or exceeds a twenty-fourth threshold;

the target resource is within a non-MBSFN resource;

a value of a precoding granularity control parameter is set to a precoding granularity or all contiguous RBs;

there is overlapping on at least a part or all of the target resource;

there is the overlapping resource;

it is assumed that at least a part of the target resource needs to be or is shifted;

it is assumed that at least a part of the target resource needs to be or is punctured;

a quantity of resources that need to be or are shifted is equal to or exceeds a twenty-fifth threshold;

a quantity of resources that need to be or are punctured is equal to or exceeds a twenty-sixth threshold;

a proportion of resources that need to be or are shifted is equal to or exceeds a twenty-seventh threshold;

a proportion of resources that need to be or are punctured is equal to or exceeds a twenty-eighth threshold;

a quantity of resources that do not need to be or are not shifted is equal to or less than a twenty-ninth threshold;

a quantity of resources that do not need to be or are not punctured is equal to or less than a thirtieth threshold;

a proportion of resources that do not need to be or are not shifted is equal to or less than a thirty-first threshold; and

a proportion of resources that do not need to be or are not punctured is equal to or less than a thirty-second threshold.

It should be noted that, all the foregoing thresholds may be defined in a protocol or configured by a network side, and a specific value may be set based on an actual scenario requirement. This is not limited.

The second condition is applicable to at least one of the overlapping resource, the resource object associated with the overlapping resource, the another resource, the resource object associated with the another resource, the reference resource, and the resource object associated with the reference resource.

In addition, under the second condition, at least one of the first behavior, the third behavior, and the fourth behavior may be performed, or at least one of the second behavior, the third behavior, and the fourth behavior may be performed.

In a preferred manner, the second behavior, the third behavior, and/or the fourth behavior are/is performed under the second condition.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

It should be noted that, all the foregoing thresholds may be defined in a protocol or configured by a network side, and a specific value may be set based on an actual scenario requirement. This is not limited.

Under the third condition, at least one of the first behavior, the third behavior, and the fourth behavior may be performed, or at least one of the second behavior, the third behavior, and the fourth behavior may be performed.

In a preferred manner, the first behavior, the third behavior, and the fourth behavior are performed under the third condition.

Optionally, in at least one of the following cases, a network side device configures, a protocol specifies, or the terminal determines that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource (for example, a CRS); and

at least one of an RS, a downlink control channel, and a downlink control signal possibly has a resource conflict with the another resource.

In this implementation, through configuration of the network side device, specification of the protocol, or determining of the terminal, it can be ensured that the target resource meets the third condition. For example, the network side device configures, the protocol specifies, or the terminal determines that when an NR PDCCH resource/NR PDCCH DMRS resource is determined, it is ensured that the target resource meets the third condition. For example, if the NR PDCCH or the NR PDCCH DMRS is punctured or shifted, or the NR PDCCH or the NR PDCCH DMRS and a CRS resource may overlap/conflict, it is ensured that the target resource meets the third condition.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

It should be noted that, all the foregoing thresholds may be defined in a protocol or configured by a network side, and a specific value may be set based on an actual scenario requirement. This is not limited.

Under the fourth condition, at least one of the first behavior, the third behavior, the fourth behavior, and the fifth behavior may be performed, or at least one of the second behavior, the third behavior, the fourth behavior, and the sixth behavior may be performed.

In a preferred manner, at least one of the second behavior, the third behavior, the fourth behavior, and the fifth behavior is performed under the fourth condition.

It should be noted that, in some implementations, the preset condition does not need to be configured, and at least one of the first behavior, the second behavior, the third behavior, the fourth behavior, and the sixth behavior may be performed by default.

Optionally, in a case that the target resource includes at least one of the overlapping resource and the resource object associated with the overlapping resource, the terminal performs, for the target resource based on first information, the first behavior related to at least one of monitoring and reception, where the first information indicates or includes at least one of the following:

> a first preset aggregation level;
> a first preset bundle size;
> a first preset aggregation level offset;
> a first preset bundle size offset;
> a first preset code rate;
> a first preset DCI size;
> a first preset quantity of detection times;
> a first preset quantity of reception times;
> a first preset maximum aggregation level;
> a first preset minimum aggregation level;
> a first preset maximum bundle size;
> a first preset minimum bundle size;
> a first preset aggregation level maximum offset;
> a first preset aggregation level minimum offset;
> a first preset bundle size maximum offset;
> a first preset bundle size minimum offset;
> a first preset maximum code rate;
> a first preset minimum code rate;
> a first preset maximum DCI size;
> a first preset minimum DCI size;
> a first preset maximum quantity of detection times;
> a first preset maximum quantity of reception times;
> a first preset minimum quantity of detection times;
> a first preset minimum quantity of reception times;
> the target resource is a cell specific resource, or the target resource is a common resource, or the target resource is a resource for broadcast transmission;
> the target resource is used for cell specific PDCCH transmission, or the target resource is used for common PDCCH transmission, or the target resource is used for broadcast PDCCH transmission;
> the target resource is used for cell specific DCI transmission, or the target resource is used for common DCI transmission, or the target resource is used for broadcast DCI transmission;
> the target resource is used for cell specific CCE transmission, or the target resource is used for common CCE transmission, or the target resource is used for CCE for broadcast transmission;
> a resource quantity of the target resource is equal to or less than a sixty-fifth threshold;
> a resource proportion corresponding to the target resource is equal to or less than a sixty-sixth threshold;
> a resource quantity of at least a part of a non-target resource is equal to or greater than a sixty-seventh threshold;
> a resource proportion of at least a part of a non-target resource is equal to or greater than a sixty-eighth threshold;
> a code rate corresponding to the target resource is equal to or less than a sixty-ninth threshold;
> a DCI size corresponding to the target resource is equal to or less than a seventieth threshold;
> the target resource is within an MBSFN resource;
> a value of a precoding granularity control parameter is set to a precoding granularity or all contiguous RBs;
> there is no overlapping on at least a part of the target resource;
> a first number of a downlink control signal repetition transmission;
> a first maximum number of a downlink control signal repetition transmission;

a first minimum number of a downlink control signal repetition transmission;
a first number of a downlink control channel repetition transmission;
a first maximum number of a downlink control channel repetition transmission;
a first minimum number of a downlink control channel repetition transmission;
a first number of an RS repetition transmission;
a first maximum number of an RS repetition transmission; and
a first minimum number of an RS repetition transmission.

In this implementation, for the target resource that meets the first information, the first behavior related to at least one of monitoring and reception may be performed for the target resource based on the first information. In addition, at least one of the third behavior, the fourth behavior, and the fifth behavior may be further performed for the target resource based on the first information.

In some implementations, in a case that the first condition or the second condition is met, the first behavior related to at least one of monitoring and reception is performed for the target resource based on the first information. For example, for an overlapping symbol, the terminal starts monitoring according to an assumption that is at least AL=2, that is, does not perform monitoring for AL=1, where AL represents an aggregation level (aggregation level).

In some implementations, for a target resource that does not meet the first information, the first behavior related to at least one of monitoring and reception is not performed for the target resource, or the second behavior related to at least one of non-monitoring and non-reception is performed for the target resource. For example, the target resource that does not meet the first information is not detected.

Optionally, in at least one of the following cases, the network side device configures, the protocol specifies, or the terminal determines that the target resource matches the first information:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource (for example, a CRS); and
at least one of an RS, a downlink control channel, and a downlink control signal possibly has a resource conflict with the another resource.

In this implementation, through configuration of the network side device, specification of the protocol, or determining of the terminal, it can be ensured that the target resource meets the first information.

Optionally, the first information is determined based on at least one of the following:

other resource information;
CORESET information;
search space information; and
resource information of overlapping between the another resource and at least one of an RS, a downlink control channel, and a downlink control signal.

The other resource information is related information for indicating the another resource.

Optionally, the CORESET information includes at least one of the following:

a quantity of resources occupied by a CORESET, a CORESET quantity, a CORESET type (for example, common or dedicated, broadcast or unicast, cell specific or user specific), and a CORESET number;
and/or
the search space information includes at least one of the following:

a quantity of resources of a search space;
a length of a monitoring occasion of the search space;
a quantity of monitoring occasions of the search space;
a location of the monitoring occasion of the search space (for example, a start location and an end location);
a length of a span of the search space;
a quantity of spans of the search space;
a location of the span of the search space (for example, a start location and an end location);
a search space period;

a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

In this implementation, the first information may be determined based on the CRS information, the CORESET information, the search space information, and the resource information of overlapping between a CRS and at least one of an RS and a PDCCH. For example, the first information is determined based on a correspondence between the information and the first information. The correspondence may be defined in a protocol or configured by a network side device.

For example, the first information is determined based on a CRS port quantity. Alternatively, how to perform monitoring is determined based on one or a combination of a CORESET symbol quantity, an MO location, and the like. If the CRS port quantity is 1, monitoring is performed according to an assumption that is at least AL=1. If the port quantity is 2 or 4, monitoring is performed according to at least AL=2. Alternatively, if a quantity of overlapping symbols between CRS symbols and the CORESET is 1, a minimum is AL=1. If a quantity of overlapping symbols is 2, a minimum is AL=2, and the like.

Optionally, in a case that the target resource includes at least one of the available resource and the resource object associated with the available resource, the terminal performs, for the target resource based on second information, the first behavior related to at least one of monitoring and reception, where the second information indicates or includes at least one of the following:

a second preset aggregation level;
a second preset bundle size;
a second preset aggregation level offset;
a second preset bundle size offset;
a second preset code rate;
a second preset DCI payload;
a second preset quantity of detection times;
a second preset quantity of reception times;
a second preset maximum aggregation level;
a second preset minimum aggregation level;
a second preset maximum bundle size;
a second preset minimum bundle size;
a second preset aggregation level maximum offset;
a second preset aggregation level minimum offset;
a second preset bundle size maximum offset;
a second preset bundle size minimum offset;
a second preset maximum code rate;
a second preset minimum code rate;
a second preset maximum DCI size;
a second preset minimum DCI size;
a second preset maximum quantity of detection times;
a second preset maximum quantity of reception times;
a second preset minimum quantity of detection times;
a second preset minimum quantity of reception times;
the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

In this implementation, for the target resource that meets the second information, the first behavior related to at least one of monitoring and reception may be performed for the target resource based on the second information. In addition, at least one of the third behavior and the fourth behavior may be further performed for the target resource based on the second information. For example, corresponding monitoring quantities originally configured for the terminal during AL=1/2/4/8 are respectively 2/2/4/4. However, when overlapping occurs or there are a large quantity of overlapping parts, monitoring is performed by using a first preset specific aggregation level 2/4/8/16. Therefore, ALs corresponding to the monitoring quantities 2/2/4/4 become 2/4/8/16. For another example, the first preset aggregation level offset is performed on some or all ALs, and corresponding monitoring quantities originally configured for the terminal during AL=1/2/4/8 are respectively 2/2/4/4. However, when overlapping occurs or there are a large quantity of overlapping parts, n1=+1 (it is assumed that a positive sign indicates offset to a larger AL), the ALs are shifted by one level to 2/4/8/16. Therefore, ALs corresponding to the monitoring quantities 2/2/4/4 become 2/4/8/16. n1 may be a positive number, a negative number, and 0.

For example, corresponding monitoring quantities originally configured for the UE during AL=1/2/4/8 are respectively 2/2/4/4. However, when overlapping does not occur or there are a large quantity of available parts, monitoring is performed by using a second preset specific aggregation level 2/4/8/16. Therefore, ALs corresponding to the monitoring quantities 2/2/4/4 become 2/4/8/16.

For another example, the second preset aggregation level offset is performed on some or all ALs. For example, corresponding monitoring quantities originally configured for the UE during AL=1/2/4/8 are respectively 2/2/4/4. However, when overlapping does not occur or there are a large quantity of available parts, n2=+1 (it is assumed that a positive sign indicates offset to a larger AL), the ALs are shifted by one level to 2/4/8/16. Therefore, ALs corresponding to the monitoring quantities 2/2/4/4 become 2/4/8/16. n2 may be a positive number, a negative number, and 0.

In some implementations, in a case that the third condition or the fourth condition is met, the first behavior related to at least one of monitoring and reception is performed for the target resource based on the second information. Alternatively, if the third condition or the fourth condition is not met, the first behavior related to at least one of monitoring and reception is not performed for the target resource based on the second information.

In some implementations, for a target resource that does not meet the second information, the first behavior related to at least one of monitoring and reception is not performed for the target resource, or the second behavior related to at least one of non-monitoring and non-reception is performed for the target resource. For example, the target resource that does not meet the second information is not detected.

Optionally, in at least one of the following cases, the network side device configures, the protocol specifies, or the terminal determines that the target resource matches the second information:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and
at least one of an RS, a downlink control channel, and a downlink control signal possibly has a resource conflict with the another resource.

In this implementation, through configuration of the network side device, specification of the protocol, or determining of the terminal, it can be ensured that the target resource meets the second information.

Optionally, the second information is determined based on at least one of the following:

other resource information (for example, resource information such as a port quantity);
control resource set CORESET information;
search space information; and
resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type (for example, common or dedicated, broadcast or unicast, cell specific or user specific), and a CORESET number;
and/or
the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

In this implementation, the first information may be determined based on the CRS information, the CORESET information, the search space information, and the resource information of overlapping between a CRS and at least one of an RS and a PDCCH. For example, the first information is determined based on a correspondence between the information and the first information. The correspondence may be defined in a protocol or configured by a network side device.

In an optional implementation, the terminal determines, based on third information, that the target behavior for the target resource is at least one of the first behavior, the second behavior, the third behavior, the fourth behavior, the fifth behavior, and the sixth behavior, where the third information includes at least one of the following:

a quantity of cell reference signal CRS ports;
control resource set CORESET information;
search space information; and
resource information of overlapping between the another resource and at least one of an RS, a downlink control channel, and a downlink control signal.

In this implementation, a specific behavior for the target resource may be determined based on at least one of the foregoing. For example, whether to perform the first behavior or the second behavior is determined based on a CORESET quantity.

Optionally, the CORESET information includes at least one of the following:

a quantity of resources occupied by a CORESET, a CORESET quantity, a CORESET type (for example, common or dedicated, broadcast or unicast, cell specific or user specific), and a CORESET number;
and/or
the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.

In this implementation, at least one of the foregoing parameters may be compared with a corresponding threshold, or whether at least one of the foregoing parameters is equal to a specific value is determined, to determine that the terminal performs at least one of the first behavior, the second behavior, the third behavior, and the fourth behavior.

More specifically, at least one of the first behavior, the second behavior, the third behavior, and the fourth behavior is performed on the overlapping resource; and/or at least one of the first behavior, the second behavior, the third behavior, and the fourth behavior is performed on the available resource.

For example, when CRS port quantity=4, the terminal does not perform at least one of monitoring and reception on the available resource, or does not monitor and/or receive at least one of an NR PDCCH and a PDCCH DMRS on the available resource, or assumes that the available resource is not used for at least one of an NR PDCCH and a PDCCH DMRS.

In an optional implementation, in a case that the terminal determines a plurality of target resources, the terminal separately determines target behaviors for at least two of the plurality of target resources based on the granularity of the target resource; and/or

in a case that the terminal determines that the target resource includes a plurality of sub-resources, the terminal separately determines target behaviors for at least two of the plurality of sub-resources based on the granularity of the sub-resource.

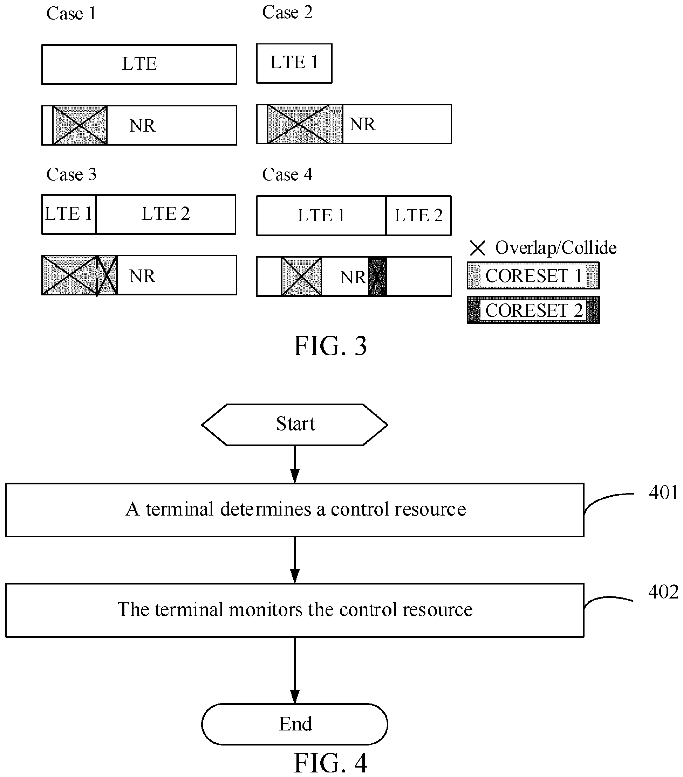

The plurality of target resources may be a plurality of consecutive or inconsecutive target resources. For example, the target resource is an overlapping resource. As shown in FIG. 3, in a case 3, a CORESET 1 separately overlaps an LTE carrier 1 and an LTE carrier 2, that is, there are two overlapping resource parts. In a case 4, a CORESET 1 and a CORESET 2 include overlapping resources, that is, there are two overlapping resource parts. In this case, a downlink resource determining operation is separately performed for the two target resources. It should be noted that, behaviors performed for the two target resources may be the same or different, and may be specifically determined based on the foregoing provided condition.

The plurality of sub-resources may be a plurality of sub-resources obtained by dividing the target resource, or the target resource includes the plurality of sub-resources. Similarly, behaviors performed for the two sub-resources may be the same or different, and may be specifically determined based on the foregoing provided condition.

For example, for the case 3 and the case 4 shown in FIG. 3, there are two different overlapping parts, and/or there are one or more available resources. In this way, the first behavior is separately performed for at least two target overlapping resources in a plurality of overlapping resources, and/or the first behavior is separately performed for at least two available resources in a plurality of available resources.

For another example, a DMRS is a wideband reference signal (Wideband RS) (a value of precoderGranularity is allContiguousRBs). In addition, an AL of a PDCCH candidate associated with an overlapping part is relatively large, for example, is 8, there is collision/overlapping on only some RBs in the PDCCH candidate, and there is no collision/overlapping on some other RBs (for example, a case 2 shown in FIG. 3). In this case, monitoring/reception may be performed in the part without collision/overlapping, and monitoring/reception may continue to be performed in the part with collision/overlapping, for example, monitoring is performed by using an RS in the part without collision/overlapping.

For another example, a DMRS is a narrowband reference signal (narrowband RS) (a value of precoderGranularity is set to precoderGranularity). In addition, an AL of a PDCCH candidate associated with an overlapping part is relatively small, for example, is 2, and there is collision/overlapping on all RBs in the PDCCH candidate. In this case, monitoring/reception is not performed in the part with collision/overlapping.

In an optional implementation, the method further includes:

obtaining a configuration of at least one of monitoring and reception corresponding to the target resource.

For example, the configuration of the at least one of monitoring and reception corresponding to the target resource is obtained in at least one of the following cases:

at least one of an RS, a downlink control channel, and a downlink control signal needs to be or is punctured;
at least one of an RS, a downlink control channel, and a downlink control signal needs to be or is shifted; and
at least one of an RS, a downlink control channel, and a downlink control signal possibly has resource overlapping with a cell reference signal CRS.

In this implementation, the network side device may configure, the protocol may specify, or the terminal may determine that when an NR PDCCH resource/NR PDCCH DMRS resource is determined, at least one of a corresponding monitoring configuration and reception configuration is provided for the target resource. For example, if an NR PDCCH/NR PDCCH DMRS is punctured or shifted, or the NR PDCCH/NR PDCCH DMRS and a CRS resource may overlap/conflict, the at least one of the corresponding monitoring configuration and reception configuration is provided for the target resource. For example, the network side device provides a separate set of AL configurations for an overlapping part, and provides another set of AL configurations for a non-overlapping part, so that the terminal monitors the overlapping part and the non-overlapping part by using different configurations.

Optionally, the configuration of the at least one of monitoring and reception indicates at least one of the following:

a third preset aggregation level;
a third preset bundle size;
a third preset aggregation level offset;

a third preset bundle size offset;
a third preset code rate;
a third preset DCI size;
a third preset quantity of detection times;
a third preset quantity of reception times;
a third preset maximum aggregation level;
a third preset minimum aggregation level;
a third preset maximum bundle size;
a third preset minimum bundle size;
a third preset bundle size maximum offset;
a third preset bundle size minimum offset;
a third preset aggregation level maximum offset;
a third preset aggregation level minimum offset;
a third preset maximum code rate;
a third preset minimum code rate;
a third preset maximum DCI size;
a third preset minimum DCI size;
a third preset maximum quantity of detection times;
a third preset maximum quantity of reception times;
a third preset minimum quantity of detection times;
a third preset minimum quantity of reception times;
a resource quantity of the target resource;
a resource quantity upper limit of the target resource;
a resource quantity lower limit of the target resource;
a resource proportion of the target resource;
an overlapping resource upper limit of the target resource;
an overlapping resource lower limit of the target resource;
a resource quantity of the non-target resource;
a resource quantity upper limit of the non-target resource;
a resource quantity lower limit of the non-target resource;
a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;
a DCI size of the target resource;
a DCI size upper limit of the target resource;
a DCI size lower limit of the target resource; and
whether the target resource is within an MBSFN resource.

Through the foregoing configuration, monitoring and reception performance of the terminal can be improved.
In an optional implementation, the reference resource includes at least one of the following:

an available resource for an RS, an available resource for a downlink control signal, and an available resource for a downlink control channel;
and/or
the reference resource includes at least one of a reference frequency domain resource, a reference code domain resource, a reference space domain resource, and a reference time domain resource.

The reference frequency domain resource includes at least one of the following:

a preset RE;
a preset RB;
a PDCCH frequency domain resource;
a resource object associated with the PDCCH frequency domain resource;
a DMRS frequency domain resource of a PDCCH; and
a resource object associated with the DMRS frequency domain resource of the PDCCH.

The time domain resource includes at least one of the following:

a preset symbol;
a preset slot;
at least a part of symbols on which a PDCCH is located;
at least a part of symbols on which a cell reference signal CRS is located; and
at least a part of symbols on which a CORESET is located.

The preset RE, the preset RB, the preset symbol, and the preset slot may be defined in the protocol, or may be determined by the network side device or the terminal in advance. For example, the preset RE may include at least one of an RE#1, an RE#5, and an RE#9. The preset symbol may include at least one of a symbol 0, a symbol 1, a symbol 4, a symbol 7, a symbol 8, and a symbol 11, and/or at least one of a symbol 0, a symbol 1, a symbol 3, a symbol 6, a symbol 7, and a symbol 9.

The resource object associated with the PDCCH frequency domain resource may include at least one of the following:

a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the PDCCH frequency domain resource.

The resource object associated with the DMRS frequency domain resource of the PDCCH may include at least one of the following:

a symbol, a slot, an RE, an RB, a REG, a REG bundle, a CCE, a candidate PDCCH, a CORESET, a span (span), a PDCCH monitoring occasion, an SS, timer running time, a period, a duration, a bandwidth part, a carrier, an SCS, a cell, a bandwidth, a frequency band, and a frequency range associated with the DMRS frequency domain resource of the PDCCH.

In an optional implementation, the method further includes at least one of the following:

the terminal expects that at least one of an RS and a PDCCH does not overlap a CRS;
the terminal expects that at least one of an RS, a downlink control channel, and a downlink control signal does not overlap the another resource;
the terminal expects that there is not the target resource;
the terminal does not expect that at least one of an RS, a downlink control channel, and a downlink control signal overlaps the another resource; and
the terminal does not expect that there is the target resource.

The expectation of the terminal may be that the network side device expects or ensures that at least one of the RS and the PDCCH does not overlap the CRS, and there is not the target resource.

In this implementation, overlapping may be avoided through the foregoing expectation or non-expectation, and transmission performance of the terminal is improved.

Optionally, that the terminal expects that at least one of an RS, a downlink control channel, and a downlink control signal does not overlap the another resource includes:

the terminal expects that the at least one of the RS, the downlink control channel, and the downlink control signal does not overlap the another resource after being punctured/shifted;
and/or
that the terminal expects that there is not the target resource includes:
the terminal expects that there is not the target resource after being punctured/shifted;
and/or
that the terminal does not expect that at least one of an RS, a downlink control channel, and a downlink control signal overlaps the another resource includes:

the terminal does not expect that the at least one of the RS, the downlink control channel, and the downlink control signal overlaps the another resource after being punctured/shifted; and/or
that the terminal does not expect that there is the target resource includes:
the terminal does not expect that there is the target resource after being punctured/shifted.

For example, the network side device ensures and the terminal expects that a PDCCH DMRS and a CRS determined after shifting do not overlap/collide.

The terminal does not expect that a PDCCH DMRS and a CRS determined after shifting overlap/collide.

In embodiments of this application, a terminal determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of the terminal for the target resource includes at least one of the following: a first behavior related to at least one of reception and monitoring; a second behavior related to at least one of non-reception and non-monitoring; a third behavior related to repetition transmission; a fourth behavior related to a subsequent resource of the target resource; a fifth behavior related to resource allocation or resource mapping; and a sixth behavior related to resource non-allocation or resource non-mapping. In this way, the terminal can determine a specific behavior for the target resource, so that transmission performance of the terminal is improved.

Refer to FIG. 4. FIG. 4 is a flowchart of a resource monitoring method according to an embodiment of this application. As shown in FIG. 4, the following steps are included.

Step 401: A terminal determines a control resource, where the control resource includes at least one of the following: a first control resource for self-scheduling on a first cell and a second control resource for scheduling on the first cell from a second cell.

Step 402: The terminal monitors the control resource.

The first control resource is determined based on first carrier information for self-scheduling on the first cell, and the first carrier information includes at least one of the following:

first carrier indication information and a first CIF.

The first carrier information is the same as or different from second carrier information for scheduling on the first cell from the second cell.

The control resource may include at least one of the following:

a PDCCH candidate, a CCE, a DCI resource, a search space, a monitoring occasion, and a span.

The second control resource for scheduling on the first cell from the second cell may be a control resource for scheduling on a primary cell (primary cell, Pcell) from a secondary cell (secondary cell, Scell).

The first cell may be scheduled from at least two cells, the at least two cells include the second cell and/or the first cell, and the second cell is different from the first cell.

Optionally, the first cell is a Pcell or a primary secondary cell (primary secondary cell PScell), and the second cell is an Scell.

The first carrier indication information may be $n_{CI}$ in a formula for calculating a CCE index of a candidate control channel that is defined in a protocol. For a search space set s associated with a control resource set p, in a slot $n_{s,f}^{\mu}$, a CCE index of a candidate control channel $m_{s,n_{CI}}$ whose aggregation level is L is provided by the following formula:

$$L \cdot \left\{ \left( Y_{p,n_{s,f}^{\mu}} + \left\lfloor \frac{m_{s,n_{CI}} \cdot N_{CCE,p}}{L \cdot M_{s,\max}^{(L)}} \right\rfloor + n_{CI} \right) mod \left\lfloor N_{CCE,p}/L \right\rfloor \right\} + i$$

For a common search space, $Y_{p,n_{s,f}^{\mu}} = 0$.

For a UE specific search space, $Y_{p,n_{s,f}^{\mu}} = \left( A_p \cdot Y_{p,n_{s,f}^{\mu}-1} \right) mod D$ and $Y_{p,-1} = n_{RNTI} \neq 0$.

For $p \ mod \ 3 = 0$, $A_p = 39827$. For $p \ mod \ 3 = 1$; and for $p \ mod \ 3 = 2$, $A_p = 39839$. $D = 65537$.

If a carrier indicator field of a cell is configured through CrossCarrierSchedulingConfig, $n_{CI}$ is the carrier indicator field. Otherwise, for a CSS or another case, $n_{CI} = 0$.

$$m_{s,n_{CI}} = 0, \ldots, M_{s,n_{CI}}^{(L)} - 1$$

$M_{s,n_{CI}}^{(L)}$ is a quantity of candidate control channels that need to be monitored by a user and whose aggregation levels are L in a search space set s of the cell corresponding to $n_{CI}$.

In this embodiment, a function of scheduling the Pcell from the Scell is configured or enabled.

That the first carrier information is the same as or different from the second carrier information for scheduling on the first cell from the second cell may be that carrier indicator fields (carrier indicator field, CIF) are the same or different. For example, a first carrier indicator corresponding to self-scheduling of the first cell is the same as a second carrier indicator corresponding to scheduling on the first cell from the second cell. For example, if scheduling on the Pcell from the Scell is a CIF, the CIF is also 4 during self-scheduling of the Pcell.

That the terminal monitors the control resource may be that the terminal monitors a PDCCH on the control resource.

In this embodiment, the foregoing step may be used to monitor at least one of the first control resource for scheduling of the first cell and the second control resource for scheduling on the first cell from the second cell, to improve transmission performance of the terminal.

In an optional implementation, the second carrier information includes at least one of the following: second carrier indication information and a second CIF.

The first carrier indication information and the second carrier indication information may be the same, or may be obtained based on a same carrier identifier, or may be different, or may be obtained based on different carrier identifiers. At least one of the first carrier indication information and the second carrier indication information may be configured by a higher layer, for example, carried in a scheduling cell CIF (cif-InSchedulingCell) in a cross-carrier scheduling configuration (CrossCarrierSchedulingConfig), or may be carried in a physical signal, for example, a CIF in DCI.

In this implementation, first control information is determined based on the first carrier indication information, and a correspondence between the first carrier indication information and the first control information may be defined in a protocol or configured by a network side device.

Second control information is determined based on the second carrier indication information, and a correspondence between the second carrier indication information and the second control information may be defined in a protocol or configured by a network side device. The second carrier indication information is a value of cif-InSchedulingCell in CrossCarrierSchedulingConfig.

Optionally, the first carrier information is determined based on a carrier indicator field in a target configuration, or the first carrier information is a preset value, where the target configuration includes at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

The target configuration may be: a configuration for configuring or enabling scheduling on the first cell from the second cell; a configuration for configuring or indicating the second cell for scheduling the first cell; a configuration for configuring or indicating cross-carrier scheduling information; or a configuration for configuring/indicating self-scheduling and/or scheduled information of the first cell. For example, the target configuration may be CrossCarrierSchedulingConfig, and the carrier indicator field in the target configuration is cif-InSchedulingCell.

In addition, the target configuration may be a target configuration of the first cell, or a first cell configuration includes the target configuration. For example, if a target configuration CrossCarrierSchedulingConfig configured for the Pcell includes cif-InSchedulingCell corresponding to scheduling on the Pcell from the Scell, and cif-InSchedulingCell is 4, first carrier indication information corresponding to a PDCCH candidate/CCE for self-scheduling on the Pcell is equal to 4, and/or a CIF in DCI for self-scheduling on the Pcell is equal to 4.

The first carrier indication information is determined based on a carrier indicator field corresponding to scheduling on the first cell from the second cell. For example, the first carrier indication information is determined based on a carrier indicator field corresponding to a control resource (for example, a DCI resource) for scheduling on the first cell from the second cell. For example, the first carrier indication information is a CIF in DCI for scheduling on the first cell from the second cell. For example, the first carrier indication information is a carrier indicator field corresponding to scheduling on the first cell from the second cell, or is a value indicated by the carrier indicator field. For example, if the CIF in the DCI for scheduling on the Pcell from the Scell is 4, the first carrier indication information (for example, $n_{CI}$) is equal to 4. In this case, the PDCCH candidate/CCE for self-scheduling on the Pcell is determined based on =4. For another example, if the CIF in the DCI for scheduling on the Pcell from the Scell is 4, the first carrier indicator field is equal to 4. In this case, the CIF in the DCI for self-scheduling on the Pcell is equal to 4.

In some implementations, the terminal determines the first carrier indication information, but the first carrier identifier may not exist.

In some implementations, the first carrier indication information or the first carrier identifier may be a preset value, for example, 0.

Optionally, the configuration of the second cell includes a cross-carrier configuration;
and/or

the cross-carrier configuration indicates that there is a carrier indicator field in downlink control information DCI of the second cell;
and/or
there is a carrier indicator field in DCI for self-scheduling on the second cell;
and/or
there is a carrier indicator field in DCI for scheduling another cell other than the first cell from the second cell.

In this implementation, the second cell configuration may include a cross-carrier configuration CrossCarrierSchedulingConfig, and/or the cross-carrier configuration configures that there is a carrier indicator field in DCI of the second cell (for example, CIF-presence is set to true), and/or there is a CIF in DCI for self-scheduling on the second cell, and/or there is a CIF in DCI for scheduling another cell other than the first cell from the second cell.

In an embodiment, for the search space set s associated with the CORESET p, a CCE index of an aggregation level L corresponding to a PDCCH candidate $m_{s,n_{CI}}$ may be determined based on $n_{CI}$:

$$L \cdot \left\{ \left( Y_{p,n_{s,f}^{\mu}} + \left\lfloor \frac{m_{s,n_{CI}} \cdot N_{\mathrm{CCE},p}}{L \cdot M_{s,\max}^{(L)}} \right\rfloor + n_{CI} \right) mod \left\lfloor N_{\mathrm{CCE},p}/L \right\rfloor \right\} + i$$

$n_{CI}$ may be determined in at least one of the following manners.

Manner 1: When the UE is configured with scheduling on the Pcell from the Scell, or when the UE is configured with scheduling on the Pcell from the Scell and self-scheduling on the Pcell, if a serving cell of the UE is configured with CrossCarrierSchedulingConfig and a carrier indicator field, the corresponding $n_{CI}$ is a value of the carrier indicator field. In an embodiment, the serving cell is the Pcell or the Scell.

For example, this may be represented as follows: when UE is configured for scheduling on the primary cell from the primary cell and from a secondary cell and the serving cell is primary cell and if the serving cell is the primary cell, $n_{CI}$ is the carrier indicator field value if the UE is configured with a carrier indicator field by CrossCarrierSchedulingConfig for the serving cell.

Manner 2: When the UE is not configured with scheduling on the Pcell from the Scell, or not configured with scheduling on the Pcell from the Scell and self-scheduling on the Pcell, if a serving cell of the UE is configured with CrossCarrierSchedulingConfig and a carrier indicator field, the corresponding $n_{CI}$ is a value of the carrier indicator field. Otherwise, $n_{CI} = 0$.

In this example:

For example, it is assumed that the first cell is the Pcell, the second cell is the Scell, and a carrier indicator field (CIF, carrier indicator field, or cif-InSchedulingCell) corresponding to scheduling on the Pcell from the Scell is 4. In this case, according to the description in the manner 1, during self-scheduling on the Pcell, the first carrier indication information $n_{CI}$ is a value of the carrier indicator field configured in CrossCarrierSchedulingConfig of the Pcell, that is, 4.

Embodiment 2

For the search space set s associated with the CORESET p, a CCE index of an aggregation level L corresponding to a PDCCH candidate $m_{s,n_{CI}}$ may be determined based on $n_{CI}$:

$$L \cdot \left\{ \left( Y_{p,n_{s,f}^{\mu}} + \left\lfloor \frac{m_{s,n_{CI}} \cdot N_{\mathrm{CCE},p}}{L \cdot M_{s,\max}^{(L)}} \right\rfloor + n_{CI} \right) mod \left\lfloor N_{\mathrm{CCE},p}/L \right\rfloor \right\} + i$$

$n_{CI}$ may be determined in at least one of the following manners.

Manner 1: When the UE is configured with scheduling on the Pcell from the Scell, or when the UE is configured with scheduling on the Pcell from the Scell and self-scheduling on the Pcell, for self-scheduling on the Pcell, $n_{CI}$ is 0; and/or for scheduling on the Pcell from the Scell, if the Scell is configured with CrossCarrierSchedulingConfig and a carrier indicator field, the corresponding $n_{CI}$ is a value of the carrier indicator field.

For example, this may be represented as follows: when UE is configured for scheduling on the primary cell from the primary cell and from a secondary cell and the serving cell is primary cell, $n_{CI}$ is 0 for the scheduling on the primary cell from the primary cell, for the scheduling on the primary cell from the secondary cell, $n_{CI}$ is the carrier indicator field value if the UE is configured with a carrier indicator field by CrossCarrierSchedulingConfig for the serving cell.

Manner 2: When the UE is not configured with scheduling on the Pcell from the Scell, or not configured with scheduling on the Pcell from the Scell and self-scheduling on the Pcell, if a serving cell of the UE is configured with CrossCarrierSchedulingConfig and a carrier indicator field, the corresponding $n_{CI}$ is a value of the carrier indicator field. Otherwise, $n_{CI} = 0$.

In this example:

It is assumed that the first cell is the Pcell, the second cell is the Scell, and a carrier indicator field (CIF, carrier indicator field, or cif-InSchedulingCell) corresponding to scheduling on the Pcell from the Scell is 4. In this case, according to the description in the manner 1, during self-scheduling on the Pcell, the first carrier indication information $n_{CI}$ is 0.

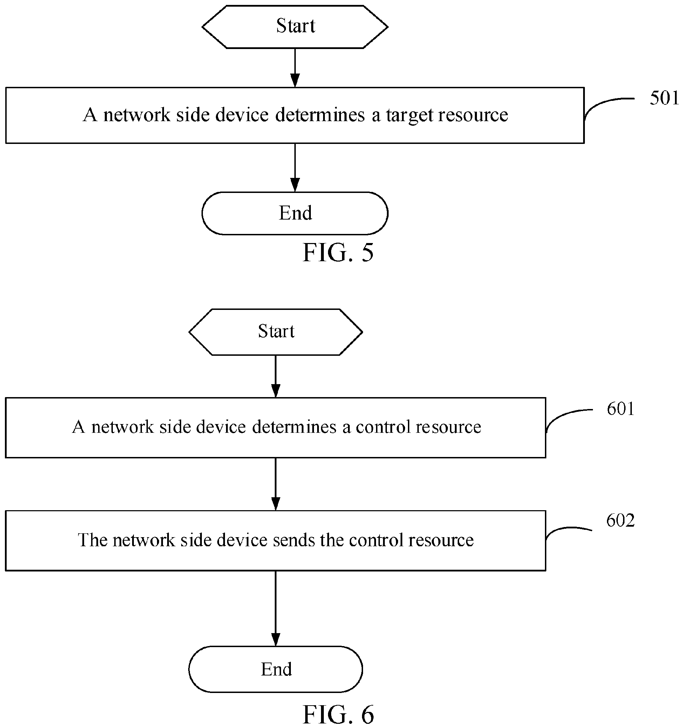

Refer to FIG. 5. FIG. 5 is a flowchart of another resource determining method according to an embodiment of this application. As shown in FIG. 5, the following steps are included.

Step 501: A network side device determines a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where

a target behavior of the network side device for the target resource includes at least one of the following:

a first behavior related to sending;
a second behavior related to non-sending;
a third behavior related to repetition transmission;
a fourth behavior related to a subsequent resource of the target resource;
a fifth behavior related to resource allocation or resource mapping; and
a sixth behavior related to resource non-allocation or resource non-mapping.

Optionally, the available resource includes at least one of the following:

at least a part of a resource that can be used as a target downlink resource; and
at least a part of a resource actually used as a target downlink resource;
and/or
the resource object associated with the available resource includes at least one of the following:
a resource object associated with at least a part of a resource that can be used as a target downlink resource; and
a resource object associated with at least a part of a resource actually used as a target downlink resource, where the target downlink resource includes at least one of the following: a reference signal RS resource and a physical downlink control resource.

Optionally, the at least a part of a resource that can be used as a target downlink resource includes:

at least a part of a resource that can be used as a target downlink resource after being shifted or punctured;
and/or
the at least a part of a resource actually used as a target downlink resource includes:
at least a part of a resource actually used as a target downlink resource after being shifted or punctured;
and/or
the resource object associated with at least a part of a resource that can be used as a target downlink resource includes:
a resource object associated with at least a part of a resource that can be used as a target downlink resource after being shifted or punctured;
and/or
the resource object associated with at least a part of a resource that can be actually used as a target downlink resource includes:
a resource object associated with at least a part of a resource that can be actually used as a target downlink resource after being shifted or punctured.

Optionally, the overlapping resource includes at least one of the following:

at least a part of where at least one of the available resource and the reference resource overlaps the another resource;
and/or

the resource object associated with the overlapping resource includes at least one of the following:
a resource object associated with at least a part of where at least one of the available resource and the reference resource overlaps the another resource.

Optionally, the at least a part of where at least one of the available resource and the reference resource overlaps the another resource includes:

at least a part of where at least one of the available resource and the reference resource obtained after being shifted or punctured overlaps the another resource;
and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

Optionally, the resource object includes at least one of the following:
a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.

Optionally, the first behavior related to at least one of reception and monitoring for the target resource includes at least one of the following:

monitoring the target resource;
receiving the target resource;
assuming that the target resource is used for transmission of at least one of a reference signal RS, a downlink control channel, and a downlink control signal; and
determining that the target resource is used for transmission of at least one of an RS, a downlink control channel, and a downlink control signal;
and/or
the second behavior related to at least one of non-reception and non-monitoring for the target resource includes at least one of the following:
refraining from monitoring the target resource;
refraining from receiving the target resource;
assuming that the target resource is not used for transmission of at least one of an RS, a downlink control channel, and a downlink control signal; and
determining that the target resource is not used for transmission of at least one of an RS, a downlink control channel, and a downlink control signal;
and/or
the third behavior related to repetition transmission for the target resource includes at least one of the following:
assuming that the target resource is configured for at least one of downlink control channel repetition transmission and downlink control signal repetition transmission;
assuming that the target resource is configured for RS repetition transmission;
assuming that at least one of a downlink control channel repetition transmission and a downlink control signal repetition transmission is performed on the target resource;
assuming that an RS repetition transmission is performed on the target resource;
determining that the target resource is configured for at least one of downlink control channel repetition transmission and downlink control signal repetition transmission;
determining that the target resource is configured for RS repetition transmission;
determining that at least one of a downlink control channel repetition transmission and a downlink control signal repetition transmission is performed on the target resource; and
determining that an RS repetition transmission is performed on the target resource;
and/or
the fourth behavior related to the subsequent resource of the target resource for the target resource includes at least one of the following:
monitoring the subsequent resource of the target resource; and
receiving the subsequent resource of the target resource; and/or
the fifth behavior related to resource allocation or resource mapping for the target resource includes at least one of the following:

mapping or allocating a resource corresponding to the target resource; and/or

the sixth behavior related to resource non-allocation or resource non-mapping for the target resource includes at least one of the following:

refraining from mapping or allocating a resource corresponding to the target resource.

Optionally, in a case that the target resource meets a preset condition, the network side device performs at least one of the following on the target resource:

the first behavior, the second behavior, the third behavior, the fourth behavior, the fifth behavior, and the sixth behavior.

Optionally, the preset condition includes a first condition, and the first condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

Optionally, in at least one of the following cases, the network side device configures or a protocol specifies that the target resource meets the first condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the preset condition includes a second condition, and the second condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a seventeenth threshold;

a bundle size corresponding to the target resource is less than or equal to an eighteenth threshold;

a resource quantity of the target resource is equal to or exceeds a nineteenth threshold;

a resource proportion corresponding to the target resource is equal to or exceeds a twentieth threshold;

a resource quantity of at least a part of a non-target resource is equal to or less than a twenty-first threshold;

a resource proportion of at least a part of a non-target resource is equal to or less than a twenty-second threshold;

a code rate corresponding to the target resource is equal to or exceeds a twenty-third threshold;

a DCI size corresponding to the target resource is equal to or exceeds a twenty-fourth threshold;

the target resource is within a non-MBSFN resource;

a value of a precoding granularity control parameter is set to a precoding granularity or all contiguous RBs;

there is overlapping on at least a part or all of the target resource;

there is the overlapping resource;

it is assumed that at least a part of the target resource needs to be or is shifted;

it is assumed that at least a part of the target resource needs to be or is punctured;

a quantity of resources that need to be or are shifted is equal to or exceeds a twenty-fifth threshold;

a quantity of resources that need to be or are punctured is equal to or exceeds a twenty-sixth threshold;

a proportion of resources that need to be or are shifted is equal to or exceeds a twenty-seventh threshold;

a proportion of resources that need to be or are punctured is equal to or exceeds a twenty-eighth threshold;

a quantity of resources that do not need to be or are not shifted is equal to or less than a twenty-ninth threshold;

a quantity of resources that do not need to be or are not punctured is equal to or less than a thirtieth threshold;

a proportion of resources that do not need to be or are not shifted is equal to or less than a thirty-first threshold; and

a proportion of resources that do not need to be or are not punctured is equal to or less than a thirty-second threshold.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

Optionally, in at least one of the following cases, the network side device configures or a protocol specifies that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

Optionally, in a case that the target resource includes at least one of the overlapping resource and the resource object associated with the overlapping resource, the network side device performs, for the target resource based on first information, the first behavior related to at least one of monitoring and reception, where the first information indicates or includes at least one of the following:

a first preset aggregation level;

a first preset bundle size;
a first preset aggregation level offset;
a first preset bundle size offset;
a first preset code rate;
a first preset DCI size;
a first preset quantity of detection times;
a first preset quantity of reception times;
a first preset maximum aggregation level;
a first preset minimum aggregation level;
a first preset maximum bundle size;
a first preset minimum bundle size;
a first preset aggregation level maximum offset;
a first preset aggregation level minimum offset;
a first preset bundle size maximum offset;
a first preset bundle size minimum offset;
a first preset maximum code rate;
a first preset minimum code rate;
a first preset maximum DCI size;
a first preset minimum DCI size;
a first preset maximum quantity of detection times;
a first preset maximum quantity of reception times;
a first preset minimum quantity of detection times;
a first preset minimum quantity of reception times;
the target resource is a cell specific resource, or the target resource is a common resource, or the target resource is a resource for broadcast transmission;
the target resource is used for cell specific PDCCH transmission, or the target resource is used for common PDCCH transmission, or the target resource is used for broadcast PDCCH transmission;
the target resource is used for cell specific DCI transmission, or the target resource is used for common DCI transmission, or the target resource is used for broadcast DCI transmission;
the target resource is used for cell specific CCE transmission, or the target resource is used for common CCE transmission, or the target resource is used for CCE for broadcast transmission;
a resource quantity of the target resource is equal to or less than a sixty-fifth threshold;
a resource proportion corresponding to the target resource is equal to or less than a sixty-sixth threshold;
a resource quantity of at least a part of a non-target resource is equal to or greater than a sixty-seventh threshold;
a resource proportion of at least a part of a non-target resource is equal to or greater than a sixty-eighth threshold;
a code rate corresponding to the target resource is equal to or less than a sixty-ninth threshold;
a DCI size corresponding to the target resource is equal to or less than a seventieth threshold;
the target resource is within an MBSFN resource;
a value of a precoding granularity control parameter is set to a precoding granularity or all contiguous RBs;
there is no overlapping on at least a part of the target resource;
a first number of a downlink control signal repetition transmission;
a first maximum number of a downlink control signal repetition transmission;
a first minimum number of a downlink control signal repetition transmission;
a first number of a downlink control channel repetition transmission;
a first maximum number of a downlink control channel repetition transmission;
a first minimum number of a downlink control channel repetition transmission;
a first number of an RS repetition transmission;
a first maximum number of an RS repetition transmission; and
a first minimum number of an RS repetition transmission.

Optionally, in at least one of the following cases, the network side device configures or the protocol specifies that the target resource matches the first information:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and

at least one of an RS, a downlink control channel, and a downlink control signal possibly has a resource conflict with the another resource.

Optionally, the first information is determined based on at least one of the following:

other resource information;
control resource set CORESET information;
search space information; and
resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, in a case that the target resource includes at least one of the available resource and the resource object associated with the available resource, the network side device performs, for the target resource based on second information, the first behavior related to at least one of monitoring and reception, where the second information indicates or includes at least one of the following:

a second preset aggregation level;
a second preset bundle size;
a second preset aggregation level offset;
a second preset bundle size offset;
a second preset code rate;
a second preset DCI payload;
a second preset quantity of detection times;
a second preset quantity of reception times;
a second preset maximum aggregation level;
a second preset minimum aggregation level;
a second preset maximum bundle size;

a second preset minimum bundle size;

a second preset aggregation level maximum offset;

a second preset aggregation level minimum offset;

a second preset bundle size maximum offset;

a second preset bundle size minimum offset;

a second preset maximum code rate;

a second preset minimum code rate;

a second preset maximum DCI size;

a second preset minimum DCI size;

a second preset maximum quantity of detection times;

a second preset maximum quantity of reception times;

a second preset minimum quantity of detection times;

a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

Optionally, in at least one of the following cases, the network side device configures or the protocol specifies that the target resource matches the second information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the second information is determined based on at least one of the following:

other resource information (for example, resource information such as a port quantity);
control resource set CORESET information;
search space information; and
resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:
a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, the terminal determines, based on reference information, that the target behavior for the target resource is at least one of the first behavior, the second behavior, the third behavior, the fourth behavior, the fifth behavior, and the sixth behavior, where the reference information includes at least one of the following:

a quantity of cell reference signal CRS ports;
control resource set CORESET information;
search space information; and
resource information of overlapping between the another resource and at least one of an RS, a downlink control channel, and a downlink control signal.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.
Optionally, the CORESET information includes at least one of the following:

a quantity of resources occupied by a CORESET, a CORESET quantity, a CORESET type, and a CORESET number; and/or
the search space information includes at least one of the following:

a quantity of resources of a search space;

a length of a monitoring occasion of the search space;

a quantity of monitoring occasions of the search space;

a location of the monitoring occasion of the search space;

a length of a span of the search space;

a quantity of spans of the search space;

a location of the span of the search space;

a search space period;

a search space quantity; and

a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, in a case of determining a plurality of target resources, the network side device separately determines target behaviors for at least two of the plurality of target resources based on the granularity of the target resource; and/or in a case of determining that the target resource includes a plurality of sub-resources, the network side device separately determines target behaviors for at least two of the plurality of sub-resources based on the granularity of the sub-resource.

Optionally, the method further includes:

sending a configuration of at least one of monitoring and reception corresponding to the target resource to a terminal.

Optionally, the configuration of the at least one of monitoring and reception indicates at least one of the following:

a third preset aggregation level;

a third preset bundle size;

a third preset aggregation level offset;

a third preset bundle size offset;

a third preset code rate;

a third preset DCI size;

a third preset quantity of detection times;

a third preset quantity of reception times;

a third preset maximum aggregation level;

a third preset minimum aggregation level;

a third preset maximum bundle size;

a third preset minimum bundle size;

a third preset aggregation level maximum offset;

a third preset aggregation level minimum offset;

a third preset bundle size maximum offset;

a third preset bundle size minimum offset;

a third preset maximum code rate;

a third preset minimum code rate;

a third preset maximum DCI payload;

a third preset minimum DCI payload;

a third preset maximum quantity of detection times;

a third preset maximum quantity of reception times;

a third preset minimum quantity of detection times;

a third preset minimum quantity of reception times;

a resource quantity of the target resource;

a resource quantity upper limit of the target resource;
a resource quantity lower limit of the target resource;
a resource proportion of the target resource;
an overlapping resource upper limit of the target resource;
an overlapping resource lower limit of the target resource;
a resource quantity of the non-target resource;
a resource quantity upper limit of the non-target resource;
a resource quantity lower limit of the non-target resource;
a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;
a DCI size of the target resource;
a DCI size upper limit of the target resource;
a DCI size lower limit of the target resource; and
whether the target resource is within an MBSFN resource.

Optionally, the method further includes at least one of the following:

the network side device expects that at least one of an RS, a downlink control channel, and a downlink control signal does not overlap the another resource;
the network side device expects that there is not the target resource;
the network side device does not expect that at least one of an RS, a downlink control channel, and a downlink control signal overlaps the another resource; and
the network side device does not expect that there is the target resource.

Optionally, that the network side device expects that at least one of an RS, a downlink control channel, and a downlink control signal does not overlap the another resource includes:

the network side device expects that the at least one of the RS, the downlink control channel, and the downlink control signal does not overlap the another resource after being punctured/shifted;
and/or
that the network side device expects that there is not the target resource includes:
the network side device expects that there is not the target resource after being punctured/shifted;
and/or
that the network side device does not expect that at least one of an RS, a downlink control channel, and a downlink control signal overlaps the another resource includes:
the network side device does not expect that the at least one of the RS, the downlink control channel, and the downlink control signal overlaps the another resource after being punctured/shifted; and/or
that the network side device does not expect that there is the target resource includes:
the network side device does not expect that there is the target resource after being punctured/shifted.

It should be noted that, this embodiment is an implementation of a corresponding network side device in the embodiment shown in FIG. 2. For a specific implementation of this embodiment, refer to related descriptions in the embodiment shown in FIG. 2. To avoid repeated descriptions, details are not described again in this embodiment.

Refer to FIG. 6. FIG. 6 is a flowchart of another resource monitoring method according to an embodiment of this application. As shown in FIG. 6, the following steps are included.

Step 601: A network side device determines a control resource, where the control resource includes at least one of the following: a first control resource for self-scheduling on a first cell and a second control resource for scheduling on the first cell from a second cell.

Step 602: The network side device sends the control resource.

The first control resource is determined based on first carrier information for self-scheduling on the first cell, and the first carrier information includes at least one of the following:
first carrier indication information and a first carrier indicator field CIF.

Optionally, the first carrier information is determined based on a carrier indicator field in a target configuration, or the first carrier information is a preset value, where the target configuration includes at least one of the following:

a configuration for configuring or enabling scheduling on the first cell from the second cell;

a configuration for configuring or indicating the second cell for scheduling the first cell;

a configuration for configuring or indicating cross-carrier scheduling information;

a configuration for configuring or indicating self-scheduling on the first cell; and

a configuration for configuring or indicating scheduled information of the first cell;

and/or

the first carrier indication information is determined based on a carrier indicator field corresponding to scheduling on the first cell from the second cell.

Optionally, the configuration of the second cell includes a cross-carrier configuration;

and/or

the cross-carrier configuration indicates that there is a carrier indicator field in downlink control information DCI of the second cell;

and/or

there is a carrier indicator field in DCI for self-scheduling on the second cell;

and/or

there is a carrier indicator field in DCI for scheduling another cell other than the first cell from the second cell.

It should be noted that, this embodiment is an implementation of a corresponding network side device in the embodiment shown in FIG. 4. For a specific implementation of this embodiment, refer to related descriptions in the embodiment shown in FIG. 4. To avoid repeated descriptions, details are not described again in this embodiment.

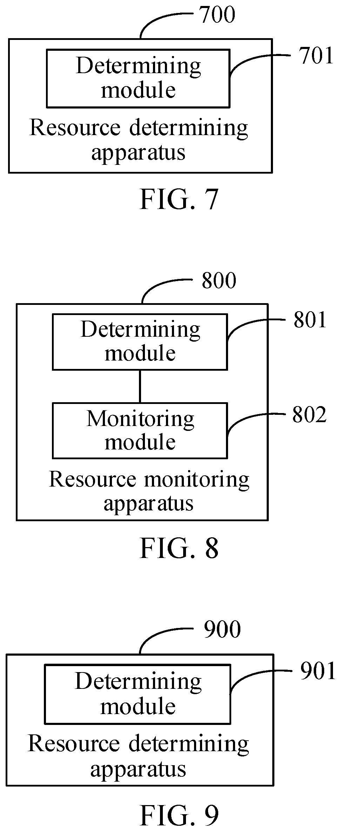

Refer to FIG. 7. FIG. 7 is a diagram of a structure of a resource determining apparatus according to an embodiment of this application. As shown in FIG. 7, the apparatus includes:

a determining module 701, used by a terminal to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is a resource for preset transmission, where

a target behavior of the terminal for the target resource includes at least one of the following:

a first behavior related to at least one of reception and monitoring;

a second behavior related to at least one of non-reception and non-monitoring;

a third behavior related to repetition transmission;

a fourth behavior related to a subsequent resource of the target resource;

a fifth behavior related to resource allocation or resource mapping; and

a sixth behavior related to resource non-allocation or resource non-mapping.

Optionally, the available resource includes at least one of the following:

at least a part of a resource that can be used as a target downlink resource; and

at least a part of a resource actually used as a target downlink resource;

and/or

the resource object associated with the available resource includes at least one of the following:

a resource object associated with at least a part of a resource that can be used as a target downlink resource; and

a resource object associated with at least a part of a resource actually used as a target downlink resource, where the target downlink resource includes at least one of the following: a reference signal RS resource and a physical downlink control resource.

Optionally, the at least a part of a resource that can be used as a target downlink resource includes:

at least a part of a resource that can be used as a target downlink resource after being shifted or punctured;

and/or

the at least a part of a resource actually used as a target downlink resource includes:

at least a part of a resource actually used as a target downlink resource after being shifted or punctured;

and/or

the resource object associated with at least a part of a resource that can be used as a target downlink resource includes:

a resource object associated with at least a part of a resource that can be used as a target downlink resource after being shifted or punctured;
and/or
the resource object associated with at least a part of a resource that can be actually used as a target downlink resource includes:
a resource object associated with at least a part of a resource that can be actually used as a target downlink resource after being shifted or punctured.

Optionally, the overlapping resource includes at least one of the following:

at least a part of where at least one of the available resource and the reference resource overlaps the another resource;
and/or
the resource object associated with the overlapping resource includes at least one of the following:
a resource object associated with at least a part of where at least one of the available resource and the reference resource overlaps the another resource.

Optionally, the at least a part of where at least one of the available resource and the reference resource overlaps the another resource includes:

at least a part of where at least one of the available resource and the reference resource obtained after being shifted or punctured overlaps the another resource;
and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

Optionally, the resource object includes at least one of the following:
a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.
Optionally, the first behavior related to at least one of reception and monitoring for the target resource includes at least one of the following:

monitoring the target resource;
receiving the target resource;
assuming that the target resource is used for transmission of at least one of a reference signal RS, a downlink control channel, and a downlink control signal; and
determining that the target resource is used for transmission of at least one of an RS, a downlink control channel, and a downlink control signal;
and/or
the second behavior related to at least one of non-reception and non-monitoring for the target resource includes at least one of the following:

refraining from monitoring the target resource;
refraining from receiving the target resource;
assuming that the target resource is not used for transmission of at least one of an RS, a downlink control channel, and a downlink control signal; and
determining that the target resource is not used for transmission of at least one of an RS, a downlink control channel, and a downlink control signal;
and/or
the third behavior related to repetition transmission for the target resource includes at least one of the following:

assuming that the target resource is configured for at least one of downlink control channel repetition transmission and downlink control signal repetition transmission;

assuming that the target resource is configured for RS repetition transmission;

assuming that at least one of a downlink control channel repetition transmission and a downlink control signal repetition transmission is performed on the target resource;

assuming that an RS repetition transmission is performed on the target resource;

determining that the target resource is configured for at least one of downlink control channel repetition transmission and downlink control signal repetition transmission;

determining that the target resource is configured for RS repetition transmission;

determining that at least one of a downlink control channel repetition transmission and a downlink control signal repetition transmission is performed on the target resource; and

determining that an RS repetition transmission is performed on the target resource;

and/or

the fourth behavior related to the subsequent resource of the target resource for the target resource includes at least one of the following:

monitoring the subsequent resource of the target resource; and

receiving the subsequent resource of the target resource; and/or

the fifth behavior related to resource allocation or resource mapping for the target resource includes at least one of the following:

assuming that a resource corresponding to the target resource is allocated or mapped; and

determining that a resource corresponding to the target resource is allocated or mapped; and/or

the sixth behavior related to resource non-allocation or resource non-mapping for the target resource includes at least one of the following:

assuming that a resource corresponding to the target resource is not allocated or mapped; and

determining that a resource corresponding to the target resource is not allocated or mapped.

Optionally, the monitoring the target resource includes:

monitoring at least one of an RS, a downlink control channel, and a downlink control signal on the target resource; and/or

the receiving the target resource includes:

receiving at least one of an RS, a downlink control channel, and a downlink control signal on the target resource; and/or

the monitoring the subsequent resource of the target resource includes:

monitoring at least one of an RS, a downlink control channel, and a downlink control signal on the subsequent resource of the target resource;

and/or

the receiving the subsequent resource of the target resource includes:

receiving at least one of an RS, a downlink control channel, and a downlink control signal on the subsequent resource of the target resource;

and/or

the refraining from monitoring the target resource includes:

refraining from monitoring at least one of an RS, a downlink control channel, and a downlink control signal on the target resource;

and/or

the refraining from receiving the target resource includes:

refraining from receiving at least one of an RS, a downlink control channel, and a downlink control signal on the target resource.

Optionally, in a case that the target resource meets a preset condition, the terminal performs at least one of the following on the target resource:

the first behavior, the second behavior, the third behavior, the fourth behavior, the fifth behavior, and the sixth behavior.

Optionally, the preset condition includes a first condition, and the first condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

Optionally, in at least one of the following cases, a network side device configures, a protocol specifies, or the terminal determines that the target resource meets the first condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the preset condition includes a second condition, and the second condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a seventeenth threshold;

a bundle size corresponding to the target resource is less than or equal to an eighteenth threshold;

a resource quantity of the target resource is equal to or exceeds a nineteenth threshold;

a resource proportion corresponding to the target resource is equal to or exceeds a twentieth threshold;

a resource quantity of at least a part of a non-target resource is equal to or less than a twenty-first threshold;

a resource proportion of at least a part of a non-target resource is equal to or less than a twenty-second threshold;

a code rate corresponding to the target resource is equal to or exceeds a twenty-third threshold;

a DCI size corresponding to the target resource is equal to or exceeds a twenty-fourth threshold;

the target resource is within a non-MBSFN resource;

a value of a precoding granularity control parameter is set to a precoding granularity or all contiguous RBs;

there is overlapping on at least a part or all of the target resource;

there is the overlapping resource;

it is assumed that at least a part of the target resource needs to be or is shifted;

it is assumed that at least a part of the target resource needs to be or is punctured;

a quantity of resources that need to be or are shifted is equal to or exceeds a twenty-fifth threshold;

a quantity of resources that need to be or are punctured is equal to or exceeds a twenty-sixth threshold;

a proportion of resources that need to be or are shifted is equal to or exceeds a twenty-seventh threshold;

a proportion of resources that need to be or are punctured is equal to or exceeds a twenty-eighth threshold;

a quantity of resources that do not need to be or are not shifted is equal to or less than a twenty-ninth threshold;

a quantity of resources that do not need to be or are not punctured is equal to or less than a thirtieth threshold;

a proportion of resources that do not need to be or are not shifted is equal to or less than a thirty-first threshold; and

a proportion of resources that do not need to be or are not punctured is equal to or less than a thirty-second threshold.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

Optionally, in at least one of the following cases, a network side device configures, a protocol specifies, or the terminal determines that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

Optionally, in a case that the target resource includes at least one of the overlapping resource and the resource object associated with the overlapping resource, the terminal performs, for the target resource based on first information, the first behavior related to at least one of monitoring and reception, where the first information indicates or includes at least one of the following:

a first preset aggregation level;

a first preset bundle size;

a first preset aggregation level offset;

a first preset bundle size offset;

a first preset code rate;

a first preset DCI size;

a first preset quantity of detection times;

a first preset quantity of reception times;

a first preset maximum aggregation level;

a first preset minimum aggregation level;

a first preset maximum bundle size;

a first preset minimum bundle size;

a first preset aggregation level maximum offset;

a first preset aggregation level minimum offset;

a first preset bundle size maximum offset;

a first preset bundle size minimum offset;

a first preset maximum code rate;

a first preset minimum code rate;

a first preset maximum DCI size;

a first preset minimum DCI size;

a first preset maximum quantity of detection times;

a first preset maximum quantity of reception times;

a first preset minimum quantity of detection times;

a first preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

a resource quantity of the target resource is equal to or less than a sixty-fifth threshold;

a resource proportion corresponding to the target resource is equal to or less than a sixty-sixth threshold;

a resource quantity of at least a part of a non-target resource is equal to or greater than a sixty-seventh threshold;

a resource proportion of at least a part of a non-target resource is equal to or greater than a sixty-eighth threshold;

a code rate corresponding to the target resource is equal to or less than a sixty-ninth threshold;

a DCI size corresponding to the target resource is equal to or less than a seventieth threshold;

the target resource is within an MBSFN resource;

a value of a precoding granularity control parameter is set to a precoding granularity or all contiguous RBs;

there is no overlapping on at least a part of the target resource;

a first number of a downlink control signal repetition transmission;

a first maximum number of a downlink control signal repetition transmission;

a first minimum number of a downlink control signal repetition transmission;

a first number of a downlink control channel repetition transmission;

a first maximum number of a downlink control channel repetition transmission;

a first minimum number of a downlink control channel repetition transmission;

a first number of an RS repetition transmission;

a first maximum number of an RS repetition transmission; and

a first minimum number of an RS repetition transmission.

Optionally, in at least one of the following cases, the network side device configures, the protocol specifies, or the terminal determines that the target resource matches the first information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the first information is determined based on at least one of the following:

other resource information;

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:
a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, in a case that the target resource includes at least one of the available resource and the resource object associated with the available resource, the terminal performs, for the target resource based on second information, the first behavior related to at least one of monitoring and reception, where the second information indicates or includes at least one of the following:

a second preset aggregation level;
a second preset bundle size;
a second preset aggregation level offset;
a second preset bundle size offset;
a second preset code rate;
a second preset DCI payload;
a second preset quantity of detection times;
a second preset quantity of reception times;
a second preset maximum aggregation level;
a second preset minimum aggregation level;
a second preset maximum bundle size;
a second preset minimum bundle size;
a second preset aggregation level maximum offset;
a second preset aggregation level minimum offset;
a second preset bundle size maximum offset;
a second preset bundle size minimum offset;
a second preset maximum code rate;
a second preset minimum code rate;
a second preset maximum DCI size;
a second preset minimum DCI size;
a second preset maximum quantity of detection times;

a second preset maximum quantity of reception times;

a second preset minimum quantity of detection times;

a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

Optionally, in at least one of the following cases, the network side device configures, the protocol specifies, or the terminal determines that the target resource matches the second information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the second information is determined based on at least one of the following:

other resource information;

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, the terminal determines, based on third information, that the target behavior for the target resource is at least one of the first behavior, the second behavior, the third behavior, the fourth behavior, the fifth behavior, and the sixth behavior, where the third information includes at least one of the following:

a quantity of cell reference signal CRS ports;
control resource set CORESET information;
search space information; and
resource information of overlapping between the another resource and at least one of an RS, a downlink control channel, and a downlink control signal.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.

Optionally, the CORESET information includes at least one of the following:

a quantity of resources occupied by a CORESET, a CORESET quantity, a CORESET type, and a CORESET number; and/or
the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and

a search space index;
and/or
the resource information of overlapping between the another resource and the at least one of the RS, the downlink control channel, and the downlink control signal includes at least one of the following:

> a quantity of symbols of the overlapping part between the downlink control signal and at least one of the RS and the downlink control channel;
> a quantity of monitoring occasions of the overlapping part between the downlink control signal and at least one of the RS and the downlink control channel;
> a quantity of spans of the overlapping part between the downlink control signal and at least one of the RS and the downlink control channel;
> a quantity of search spaces of the overlapping part between the downlink control signal and at least one of the RS and the downlink control channel; and
> a quantity of CORESETs of the overlapping part between the downlink control signal and at least one of the RS and the downlink control channel.

Optionally, in a case that the terminal determines a plurality of target resources, the terminal separately determines target behaviors for at least two of the plurality of target resources based on the granularity of the target resource; and/or
in a case that the terminal determines that the target resource includes a plurality of sub-resources, the terminal separately determines target behaviors for at least two of the plurality of sub-resources based on the granularity of the sub-resource.

Optionally, the method further includes:
obtaining a configuration of at least one of monitoring and reception corresponding to the target resource.

Optionally, the configuration of the at least one of monitoring and reception indicates at least one of the following:

a third preset aggregation level;
a third preset bundle size;
a third preset aggregation level offset;
a third preset bundle size offset;
a third preset code rate;
a third preset DCI size;
a third preset quantity of detection times;
a third preset quantity of reception times;
a third preset maximum aggregation level;
a third preset minimum aggregation level;
a third preset maximum bundle size;
a third preset minimum bundle size;
a third preset aggregation level maximum offset;
a third preset aggregation level minimum offset;
a third preset bundle size maximum offset;
a third preset bundle size minimum offset;
a third preset maximum code rate;
a third preset minimum code rate;
a third preset maximum DCI payload;
a third preset minimum DCI payload;
a third preset maximum quantity of detection times;
a third preset maximum quantity of reception times;
a third preset minimum quantity of detection times;
a third preset minimum quantity of reception times;
a resource quantity of the target resource;
a resource quantity upper limit of the target resource;
a resource quantity lower limit of the target resource;
a resource proportion of the target resource;
an overlapping resource upper limit of the target resource;
an overlapping resource lower limit of the target resource;
a resource quantity of the non-target resource;
a resource quantity upper limit of the non-target resource;
a resource quantity lower limit of the non-target resource;

a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;
a DCI size of the target resource;
a DCI size upper limit of the target resource;
a DCI size lower limit of the target resource; and
whether the target resource is within an MBSFN resource.

Optionally, the apparatus further includes an expectation module, and the expectation module is used for at least one of the following:

expecting that at least one of an RS, a downlink control channel, and a downlink control signal does not overlap the another resource;
expecting that there is not the target resource;
refraining from expecting that at least one of an RS, a downlink control channel, and a downlink control signal overlaps the another resource; and
refraining from expecting that there is the target resource.

Optionally, the expecting that at least one of an RS, a downlink control channel, and a downlink control signal does not overlap the another resource includes:

expecting that the at least one of the RS, the downlink control channel, and the downlink control signal does not overlap the another resource after being punctured/shifted;
and/or
the expecting that there is not the target resource includes:
expecting that there is not the target resource after being punctured/shifted;
and/or
the refraining from expecting that at least one of an RS, a downlink control channel, and a downlink control signal overlaps the another resource includes:

refraining from expecting that the at least one of the RS, the downlink control channel, and the downlink control signal overlaps the another resource after being punctured/shifted; and/or
the refraining from expecting that there is the target resource includes:
refraining from expecting that there is the target resource after being punctured/shifted.

The resource determining apparatus can improve transmission performance of the terminal.
The resource determining apparatus in this embodiment of this application may be an electronic device, for example, an electronic device with an operating system, or may be a component in the electronic device, for example, an integrated circuit or a chip. The electronic device may be a terminal, or may be another device other than the terminal. For example, the terminal may include but is not limited to the type of the terminal enumerated in embodiments of this application. The another device may be a server, a network attached storage (Network Attached Storage, NAS), or the like. This is not specifically limited in embodiments of this application.
The resource determining apparatus provided in this embodiment of this application can implement processes implemented in the method embodiment shown in FIG. 2, and achieve a same technical effect. To avoid repetition, details are not described herein again.
Refer to FIG. 8. FIG. 8 is a diagram of a structure of a resource monitoring apparatus according to an embodiment of this application. As shown in FIG. 8, the apparatus includes:

a determining module 801, configured to determine a control resource, where the control resource includes at least one of the following: a first control resource for self-scheduling on a first cell and a second control resource for scheduling on the first cell from a second cell; and
a monitoring module 802, configured to monitor the control resource, where
the first control resource is determined based on first carrier information for self-scheduling on the first cell, and the first carrier information includes at least one of the following:
first carrier indication information and a first carrier indicator field CIF.

Optionally, the first carrier information is determined based on a carrier indicator field in a target configuration, or the first carrier information is a preset value, where the target configuration includes at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

Optionally, the configuration of the second cell includes a cross-carrier configuration;
and/or

the cross-carrier configuration indicates that there is a carrier indicator field in downlink control information DCI of the second cell;
and/or
there is a carrier indicator field in DCI for self-scheduling on the second cell;
and/or
there is a carrier indicator field in DCI for scheduling another cell other than the first cell from the second cell.

The resource monitoring apparatus can improve transmission performance of a terminal.

The resource monitoring apparatus in this embodiment of this application may be an electronic device, for example, an electronic device with an operating system, or may be a component in the electronic device, for example, an integrated circuit or a chip. The electronic device may be a terminal, or may be another device other than the terminal. For example, the terminal may include but is not limited to the type of the terminal enumerated in embodiments of this application. The another device may be a server, a network attached storage (Network Attached Storage, NAS), or the like. This is not specifically limited in embodiments of this application.

The resource monitoring apparatus provided in this embodiment of this application can implement processes implemented in the method embodiment shown in FIG. 4, and achieve a same technical effect. To avoid repetition, details are not described herein again.

Refer to FIG. 9. FIG. 9 is a diagram of a structure of another resource determining apparatus according to an embodiment of this application. As shown in FIG. 9, the apparatus includes:

a determining module 901, configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where
a target behavior of a network side device for the target resource includes at least one of the following:

a first behavior related to sending;
a second behavior related to non-sending;
a third behavior related to repetition transmission;
a fourth behavior related to a subsequent resource of the target resource;
a fifth behavior related to resource allocation or resource mapping; and
a sixth behavior related to resource non-allocation or resource non-mapping.

Optionally, the available resource includes at least one of the following:

at least a part of a resource that can be used as a target downlink resource; and
at least a part of a resource actually used as a target downlink resource;
and/or
the resource object associated with the available resource includes at least one of the following:

a resource object associated with at least a part of a resource that can be used as a target downlink resource; and
a resource object associated with at least a part of a resource actually used as a target downlink resource, where

the target downlink resource includes at least one of the following: a reference signal RS resource and a physical downlink control resource.

Optionally, the at least a part of a resource that can be used as a target downlink resource includes:

at least a part of a resource that can be used as a target downlink resource after being shifted or punctured; and/or
the at least a part of a resource actually used as a target downlink resource includes:
at least a part of a resource actually used as a target downlink resource after being shifted or punctured; and/or
the resource object associated with at least a part of a resource that can be used as a target downlink resource includes:

a resource object associated with at least a part of a resource that can be used as a target downlink resource after being shifted or punctured;
and/or
the resource object associated with at least a part of a resource that can be actually used as a target downlink resource includes:
a resource object associated with at least a part of a resource that can be actually used as a target downlink resource after being shifted or punctured.

Optionally, the overlapping resource includes at least one of the following:

at least a part of where at least one of the available resource and the reference resource overlaps the another resource;
and/or
the resource object associated with the overlapping resource includes at least one of the following:
a resource object associated with at least a part of where at least one of the available resource and the reference resource overlaps the another resource.

Optionally, the at least a part of where at least one of the available resource and the reference resource overlaps the another resource includes:

at least a part of where at least one of the available resource and the reference resource obtained after being shifted or punctured overlaps the another resource;
and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

Optionally, the resource object includes at least one of the following:
a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.
Optionally, the first behavior related to at least one of reception and monitoring for the target resource includes at least one of the following:

monitoring the target resource;
receiving the target resource;
assuming that the target resource is used for transmission of at least one of a reference signal RS, a downlink control channel, and a downlink control signal; and
determining that the target resource is used for transmission of at least one of an RS, a downlink control channel, and a downlink control signal;
and/or
the second behavior related to at least one of non-reception and non-monitoring for the target resource includes at least one of the following:

refraining from monitoring the target resource;

refraining from receiving the target resource;

assuming that the target resource is not used for transmission of at least one of an RS, a downlink control channel, and a downlink control signal; and

determining that the target resource is not used for transmission of at least one of an RS, a downlink control channel, and a downlink control signal;

and/or

the third behavior related to repetition transmission for the target resource includes at least one of the following:

assuming that the target resource is configured for at least one of downlink control channel repetition transmission and downlink control signal repetition transmission;

assuming that the target resource is configured for RS repetition transmission;

assuming that at least one of a downlink control channel repetition transmission and a downlink control signal repetition transmission is performed on the target resource;

assuming that an RS repetition transmission is performed on the target resource;

determining that the target resource is configured for at least one of downlink control channel repetition transmission and downlink control signal repetition transmission;

determining that the target resource is configured for RS repetition transmission;

determining that at least one of a downlink control channel repetition transmission and a downlink control signal repetition transmission is performed on the target resource; and

determining that an RS repetition transmission is performed on the target resource;

and/or

the fourth behavior related to the subsequent resource of the target resource for the target resource includes at least one of the following:

monitoring the subsequent resource of the target resource; and

receiving the subsequent resource of the target resource; and/or

the fifth behavior related to resource allocation or resource mapping for the target resource includes at least one of the following:

mapping or allocating a resource corresponding to the target resource; and/or

the sixth behavior related to resource non-allocation or resource non-mapping for the target resource includes at least one of the following:

refraining from mapping or allocating a resource corresponding to the target resource.

Optionally, in a case that the target resource meets a preset condition, the network side device performs at least one of the following on the target resource:

the first behavior, the second behavior, the third behavior, the fourth behavior, the fifth behavior, and the sixth behavior.

Optionally, the preset condition includes a first condition, and the first condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;
there is no overlapping on at least a part of the target resource;
it is assumed that at least a part of the target resource does not need to be or is not shifted;
it is assumed that at least a part of the target resource does not need to be or is not punctured;
a quantity of resources that need to be or are shifted is equal to or less than a ninth threshold;
a quantity of resources that need to be or are punctured is equal to or less than a tenth threshold;
a proportion of resources that need to be or are shifted is equal to or less than an eleventh threshold;
a proportion of resources that need to be or are punctured is equal to or less than a twelfth threshold;
a quantity of resources that do not need to be or are not shifted is equal to or exceeds a thirteenth threshold;
a quantity of resources that do not need to be or are not punctured is equal to or exceeds a fourteenth threshold;
a proportion of resources that do not need to be or are not shifted is equal to or exceeds a fifteenth threshold; and
a proportion of resources that do not need to be or are not punctured is equal to or exceeds a sixteenth threshold.

Optionally, in at least one of the following cases, the network side device configures or a protocol specifies that the target resource meets the first condition:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and
at least one of an RS, a downlink control channel, and a downlink control signal possibly has a resource conflict with the another resource.

Optionally, the preset condition includes a second condition, and the second condition includes at least one of the following:

the target resource is a cell specific resource, or the target resource is a common resource, or the target resource is a resource for broadcast transmission;
the target resource is used for cell specific PDCCH transmission, or the target resource is used for common PDCCH transmission, or the target resource is used for broadcast PDCCH transmission;
the target resource is used for cell specific DCI transmission, or the target resource is used for common DCI transmission, or the target resource is used for broadcast DCI transmission;
the target resource is used for cell specific CCE transmission, or the target resource is used for common CCE transmission, or the target resource is used for CCE for broadcast transmission;
an aggregation level corresponding to the target resource is less than or equal to a seventeenth threshold;
a bundle size corresponding to the target resource is less than or equal to an eighteenth threshold;
a resource quantity of the target resource is equal to or exceeds a nineteenth threshold;
a resource proportion corresponding to the target resource is equal to or exceeds a twentieth threshold;
a resource quantity of at least a part of a non-target resource is equal to or less than a twenty-first threshold;
a resource proportion of at least a part of a non-target resource is equal to or less than a twenty-second threshold;
a code rate corresponding to the target resource is equal to or exceeds a twenty-third threshold;
a DCI size corresponding to the target resource is equal to or exceeds a twenty-fourth threshold;
the target resource is within a non-MBSFN resource;
a value of a precoding granularity control parameter is set to a precoding granularity or all contiguous RBs;
there is overlapping on at least a part or all of the target resource;
there is the overlapping resource;
it is assumed that at least a part of the target resource needs to be or is shifted;
it is assumed that at least a part of the target resource needs to be or is punctured;
a quantity of resources that need to be or are shifted is equal to or exceeds a twenty-fifth threshold;
a quantity of resources that need to be or are punctured is equal to or exceeds a twenty-sixth threshold;
a proportion of resources that need to be or are shifted is equal to or exceeds a twenty-seventh threshold;
a proportion of resources that need to be or are punctured is equal to or exceeds a twenty-eighth threshold;
a quantity of resources that do not need to be or are not shifted is equal to or less than a twenty-ninth threshold;
a quantity of resources that do not need to be or are not punctured is equal to or less than a thirtieth threshold;
a proportion of resources that do not need to be or are not shifted is equal to or less than a thirty-first threshold; and
a proportion of resources that do not need to be or are not punctured is equal to or less than a thirty-second threshold.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

Optionally, in at least one of the following cases, the network side device configures or a protocol specifies that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

Optionally, in a case that the target resource includes at least one of the overlapping resource and the resource object associated with the overlapping resource, the network side device performs, for the target resource based on first information, the first behavior related to at least one of monitoring and reception, where the first information indicates or includes at least one of the following:

a first preset aggregation level;

a first preset bundle size;

a first preset aggregation level offset;

a first preset bundle size offset;

a first preset code rate;

a first preset DCI size;

a first preset quantity of detection times;

a first preset quantity of reception times;

a first preset maximum aggregation level;

a first preset minimum aggregation level;

a first preset maximum bundle size;

a first preset minimum bundle size;

a first preset aggregation level maximum offset;

a first preset aggregation level minimum offset;

a first preset bundle size maximum offset;

a first preset bundle size minimum offset;

a first preset maximum code rate;

a first preset minimum code rate;

a first preset maximum DCI size;

a first preset minimum DCI size;

a first preset maximum quantity of detection times;

a first preset maximum quantity of reception times;

a first preset minimum quantity of detection times;

a first preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

a resource quantity of the target resource is equal to or less than a sixty-fifth threshold;

a resource proportion corresponding to the target resource is equal to or less than a sixty-sixth threshold;

a resource quantity of at least a part of a non-target resource is equal to or greater than a sixty-seventh threshold;

a resource proportion of at least a part of a non-target resource is equal to or greater than a sixty-eighth threshold;

a code rate corresponding to the target resource is equal to or less than a sixty-ninth threshold;

a DCI size corresponding to the target resource is equal to or less than a seventieth threshold;

the target resource is within an MBSFN resource;

a value of a precoding granularity control parameter is set to a precoding granularity or all contiguous RBs;

there is no overlapping on at least a part of the target resource;

a first number of a downlink control signal repetition transmission;

a first maximum number of a downlink control signal repetition transmission;

a first minimum number of a downlink control signal repetition transmission;

a first number of a downlink control channel repetition transmission;

a first maximum number of a downlink control channel repetition transmission;

a first minimum number of a downlink control channel repetition transmission;

a first number of an RS repetition transmission;

a first maximum number of an RS repetition transmission; and

a first minimum number of an RS repetition transmission.

Optionally, in at least one of the following cases, the network side device configures or the protocol specifies that the target resource matches the first information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the first information is determined based on at least one of the following:

other resource information;

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or

the search space information includes at least one of the following:

a quantity of resources of a search space;

a length of a monitoring occasion of the search space;

a quantity of monitoring occasions of the search space;

a location of the monitoring occasion of the search space;

a length of a span of the search space;

a quantity of spans of the search space;

a location of the span of the search space;

a search space period;

a search space quantity; and

a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, in a case that the target resource includes at least one of the available resource and the resource object associated with the available resource, the network side device performs, for the target resource based on second information, the first behavior related to at least one of monitoring and reception, where the second information indicates or includes at least one of the following:

a second preset aggregation level;

a second preset bundle size;

a second preset aggregation level offset;

a second preset bundle size offset;

a second preset code rate;

a second preset DCI payload;

a second preset quantity of detection times;

a second preset quantity of reception times;

a second preset maximum aggregation level;

a second preset minimum aggregation level;

a second preset maximum bundle size;

a second preset minimum bundle size;

a second preset aggregation level maximum offset;

a second preset aggregation level minimum offset;

a second preset bundle size maximum offset;

a second preset bundle size minimum offset;

a second preset maximum code rate;

a second preset minimum code rate;

a second preset maximum DCI size;

a second preset minimum DCI size;

a second preset maximum quantity of detection times;

a second preset maximum quantity of reception times;

a second preset minimum quantity of detection times;

a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;
a resource proportion of the target resource is equal to or exceeds a seventy-second threshold;
a resource quantity of at least a part of a non-target resource is equal to or less than a seventy-third threshold;
a resource proportion of at least a part of a non-target resource is equal to or less than a seventy-fourth threshold;
a code rate corresponding to the target resource is equal to or less than a seventy-fifth threshold;
a DCI size corresponding to the target resource is equal to or less than a seventy-sixth threshold;
the target resource is within an MBSFN resource;
a value of a precoding granularity control parameter is set to a precoding granularity or all contiguous RBs;
there is no overlapping on at least a part of the target resource;
a second number of a downlink control signal repetition transmission;
a second maximum number of a downlink control signal repetition transmission;
a second minimum number of a downlink control signal repetition transmission;
a second number of a downlink control channel repetition transmission;
a second maximum number of a downlink control channel repetition transmission;
a second minimum number of a downlink control channel repetition transmission;
a second number of an RS repetition transmission;
a second maximum number of an RS repetition transmission; and
a second minimum number of an RS repetition transmission.

Optionally, in at least one of the following cases, the network side device configures or the protocol specifies that the target resource matches the second information:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and
at least one of an RS, a downlink control channel, and a downlink control signal possibly has a resource conflict with the another resource.

Optionally, the second information is determined based on at least one of the following:

other resource information (for example, resource information such as a port quantity);
control resource set CORESET information;
search space information; and
resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number;
and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, the terminal determines, based on reference information, that the target behavior for the target resource is at least one of the first behavior, the second behavior, the third behavior, the fourth behavior, the fifth behavior, and the sixth behavior, where the reference information includes at least one of the following:

a quantity of cell reference signal CRS ports;
control resource set CORESET information;
search space information; and
resource information of overlapping between the another resource and at least one of an RS, a downlink control channel, and a downlink control signal.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, in a case of determining a plurality of target resources, the network side device separately determines target behaviors for at least two of the plurality of target resources based on the granularity of the target resource; and/or in a case of determining that the target resource includes a plurality of sub-resources, the network side device separately determines target behaviors for at least two of the plurality of sub-resources based on the granularity of the sub-resource.

Optionally, the apparatus further includes:
a sending module, configured to send a configuration of at least one of monitoring and reception corresponding to the target resource to a terminal.

Optionally, the configuration of the at least one of monitoring and reception indicates at least one of the following:

a third preset aggregation level;
a third preset bundle size;
a third preset aggregation level offset;
a third preset bundle size offset;
a third preset code rate;
a third preset DCI size;
a third preset quantity of detection times;
a third preset quantity of reception times;
a third preset maximum aggregation level;
a third preset minimum aggregation level;
a third preset maximum bundle size;
a third preset minimum bundle size;
a third preset aggregation level maximum offset;
a third preset aggregation level minimum offset;
a third preset bundle size maximum offset;
a third preset bundle size minimum offset;
a third preset maximum code rate;
a third preset minimum code rate;
a third preset maximum DCI payload;
a third preset minimum DCI payload;
a third preset maximum quantity of detection times;
a third preset maximum quantity of reception times;
a third preset minimum quantity of detection times;
a third preset minimum quantity of reception times;
a resource quantity of the target resource;
a resource quantity upper limit of the target resource;
a resource quantity lower limit of the target resource;
a resource proportion of the target resource;
an overlapping resource upper limit of the target resource;
an overlapping resource lower limit of the target resource;
a resource quantity of the non-target resource;
a resource quantity upper limit of the non-target resource;
a resource quantity lower limit of the non-target resource;
a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;
a DCI size of the target resource;
a DCI size upper limit of the target resource;
a DCI size lower limit of the target resource; and
whether the target resource is within an MBSFN resource.

Optionally, the apparatus further includes an expectation module, used for at least one of the following:

expecting that at least one of an RS, a downlink control channel, and a downlink control signal does not overlap the another resource;
the network side device expects that there is not the target resource;
refraining from expecting that at least one of an RS, a downlink control channel, and a downlink control signal overlaps the another resource; and
refraining from expecting that there is the target resource.

Optionally, the expecting that at least one of an RS, a downlink control channel, and a downlink control signal does not overlap the another resource includes:

expecting that the at least one of the RS, the downlink control channel, and the downlink control signal does not overlap the another resource after being punctured/shifted;
and/or
the expecting that there is not the target resource includes:
expecting that there is not the target resource after being punctured/shifted;
and/or
the refraining from expecting that at least one of an RS, a downlink control channel, and a downlink control signal overlaps the another resource includes:

refraining from expecting that the at least one of the RS, the downlink control channel, and the downlink control signal overlaps the another resource after being punctured/shifted; and/or
the refraining from expecting that there is the target resource includes:
refraining from expecting that there is the target resource after being punctured/shifted.

The resource determining apparatus can improve transmission performance of the terminal.

The resource determining apparatus in this embodiment of this application may be an electronic device, for example, an electronic device with an operating system, or may be a component in the electronic device, for example, an integrated circuit or a chip. The electronic device may be a network side device, or may be another device other than the terminal. For example, the network side device may include but is not limited to the type of the network side device enumerated in embodiments of this application. The another device may be a server, a network attached storage (Network Attached Storage, NAS), or the like. This is not specifically limited in embodiments of this application.

The resource determining apparatus provided in this embodiment of this application can implement processes implemented in the method embodiment shown in FIG. 5, and achieve a same technical effect. To avoid repetition, details are not described herein again.

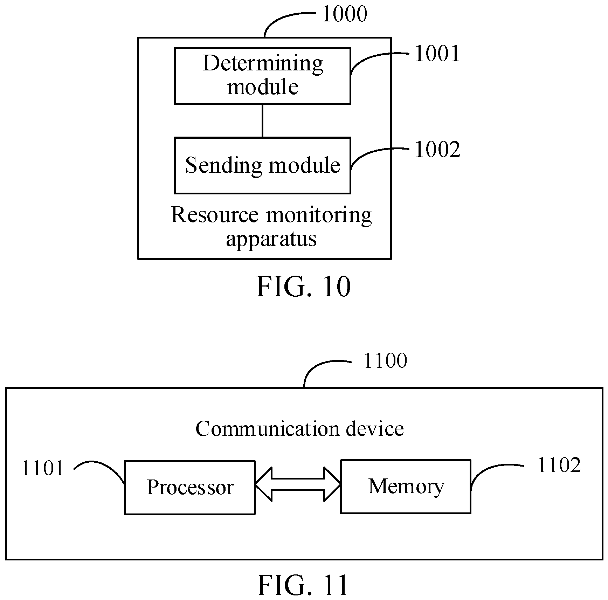

Refer to FIG. 10. FIG. 10 is a diagram of a structure of another resource monitoring apparatus according to an embodiment of this application. As shown in FIG. 10, the apparatus includes:

a determining module 1001, configured to determine a control resource, where the control resource includes at least one of the following: a first control resource for self-scheduling on a first cell and a second control resource for scheduling on the first cell from a second cell; and
a sending module 1002, configured to send the control resource, where
the first control resource is determined based on first carrier information for self-scheduling on the first cell, and the first carrier information includes at least one of the following:
first carrier indication information and a first carrier indicator field CIF.

Optionally, the first carrier information is determined based on a carrier indicator field in a target configuration, or the first carrier information is a preset value, where the target configuration includes at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

Optionally, the configuration of the second cell includes a cross-carrier configuration;
and/or

the cross-carrier configuration indicates that there is a carrier indicator field in downlink control information DCI of the second cell;
and/or
there is a carrier indicator field in DCI for self-scheduling on the second cell;
and/or

there is a carrier indicator field in DCI for scheduling another cell other than the first cell from the second cell.

The resource determining apparatus can improve transmission performance of the terminal.

The resource determining apparatus in this embodiment of this application may be an electronic device, for example, an electronic device with an operating system, or may be a component in the electronic device, for example, an integrated circuit or a chip. The electronic device may be a network side device, or may be another device other than the terminal. For example, the network side device may include but is not limited to the type of the network side device enumerated in embodiments of this application. The another device may be a server, a network attached storage (Network Attached Storage, NAS), or the like. This is not specifically limited in embodiments of this application.

The resource determining apparatus provided in this embodiment of this application can implement processes implemented in the method embodiment shown in FIG. 6, and achieve a same technical effect. To avoid repetition, details are not described herein again.

Optionally, as shown in FIG. 11, an embodiment of this application further provides a communication device 1100, including a processor 1101 and a memory 1102. The memory 1102 stores a program or instructions that can be run on the processor 1101. For example, when the communication device 1100 is a terminal, steps in the embodiment of the resource determining method or the resource monitoring method on the terminal side are implemented and the same technical effects can be achieved when the program or the instructions are executed by the processor 1101. When the communication device 1100 is a network side device, steps in the embodiment of the resource determining method or the resource monitoring method on the network side device side are implemented and the same technical effects can be achieved when the program or the instructions are executed by the processor 1101. To avoid repetition, details are not described herein again.

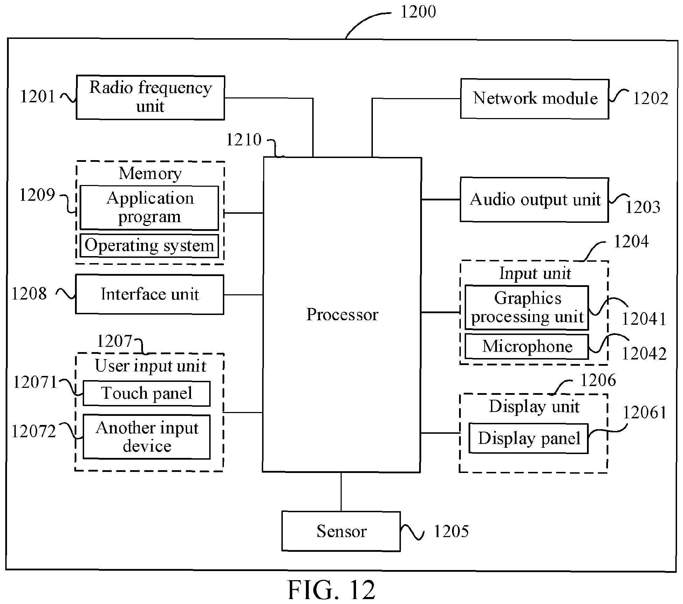

An embodiment of this application further provides a terminal, including a processor and a communication interface. The processor is configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of a terminal for the target resource includes at least one of the following: a first behavior related to at least one of reception and monitoring; a second behavior related to at least one of non-reception and non-monitoring; a third behavior related to repetition transmission; a fifth behavior related to resource allocation or resource mapping; a sixth behavior related to resource non-allocation or resource non-mapping; and a fourth behavior related to a subsequent resource of the target resource. Alternatively, the processor is configured to determine a control resource, where the control resource includes at least one of the following: a first control resource for self-scheduling on a first cell and a second control resource for scheduling on the first cell from a second cell; and the communication interface is configured to monitor the control resource, where the first control resource is determined based on first carrier information for self-scheduling on the first cell, and the first carrier information includes at least one of the following: first carrier indication information and a first carrier indicator field CIF. This terminal embodiment is corresponding to the foregoing terminal side method embodiment. Implementation processes and implementations of the foregoing method embodiment are applicable to this terminal embodiment, and the same technical effects can be achieved. Specifically, FIG. 12 is a diagram of a hardware structure of a terminal according to an embodiment of this application.

The terminal 1200 includes but is not limited to: at least some of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include a power supply (for example, a battery) that supplies power to each component, and the power supply may be logically connected to the processor 1210 by using a power management system, to implement functions such as charging management, discharging management, and power consumption management by using the power management system. The structure of the terminal shown in FIG. 12 does not constitute a limitation on the terminal. The terminal may include more or fewer components than those shown in the figure, or combine some components, or have different component arrangements. Details are not described herein again.

It should be understood that in this embodiment of this application, the input unit 1204 may include a graphics processing unit (Graphics Processing Unit, GPU) 12041 and a microphone 12042. The graphics processing unit 12041 processes image data of a static picture or a video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, or the like. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a function button (such as a volume control button or a power button), a trackball, a mouse, and an operating lever. Details are not described herein.

In this embodiment of this application, after receiving downlink data from a network side device, the radio frequency unit 1201 may transmit the downlink data to the processor 1210 for processing. In addition, the radio frequency unit 1201 may send uplink data to the network side device. Generally, the radio frequency unit 1201 includes but is not limited to an antenna, an amplifier, a transceiver, a coupler, a low-noise amplifier, a duplexer, or the like.

The memory 1209 may be configured to store a software program or instruction and various types of data. The memory 1209 may mainly include a first storage area for storing a program or instructions and a second storage area for storing data. The first storage area may store an operating system, an application program or instructions required by at least one function (such as a sound play function or an image play function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DR RAM). The memory 1209 in this embodiment of this application includes but is not limited to these memories and memories of any other suitable types.

The processor 1210 may include one or more processing units. Optionally, the processor 1210 is integrated with an application processor and a modem processor. The application processor mainly processes operations related to an operating system, a user interface, an application program, and the like, and the modem processor mainly processes wireless communication signals, such as a baseband processor. It may be understood that the modem processor may alternatively not be integrated into the processor 1210.

In an embodiment, the processor 1210 is configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where

a target behavior of the terminal for the target resource includes at least one of the following:

> a first behavior related to at least one of reception and monitoring;
> a second behavior related to at least one of non-reception and non-monitoring;
> a third behavior related to repetition transmission;
> a fourth behavior related to a subsequent resource of the target resource;
> a fifth behavior related to resource allocation or resource mapping; and
> a sixth behavior related to resource non-allocation or resource non-mapping.

Optionally, the available resource includes at least one of the following:

> at least a part of a resource that can be used as a target downlink resource; and
> at least a part of a resource actually used as a target downlink resource;
> and/or
> the resource object associated with the available resource includes at least one of the following:
> a resource object associated with at least a part of a resource that can be used as a target downlink resource; and
> a resource object associated with at least a part of a resource actually used as a target downlink resource, where the target downlink resource includes at least one of the following: a reference signal RS resource and a physical downlink control resource.

Optionally, the at least a part of a resource that can be used as a target downlink resource includes:

> at least a part of a resource that can be used as a target downlink resource after being shifted or punctured;
> and/or
> the at least a part of a resource actually used as a target downlink resource includes:
> at least a part of a resource actually used as a target downlink resource after being shifted or punctured;
> and/or
> the resource object associated with at least a part of a resource that can be used as a target downlink resource includes:

a resource object associated with at least a part of a resource that can be used as a target downlink resource after being shifted or punctured; and/or
the resource object associated with at least a part of a resource that can be actually used as a target downlink resource includes:
a resource object associated with at least a part of a resource that can be actually used as a target downlink resource after being shifted or punctured.

Optionally, the overlapping resource includes at least one of the following:

at least a part of where at least one of the available resource and the reference resource overlaps the another resource; and/or
the resource object associated with the overlapping resource includes at least one of the following:
a resource object associated with at least a part of where at least one of the available resource and the reference resource overlaps the another resource.

Optionally, the at least a part of where at least one of the available resource and the reference resource overlaps the another resource includes:

at least a part of where at least one of the available resource and the reference resource obtained after being shifted or punctured overlaps the another resource; and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

Optionally, the resource object includes at least one of the following:
a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.
Optionally, the first behavior related to at least one of reception and monitoring for the target resource includes at least one of the following:

monitoring the target resource;
receiving the target resource;
assuming that the target resource is used for transmission of at least one of a reference signal RS, a downlink control channel, and a downlink control signal; and
determining that the target resource is used for transmission of at least one of an RS, a downlink control channel, and a downlink control signal;
and/or
the second behavior related to at least one of non-reception and non-monitoring for the target resource includes at least one of the following:

refraining from monitoring the target resource;
refraining from receiving the target resource;
assuming that the target resource is not used for transmission of at least one of an RS, a downlink control channel, and a downlink control signal; and
determining that the target resource is not used for transmission of at least one of an RS, a downlink control channel, and a downlink control signal;
and/or
the third behavior related to repetition transmission for the target resource includes at least one of the following:

assuming that the target resource is configured for at least one of downlink control channel repetition transmission and downlink control signal repetition transmission;

assuming that the target resource is configured for RS repetition transmission;

assuming that at least one of a downlink control channel repetition transmission and a downlink control signal repetition transmission is performed on the target resource;

assuming that an RS repetition transmission is performed on the target resource;

determining that the target resource is configured for at least one of downlink control channel repetition transmission and downlink control signal repetition transmission;

determining that the target resource is configured for RS repetition transmission;

determining that at least one of a downlink control channel repetition transmission and a downlink control signal repetition transmission is performed on the target resource; and

determining that an RS repetition transmission is performed on the target resource;

and/or

the fourth behavior related to the subsequent resource of the target resource for the target resource includes at least one of the following:

> monitoring the subsequent resource of the target resource; and
>
> receiving the subsequent resource of the target resource; and/or
>
> the fifth behavior related to resource allocation or resource mapping for the target resource includes at least one of the following:
>
> > assuming that a resource corresponding to the target resource is allocated or mapped; and
> >
> > determining that a resource corresponding to the target resource is allocated or mapped; and/or
> >
> > the sixth behavior related to resource non-allocation or resource non-mapping for the target resource includes at least one of the following:
> >
> > assuming that a resource corresponding to the target resource is not allocated or mapped; and
> >
> > determining that a resource corresponding to the target resource is not allocated or mapped.

Optionally, the monitoring the target resource includes:

monitoring at least one of an RS, a downlink control channel, and a downlink control signal on the target resource; and/or

the receiving the target resource includes:

> receiving at least one of an RS, a downlink control channel, and a downlink control signal on the target resource; and/or
>
> the monitoring the subsequent resource of the target resource includes:
>
> > monitoring at least one of an RS, a downlink control channel, and a downlink control signal on the subsequent resource of the target resource;
> >
> > and/or
> >
> > the receiving the subsequent resource of the target resource includes:
> >
> > > receiving at least one of an RS, a downlink control channel, and a downlink control signal on the subsequent resource of the target resource;
> > >
> > > and/or
> > >
> > > the refraining from monitoring the target resource includes:
> > >
> > > > refraining from monitoring at least one of an RS, a downlink control channel, and a downlink control signal on the target resource;
> > > >
> > > > and/or
> > > >
> > > > the refraining from receiving the target resource includes:
> > > >
> > > > refraining from receiving at least one of an RS, a downlink control channel, and a downlink control signal on the target resource.

Optionally, in a case that the target resource meets a preset condition, the terminal performs at least one of the following on the target resource:

the first behavior, the second behavior, the third behavior, the fourth behavior, the fifth behavior, and the sixth behavior.

Optionally, the preset condition includes a first condition, and the first condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

Optionally, in at least one of the following cases, a network side device configures, a protocol specifies, or the terminal determines that the target resource meets the first condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the preset condition includes a second condition, and the second condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a seventeenth threshold;

a bundle size corresponding to the target resource is less than or equal to an eighteenth threshold;

a resource quantity of the target resource is equal to or exceeds a nineteenth threshold;

a resource proportion corresponding to the target resource is equal to or exceeds a twentieth threshold;

a resource quantity of at least a part of a non-target resource is equal to or less than a twenty-first threshold;

a resource proportion of at least a part of a non-target resource is equal to or less than a twenty-second threshold;

a code rate corresponding to the target resource is equal to or exceeds a twenty-third threshold;

a DCI size corresponding to the target resource is equal to or exceeds a twenty-fourth threshold;

the target resource is within a non-MBSFN resource;

a value of a precoding granularity control parameter is set to a precoding granularity or all contiguous RBs;

there is overlapping on at least a part or all of the target resource;

there is the overlapping resource;

it is assumed that at least a part of the target resource needs to be or is shifted;

it is assumed that at least a part of the target resource needs to be or is punctured;

a quantity of resources that need to be or are shifted is equal to or exceeds a twenty-fifth threshold;

a quantity of resources that need to be or are punctured is equal to or exceeds a twenty-sixth threshold;

a proportion of resources that need to be or are shifted is equal to or exceeds a twenty-seventh threshold;

a proportion of resources that need to be or are punctured is equal to or exceeds a twenty-eighth threshold;

a quantity of resources that do not need to be or are not shifted is equal to or less than a twenty-ninth threshold;

a quantity of resources that do not need to be or are not punctured is equal to or less than a thirtieth threshold;

a proportion of resources that do not need to be or are not shifted is equal to or less than a thirty-first threshold; and

a proportion of resources that do not need to be or are not punctured is equal to or less than a thirty-second threshold.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

Optionally, in at least one of the following cases, a network side device configures, a protocol specifies, or the terminal determines that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

Optionally, in a case that the target resource includes at least one of the overlapping resource and the resource object associated with the overlapping resource, the terminal performs, for the target resource based on first information, the first behavior related to at least one of monitoring and reception, where the first information indicates or includes at least one of the following:

a first preset aggregation level;

a first preset bundle size;

a first preset aggregation level offset;

a first preset bundle size offset;

a first preset code rate;

a first preset DCI size;

a first preset quantity of detection times;

a first preset quantity of reception times;

a first preset maximum aggregation level;

a first preset minimum aggregation level;

a first preset maximum bundle size;

a first preset minimum bundle size;
a first preset aggregation level maximum offset;
a first preset aggregation level minimum offset;
a first preset bundle size maximum offset;
a first preset bundle size minimum offset;
a first preset maximum code rate;
a first preset minimum code rate;
a first preset maximum DCI size;
a first preset minimum DCI size;
a first preset maximum quantity of detection times;
a first preset maximum quantity of reception times;
a first preset minimum quantity of detection times;
a first preset minimum quantity of reception times;
the target resource is a cell specific resource, or the target resource is a common resource, or the target resource is a resource for broadcast transmission;
the target resource is used for cell specific PDCCH transmission, or the target resource is used for common PDCCH transmission, or the target resource is used for broadcast PDCCH transmission;
the target resource is used for cell specific DCI transmission, or the target resource is used for common DCI transmission, or the target resource is used for broadcast DCI transmission;
the target resource is used for cell specific CCE transmission, or the target resource is used for common CCE transmission, or the target resource is used for CCE for broadcast transmission;
a resource quantity of the target resource is equal to or less than a sixty-fifth threshold;
a resource proportion corresponding to the target resource is equal to or less than a sixty-sixth threshold;
a resource quantity of at least a part of a non-target resource is equal to or greater than a sixty-seventh threshold;
a resource proportion of at least a part of a non-target resource is equal to or greater than a sixty-eighth threshold;
a code rate corresponding to the target resource is equal to or less than a sixty-ninth threshold;
a DCI size corresponding to the target resource is equal to or less than a seventieth threshold;
the target resource is within an MBSFN resource;
a value of a precoding granularity control parameter is set to a precoding granularity or all contiguous RBs;
there is no overlapping on at least a part of the target resource;
a first number of a downlink control signal repetition transmission;
a first maximum number of a downlink control signal repetition transmission;
a first minimum number of a downlink control signal repetition transmission;
a first number of a downlink control channel repetition transmission;
a first maximum number of a downlink control channel repetition transmission;
a first minimum number of a downlink control channel repetition transmission;
a first number of an RS repetition transmission;
a first maximum number of an RS repetition transmission; and
a first minimum number of an RS repetition transmission.

Optionally, in at least one of the following cases, the network side device configures, the protocol specifies, or the terminal determines that the target resource matches the first information:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;
a resource of at least one of an RS, a downlink control channel, and a downlink control signal is determined based on the another resource; and
at least one of an RS, a downlink control channel, and a downlink control signal possibly has a resource conflict with the another resource.

Optionally, the first information is determined based on at least one of the following:

other resource information;
control resource set CORESET information;
search space information; and
resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, in a case that the target resource includes at least one of the available resource and the resource object associated with the available resource, the terminal performs, for the target resource based on second information, the first behavior related to at least one of monitoring and reception, where the second information indicates or includes at least one of the following:

a second preset aggregation level;
a second preset bundle size;
a second preset aggregation level offset;
a second preset bundle size offset;
a second preset code rate;
a second preset DCI payload;
a second preset quantity of detection times;
a second preset quantity of reception times;
a second preset maximum aggregation level;
a second preset minimum aggregation level;
a second preset maximum bundle size;
a second preset minimum bundle size;
a second preset aggregation level maximum offset;
a second preset aggregation level minimum offset;
a second preset bundle size maximum offset;
a second preset bundle size minimum offset;
a second preset maximum code rate;
a second preset minimum code rate;
a second preset maximum DCI size;
a second preset minimum DCI size;

a second preset maximum quantity of detection times;

a second preset maximum quantity of reception times;

a second preset minimum quantity of detection times;

a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

Optionally, in at least one of the following cases, the network side device configures, the protocol specifies, or the terminal determines that the target resource matches the second information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the second information is determined based on at least one of the following:

other resource information;

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or
the search space information includes at least one of the following:
a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;
and/or
the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, the terminal determines, based on third information, that the target behavior for the target resource is at least one of the first behavior, the second behavior, the third behavior, the fourth behavior, the fifth behavior, and the sixth behavior, where the third information includes at least one of the following:

a quantity of cell reference signal CRS ports;
control resource set CORESET information;
search space information; and
resource information of overlapping between the another resource and at least one of an RS, a downlink control channel, and a downlink control signal.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.

Optionally, the CORESET information includes at least one of the following:

a quantity of resources occupied by a CORESET, a CORESET quantity, a CORESET type, and a CORESET number; and/or
the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and

a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, in a case that the terminal determines a plurality of target resources, the terminal separately determines target behaviors for at least two of the plurality of target resources based on the granularity of the target resource; and/or

in a case that the terminal determines that the target resource includes a plurality of sub-resources, the terminal separately determines target behaviors for at least two of the plurality of sub-resources based on the granularity of the sub-resource.

Optionally, the radio frequency unit 1201 is configured to:

obtain a configuration of at least one of monitoring and reception corresponding to the target resource.

Optionally, the configuration of the at least one of monitoring and reception indicates at least one of the following:

a third preset aggregation level;

a third preset bundle size;

a third preset aggregation level offset;

a third preset bundle size offset;

a third preset code rate;

a third preset DCI size;

a third preset quantity of detection times;

a third preset quantity of reception times;

a third preset maximum aggregation level;

a third preset minimum aggregation level;

a third preset maximum bundle size;

a third preset minimum bundle size;

a third preset aggregation level maximum offset;

a third preset aggregation level minimum offset;

a third preset bundle size maximum offset;

a third preset bundle size minimum offset;

a third preset maximum code rate;

a third preset minimum code rate;

a third preset maximum DCI payload;

a third preset minimum DCI payload;

a third preset maximum quantity of detection times;

a third preset maximum quantity of reception times;

a third preset minimum quantity of detection times;

a third preset minimum quantity of reception times;

a resource quantity of the target resource;

a resource quantity upper limit of the target resource;

a resource quantity lower limit of the target resource;

a resource proportion of the target resource;

an overlapping resource upper limit of the target resource;

an overlapping resource lower limit of the target resource;

a resource quantity of the non-target resource;

a resource quantity upper limit of the non-target resource;

a resource quantity lower limit of the non-target resource;
a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;
a DCI size of the target resource;
a DCI size upper limit of the target resource;
a DCI size lower limit of the target resource; and
whether the target resource is within an MBSFN resource.

Optionally, the processor 1210 is further used for at least one of the following:

expecting that at least one of an RS, a downlink control channel, and a downlink control signal does not overlap the another resource;
expecting that there is not the target resource;
refraining from expecting that at least one of an RS, a downlink control channel, and a downlink control signal overlaps the another resource; and
refraining from expecting that there is the target resource.

Optionally, the expecting that at least one of an RS, a downlink control channel, and a downlink control signal does not overlap the another resource includes:

expecting that the at least one of the RS, the downlink control channel, and the downlink control signal does not overlap the another resource after being punctured/shifted;
and/or
the expecting that there is not the target resource includes:
expecting that there is not the target resource after being punctured/shifted;
and/or
the refraining from expecting that at least one of an RS, a downlink control channel, and a downlink control signal overlaps the another resource includes:

refraining from expecting that the at least one of the RS, the downlink control channel, and the downlink control signal overlaps the another resource after being punctured/shifted; and/or
the refraining from expecting that there is the target resource includes:
refraining from expecting that there is the target resource after being punctured/shifted.

In another embodiment, the processor 1210 is configured to determine a control resource, where the control resource includes at least one of the following: a first control resource for self-scheduling on a first cell and a second control resource for scheduling on the first cell from a second cell; and

the radio frequency unit 1201 is configured to monitor the control resource, where
the first control resource is determined based on first carrier information for self-scheduling on the first cell, and the first carrier information includes at least one of the following:
first carrier indication information and a first carrier indicator field CIF.

Optionally, the first carrier information is determined based on a carrier indicator field in a target configuration, or the first carrier information is a preset value, where the target configuration includes at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

Optionally, the configuration of the second cell includes a cross-carrier configuration;
and/or

the cross-carrier configuration indicates that there is a carrier indicator field in downlink control information DCI of the second cell;
and/or
there is a carrier indicator field in DCI for self-scheduling on the second cell;
and/or
there is a carrier indicator field in DCI for scheduling another cell other than the first cell from the second cell.

The terminal can improve transmission performance of the terminal.

An embodiment of this application further provides a network side device, including a processor and a communication interface. The processor is configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where a target behavior of a network side device for the target resource includes at least one of the following: a first behavior related to sending; a second behavior related to non-sending; a third behavior related to repetition transmission; a fourth behavior related to a subsequent resource of the target resource; a fifth behavior related to resource allocation or resource mapping; and a sixth behavior related to resource non-allocation or resource non-mapping. Alternatively, the processor is configured to determine a control resource, where the control resource includes at least one of the following: a first control resource for self-scheduling on a first cell and a second control resource for scheduling on the first cell from a second cell; and the communication interface is configured to send the control resource, where the first control resource is determined based on first carrier information for self-scheduling on the first cell, and the first carrier information includes at least one of the following:
first carrier indication information and a first carrier indicator field CIF. This network side device embodiment is corresponding to the foregoing method embodiment of the network side device. Implementation processes and implementations of the foregoing method embodiment are applicable to this network side device embodiment, and the same technical effects can be achieved.

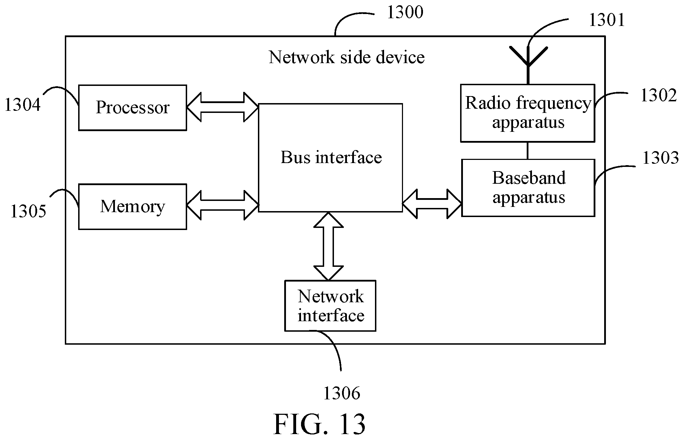

Specifically, an embodiment of this application further provides a network side device. As shown in FIG. 13, the network side device 1300 includes: an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the to-be-sent information to the radio frequency apparatus 1302. After processing the received information, the radio frequency apparatus 1302 sends the information by using the antenna 1301.

In the foregoing embodiment, the method performed by the network side device may be implemented in the baseband apparatus 1303. The baseband apparatus 1303 includes a baseband processor.

For example, the baseband apparatus 1303 may include at least one baseband board. A plurality of chips are disposed on the baseband board. As shown in FIG. 13, one chip is, for example, the baseband processor, connected to the memory 1305 through a bus interface, to invoke a program in the memory 1305 to perform an operation of the network device shown in the foregoing method embodiments.

The network side device may further include a network interface 1306, and the interface is, for example, a common public radio interface (common public radio interface, CPRI).

Specifically, the network side device 1300 in this embodiment of the present invention further includes: instructions or a program that is stored in the memory 1305 and that can be run on the processor 1304. The processor 1304 invokes the instructions or the program in the memory 1305 to perform the method performed by the modules in FIG. 3, and achieve a same technical effect. To avoid repetition, details are not described herein again.

The processor 1304 is configured to determine a target resource, where the target resource includes one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, where
a target behavior of a network side device for the target resource includes at least one of the following:

a first behavior related to sending;
a second behavior related to non-sending;

a third behavior related to repetition transmission;
a fourth behavior related to a subsequent resource of the target resource;
a fifth behavior related to resource allocation or resource mapping; and
a sixth behavior related to resource non-allocation or resource non-mapping.

Optionally, the available resource includes at least one of the following:

at least a part of a resource that can be used as a target downlink resource; and
at least a part of a resource actually used as a target downlink resource;
and/or
the resource object associated with the available resource includes at least one of the following:

a resource object associated with at least a part of a resource that can be used as a target downlink resource; and
a resource object associated with at least a part of a resource actually used as a target downlink resource, where the target downlink resource includes at least one of the following: a reference signal RS resource and a physical downlink control resource.

Optionally, the at least a part of a resource that can be used as a target downlink resource includes:

at least a part of a resource that can be used as a target downlink resource after being shifted or punctured;
and/or
the at least a part of a resource actually used as a target downlink resource includes:

at least a part of a resource actually used as a target downlink resource after being shifted or punctured;
and/or
the resource object associated with at least a part of a resource that can be used as a target downlink resource includes:

a resource object associated with at least a part of a resource that can be used as a target downlink resource after being shifted or punctured;
and/or
the resource object associated with at least a part of a resource that can be actually used as a target downlink resource includes:
a resource object associated with at least a part of a resource that can be actually used as a target downlink resource after being shifted or punctured.

Optionally, the overlapping resource includes at least one of the following:

at least a part of where at least one of the available resource and the reference resource overlaps the another resource;
and/or
the resource object associated with the overlapping resource includes at least one of the following:
a resource object associated with at least a part of where at least one of the available resource and the reference resource overlaps the another resource.

Optionally, the at least a part of where at least one of the available resource and the reference resource overlaps the another resource includes:

at least a part of where at least one of the available resource and the reference resource obtained after being shifted or punctured overlaps the another resource;
and/or
the resource object associated with at least a part of where at least one of the available resource and the reference resource overlaps the another resource includes:
a resource object associated with at least a part of where at least one of the available resource and the reference resource obtained after being shifted or punctured overlaps the another resource.

Optionally, the resource object includes at least one of the following:
a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.

Optionally, the first behavior related to at least one of reception and monitoring for the target resource includes at least one of the following:

monitoring the target resource;
receiving the target resource;
assuming that the target resource is used for transmission of at least one of a reference signal RS, a downlink control channel, and a downlink control signal; and
determining that the target resource is used for transmission of at least one of an RS, a downlink control channel, and a downlink control signal;
and/or
the second behavior related to at least one of non-reception and non-monitoring for the target resource includes at least one of the following:

refraining from monitoring the target resource;
refraining from receiving the target resource;
assuming that the target resource is not used for transmission of at least one of an RS, a downlink control channel, and a downlink control signal; and
determining that the target resource is not used for transmission of at least one of an RS, a downlink control channel, and a downlink control signal;
and/or
the third behavior related to repetition transmission for the target resource includes at least one of the following:

assuming that the target resource is configured for at least one of downlink control channel repetition transmission and downlink control signal repetition transmission;
assuming that the target resource is configured for RS repetition transmission;
assuming that at least one of a downlink control channel repetition transmission and a downlink control signal repetition transmission is performed on the target resource;
assuming that an RS repetition transmission is performed on the target resource;
determining that the target resource is configured for at least one of downlink control channel repetition transmission and downlink control signal repetition transmission;
determining that the target resource is configured for RS repetition transmission;
determining that at least one of a downlink control channel repetition transmission and a downlink control signal repetition transmission is performed on the target resource; and
determining that an RS repetition transmission is performed on the target resource;
and/or
the fourth behavior related to the subsequent resource of the target resource for the target resource includes at least one of the following:

monitoring the subsequent resource of the target resource; and
receiving the subsequent resource of the target resource; and/or
the fifth behavior related to resource allocation or resource mapping for the target resource includes at least one of the following:

mapping or allocating a resource corresponding to the target resource; and/or
the sixth behavior related to resource non-allocation or resource non-mapping for the target resource includes at least one of the following:
refraining from mapping or allocating a resource corresponding to the target resource.

Optionally, in a case that the target resource meets a preset condition, the network side device performs at least one of the following on the target resource:
the first behavior, the second behavior, the third behavior, the fourth behavior, the fifth behavior, and the sixth behavior.

Optionally, the preset condition includes a first condition, and the first condition includes at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a first threshold;

a bundle size corresponding to the target resource is greater than or equal to a second threshold;

a resource quantity of the target resource is equal to or less than a third threshold;

a resource proportion corresponding to the target resource is equal to or less than a fourth threshold;

a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

Optionally, in at least one of the following cases, the network side device configures or a protocol specifies that the target resource meets the first condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the preset condition includes a second condition, and the second condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a seventeenth threshold;

a bundle size corresponding to the target resource is less than or equal to an eighteenth threshold;

a resource quantity of the target resource is equal to or exceeds a nineteenth threshold;

a resource proportion corresponding to the target resource is equal to or exceeds a twentieth threshold;

a resource quantity of at least a part of a non-target resource is equal to or less than a twenty-first threshold;

a resource proportion of at least a part of a non-target resource is equal to or less than a twenty-second threshold;

a code rate corresponding to the target resource is equal to or exceeds a twenty-third threshold;
a DCI size corresponding to the target resource is equal to or exceeds a twenty-fourth threshold;
the target resource is within a non-MBSFN resource;
a value of a precoding granularity control parameter is set to a precoding granularity or all contiguous RBs;
there is overlapping on at least a part or all of the target resource;
there is the overlapping resource;
it is assumed that at least a part of the target resource needs to be or is shifted;
it is assumed that at least a part of the target resource needs to be or is punctured;
a quantity of resources that need to be or are shifted is equal to or exceeds a twenty-fifth threshold;
a quantity of resources that need to be or are punctured is equal to or exceeds a twenty-sixth threshold;
a proportion of resources that need to be or are shifted is equal to or exceeds a twenty-seventh threshold;
a proportion of resources that need to be or are punctured is equal to or exceeds a twenty-eighth threshold;
a quantity of resources that do not need to be or are not shifted is equal to or less than a twenty-ninth threshold;
a quantity of resources that do not need to be or are not punctured is equal to or less than a thirtieth threshold;
a proportion of resources that do not need to be or are not shifted is equal to or less than a thirty-first threshold; and
a proportion of resources that do not need to be or are not punctured is equal to or less than a thirty-second threshold.

Optionally, in a case that the target resource includes at least one of the available resource and the resource object associated with the available resource, the preset condition includes a third condition, and the third condition includes at least one of the following:

the target resource is a terminal specific resource, or the target resource is a dedicated resource, or the target resource is a resource for unicast transmission;
the target resource is used for terminal specific PDCCH transmission, or the target resource is used for dedicated PDCCH transmission, or the target resource is used for unicast PDCCH transmission;
the target resource is used for terminal specific downlink control information DCI transmission, or the target resource is used for dedicated DCI transmission, or the target resource is used for unicast DCI transmission;
the target resource is used for terminal specific control channel element CCE transmission, or the target resource is used for dedicated CCE transmission, or the target resource is used for CCE for unicast transmission;
an aggregation level corresponding to the target resource is greater than or equal to a thirty-third threshold;
a bundle size corresponding to the target resource is greater than or equal to a thirty-fourth threshold;
a resource quantity of the target resource is equal to or exceeds a thirty-fifth threshold;
a resource proportion corresponding to the target resource is equal to or exceeds a thirty-sixth threshold;
a resource quantity of at least a part of a non-target resource is equal to or less than a thirty-seventh threshold;
a resource proportion of at least a part of a non-target resource is equal to or less than a thirty-eighth threshold;
a code rate corresponding to the target resource is equal to or less than a thirty-ninth threshold;
a DCI size corresponding to the target resource is equal to or less than a fortieth threshold;
the target resource is within an MBSFN resource or a non-MBSFN resource;
a value of a precoding granularity control parameter is set to all contiguous RBs or a precoding granularity;
there is no overlapping on at least a part of the target resource;
it is assumed that at least a part of the target resource does not need to be or is not shifted;
it is assumed that at least a part of the target resource does not need to be or is not punctured;
a quantity of resources that need to be or are shifted is equal to or less than a forty-first threshold;
a quantity of resources that need to be or are punctured is equal to or less than a forty-second threshold;
a proportion of resources that need to be or are shifted is equal to or less than a forty-third threshold;
a proportion of resources that need to be or are punctured is equal to or less than a forty-fourth threshold;
a quantity of resources that do not need to be or are not shifted is equal to or exceeds a forty-fifth threshold;
a quantity of resources that do not need to be or are not punctured is equal to or exceeds a forty-sixth threshold;
a proportion of resources that do not need to be or are not shifted is equal to or exceeds a forty-seventh threshold; and
a proportion of resources that do not need to be or are not punctured is equal to or exceeds a forty-eighth threshold.

Optionally, in at least one of the following cases, the network side device configures or a protocol specifies that the target resource meets the third condition:

at least one of an RS, a downlink control channel, and a downlink control signal needs to be or is punctured;
at least one of an RS, a downlink control channel, and a downlink control signal needs to be or is shifted;
a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, in a case that the target resource includes at least one of the available resource and the resource object associated with the available resource, the preset condition includes a fourth condition, and the fourth condition includes at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

Optionally, in a case that the target resource includes at least one of the overlapping resource and the resource object associated with the overlapping resource, the network side device performs, for the target resource based on first information, the first behavior related to at least one of monitoring and reception, where the first information indicates or includes at least one of the following:

a first preset aggregation level;

a first preset bundle size;

a first preset aggregation level offset;

a first preset bundle size offset;

a first preset code rate;

a first preset DCI size;

a first preset quantity of detection times;

a first preset quantity of reception times;

a first preset maximum aggregation level;

a first preset minimum aggregation level;

a first preset maximum bundle size;

a first preset minimum bundle size;

a first preset aggregation level maximum offset;

a first preset aggregation level minimum offset;

a first preset bundle size maximum offset;

a first preset bundle size minimum offset;

a first preset maximum code rate;

a first preset minimum code rate;

a first preset maximum DCI size;

a first preset minimum DCI size;

a first preset maximum quantity of detection times;

a first preset maximum quantity of reception times;

a first preset minimum quantity of detection times;

a first preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

a resource quantity of the target resource is equal to or less than a sixty-fifth threshold;

a resource proportion corresponding to the target resource is equal to or less than a sixty-sixth threshold;

a resource quantity of at least a part of a non-target resource is equal to or greater than a sixty-seventh threshold;

a resource proportion of at least a part of a non-target resource is equal to or greater than a sixty-eighth threshold;

a code rate corresponding to the target resource is equal to or less than a sixty-ninth threshold;

a DCI size corresponding to the target resource is equal to or less than a seventieth threshold;

the target resource is within an MBSFN resource;

a value of a precoding granularity control parameter is set to a precoding granularity or all contiguous RBs;

there is no overlapping on at least a part of the target resource;

a first number of a downlink control signal repetition transmission;

a first maximum number of a downlink control signal repetition transmission;

a first minimum number of a downlink control signal repetition transmission;

a first number of a downlink control channel repetition transmission;

a first maximum number of a downlink control channel repetition transmission;

a first minimum number of a downlink control channel repetition transmission;

a first number of an RS repetition transmission;

a first maximum number of an RS repetition transmission; and

a first minimum number of an RS repetition transmission.

Optionally, in at least one of the following cases, the network side device configures or the protocol specifies that the target resource matches the first information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the first information is determined based on at least one of the following:

other resource information;

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number; and/or

the search space information includes at least one of the following:

a quantity of resources of a search space;
a length of a monitoring occasion of the search space;
a quantity of monitoring occasions of the search space;
a location of the monitoring occasion of the search space;
a length of a span of the search space;
a quantity of spans of the search space;
a location of the span of the search space;
a search space period;
a search space quantity; and
a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;
a quantity of monitoring occasions of the overlapping part between the downlink control signal and at least one of the RS and the downlink control channel;
a quantity of spans of the overlapping part between the downlink control signal and at least one of the RS and the downlink control channel;
a quantity of search spaces of the overlapping part between the downlink control signal and at least one of the RS and the downlink control channel; and
a quantity of CORESETs of the overlapping part between the downlink control signal and at least one of the RS and the downlink control channel.

Optionally, in a case that the target resource includes at least one of the available resource and the resource object associated with the available resource, the network side device performs, for the target resource based on second information, the first behavior related to at least one of monitoring and reception, where the second information indicates or includes at least one of the following:

a second preset aggregation level;
a second preset bundle size;
a second preset aggregation level offset;
a second preset bundle size offset;
a second preset code rate;
a second preset DCI payload;
a second preset quantity of detection times;
a second preset quantity of reception times;
a second preset maximum aggregation level;
a second preset minimum aggregation level;
a second preset maximum bundle size;
a second preset minimum bundle size;
a second preset aggregation level maximum offset;
a second preset aggregation level minimum offset;
a second preset bundle size maximum offset;
a second preset bundle size minimum offset;
a second preset maximum code rate;
a second preset minimum code rate;
a second preset maximum DCI size;
a second preset minimum DCI size;
a second preset maximum quantity of detection times;
a second preset maximum quantity of reception times;
a second preset minimum quantity of detection times;
a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

Optionally, in at least one of the following cases, the network side device configures or the protocol specifies that the target resource matches the second information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

Optionally, the second information is determined based on at least one of the following:

other resource information (for example, resource information such as a port quantity);

control resource set CORESET information;

search space information; and

resource information of overlapping between the another resource and at least one of an RS, a downlink control channel, and a downlink control signal.

Optionally, the CORESET information includes at least one of the following:

a quantity of resources occupied by a CORESET, a CORESET quantity, a CORESET type, and a CORESET number;

and/or

the search space information includes at least one of the following:

a quantity of resources of a search space;

a length of a monitoring occasion of the search space;

a quantity of monitoring occasions of the search space;

a location of the monitoring occasion of the search space;

a length of a span of the search space;

a quantity of spans of the search space;

a location of the span of the search space;

a search space period;

a search space quantity; and

a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, the terminal determines, based on reference information, that the target behavior for the target resource is at least one of the first behavior, the second behavior, the third behavior, the fourth behavior, the fifth behavior, and the sixth behavior, where the reference information includes at least one of the following:

a quantity of cell reference signal CRS ports;

control resource set CORESET information;

search space information; and

resource information of overlapping between the another resource and at least one of an RS, a downlink control channel, and a downlink control signal.

Optionally, the terminal determines, based on a relationship between the third information and a preset threshold, that the target behavior for the target resource is at least one of the first behavior, the second behavior, the third behavior, the fourth behavior, the fifth behavior, and the sixth behavior.

Optionally, the CORESET information includes at least one of the following:

a quantity of resources occupied by a CORESET, a CORESET quantity, a CORESET type, and a CORESET number;

and/or

the search space information includes at least one of the following:

a quantity of resources of a search space;

a length of a monitoring occasion of the search space;

a quantity of monitoring occasions of the search space;

a location of the monitoring occasion of the search space;

a length of a span of the search space;

a quantity of spans of the search space;

a location of the span of the search space;

a search space period;

a search space quantity; and

a search space index;

and/or

the resource information of overlapping between the another resource and the at least one of the RS, the downlink control channel, and the downlink control signal includes at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

Optionally, in a case of determining a plurality of target resources, the network side device separately determines target behaviors for at least two of the plurality of target resources based on the granularity of the target resource; and/or in a case of determining that the target resource includes a plurality of sub-resources, the network side device separately determines target behaviors for at least two of the plurality of sub-resources based on the granularity of the sub-resource.

Optionally, the radio frequency apparatus 1302 is configured to send a configuration of at least one of monitoring and reception corresponding to the target resource to a terminal.

Optionally, the configuration of the at least one of monitoring and reception indicates at least one of the following:

a third preset aggregation level;
a third preset bundle size;
a third preset aggregation level offset;
a third preset bundle size offset;
a third preset code rate;
a third preset DCI size;
a third preset quantity of detection times;
a third preset quantity of reception times;
a third preset maximum aggregation level;
a third preset minimum aggregation level;
a third preset maximum bundle size;
a third preset minimum bundle size;
a third preset aggregation level maximum offset;
a third preset aggregation level minimum offset;
a third preset bundle size maximum offset;
a third preset bundle size minimum offset;
a third preset maximum code rate;
a third preset minimum code rate;
a third preset maximum DCI payload;
a third preset minimum DCI payload;
a third preset maximum quantity of detection times;
a third preset maximum quantity of reception times;
a third preset minimum quantity of detection times;
a third preset minimum quantity of reception times;
a resource quantity of the target resource;
a resource quantity upper limit of the target resource;
a resource quantity lower limit of the target resource;
a resource proportion of the target resource;
an overlapping resource upper limit of the target resource;
an overlapping resource lower limit of the target resource;
a resource quantity of the non-target resource;
a resource quantity upper limit of the non-target resource;
a resource quantity lower limit of the non-target resource;
a resource proportion of the non-target resource;
an overlapping resource upper limit of the non-target resource;
an overlapping resource lower limit of the non-target resource;
a code rate corresponding to the target resource;
a code rate upper limit corresponding to the target resource;
a code rate lower limit corresponding to the target resource;

a DCI size of the target resource;
a DCI size upper limit of the target resource;
a DCI size lower limit of the target resource; and
whether the target resource is within an MBSFN resource.

Optionally, the processor 1304 is used for at least one of the following:

expecting that at least one of an RS, a downlink control channel, and a downlink control signal does not overlap the another resource;
the network side device expects that there is not the target resource;
refraining from expecting that at least one of an RS, a downlink control channel, and a downlink control signal overlaps the another resource; and
refraining from expecting that there is the target resource.

Optionally, the expecting that at least one of an RS, a downlink control channel, and a downlink control signal does not overlap the another resource includes:

expecting that the at least one of the RS, the downlink control channel, and the downlink control signal does not overlap the another resource after being punctured/shifted;
and/or
the expecting that there is not the target resource includes:

expecting that there is not the target resource after being punctured/shifted;
and/or
the refraining from expecting that at least one of an RS, a downlink control channel, and a downlink control signal overlaps the another resource includes:

refraining from expecting that the at least one of the RS, the downlink control channel, and the downlink control signal overlaps the another resource after being punctured/shifted; and/or
the refraining from expecting that there is the target resource includes:
refraining from expecting that there is the target resource after being punctured/shifted.

In another embodiment, the processor 1304 is configured to determine a control resource, where the control resource includes at least one of the following: a first control resource for self-scheduling on a first cell and a second control resource for scheduling on the first cell from a second cell; and

the radio frequency apparatus 1302 is configured to send the control resource, where
the first control resource is determined based on first carrier information for self-scheduling on the first cell, and the first carrier information includes at least one of the following:
first carrier indication information and a first carrier indicator field CIF.

Optionally, the first carrier information is determined based on a carrier indicator field in a target configuration, or the first carrier information is a preset value, where the target configuration includes at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

Optionally, the configuration of the second cell includes a cross-carrier configuration;
and/or

the cross-carrier configuration indicates that there is a carrier indicator field in downlink control information DCI of the second cell;

and/or

there is a carrier indicator field in DCI for self-scheduling on the second cell;

and/or

there is a carrier indicator field in DCI for scheduling another cell other than the first cell from the second cell.

The network side device can improve transmission performance of a terminal.

An embodiment of this application further provides a readable storage medium. The readable storage medium stores a program or instructions. When the program or the instructions are executed by a processor, processes in the embodiment of the resource determining method or the resource monitoring method are implemented, and a same technical effect can be achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement processes in the embodiment of the resource determining method or the resource monitoring method, and can achieve a same technical effect. To avoid repetition, details are not described herein again.

It should be understood that the chip mentioned in embodiments of this application may also be referred to as a system-level chip, a system chip, a chip system, a system-on-a-chip, or the like.

An embodiment of this application further provides a computer program/program product. The computer program/program product is stored in a storage medium. The computer program/program product is executed by at least one processor to implement processes in the embodiment of the resource determining method or the resource monitoring method, and a same technical effect can be achieved. To avoid repetition, details are not described herein again.

An embodiment of this application further provides a transmission determining system, including: a terminal and a network side device. The terminal may be configured to perform steps of the foregoing resource determining method or resource monitoring method on the terminal side, and the network side device may be configured to perform steps of the foregoing resource determining method or resource monitoring method on the network side device side.

It should be noted that, in this specification, the term "include", "have", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. In a case without more restrictions, for an element limited by the statement "include a...", a process, method, article, or apparatus that includes the element may further include another same element. In addition, it should be noted that the scope of the method and apparatus in embodiments of this application is not limited to performing a function in an order shown or discussed, and may further include performing a function in a basically simultaneous manner or in a reverse order according to a related function. For example, the described method may be performed in a different order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by using software and a necessary universal hardware platform, or certainly may be implemented by using hardware. However, in many cases, the former is a better implementation. Based on such an understanding, the technical solutions in this application essentially or the part contributing to the conventional technology may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, or a network device) to perform the method described in embodiments of this application.

Embodiments of this application are described above with reference to the accompanying drawings. However, this application is not limited to the foregoing specific implementations. The foregoing specific implementations are merely an example but not a limitation. Many forms that can be made by a person of ordinary skill in the art without departing from the principle of this application and the protection scope of the claims fall within the protection scope of this application.

**Claims**

1. A resource determining method, comprising:

determining, by a terminal, a target resource, wherein the target resource comprises one of the following: an available resource, a resource object associated with the available resource, an overlapping resource, a resource object associated with the overlapping resource, another resource, a resource object associated with the another resource, a reference resource, and a resource object associated with the reference resource, and the another resource is a resource for preset transmission, wherein

a target behavior of the terminal for the target resource comprises at least one of the following:

a first behavior related to at least one of reception and monitoring;
a second behavior related to at least one of non-reception and non-monitoring;
a third behavior related to repetition transmission;
a fourth behavior related to a subsequent resource of the target resource;
a fifth behavior related to resource allocation or resource mapping; and
a sixth behavior related to resource non-allocation or resource non-mapping.

2. The method according to claim 1, wherein the available resource comprises at least one of the following:

at least a part of a resource that can be used as a target downlink resource; and
at least a part of a resource actually used as a target downlink resource;
and/or
the resource object associated with the available resource comprises at least one of the following:

a resource object associated with at least a part of a resource that can be used as a target downlink resource; and
a resource object associated with at least a part of a resource actually used as a target downlink resource, wherein
the target downlink resource comprises at least one of the following: a reference signal RS resource and a physical downlink control resource.

3. The method according to claim 2, wherein the at least a part of a resource that can be used as a target downlink resource comprises:

at least a part of a resource that can be used as a target downlink resource after being shifted or punctured; and/or
the at least a part of a resource actually used as a target downlink resource comprises:

at least a part of a resource actually used as a target downlink resource after being shifted or punctured; and/or
the resource object associated with at least a part of a resource that can be used as a target downlink resource comprises:

a resource object associated with at least a part of a resource that can be used as a target downlink resource after being shifted or punctured;
and/or
the resource object associated with at least a part of a resource actually used as a target downlink resource comprises:
a resource object associated with at least a part of a resource that can be actually used as a target downlink resource after being shifted or punctured.

4. The method according to claim 1, wherein the overlapping resource comprises at least one of the following:

at least a part of where at least one of the available resource and the reference resource overlaps the another resource;
and/or
the resource object associated with the overlapping resource comprises at least one of the following:
a resource object associated with at least a part of where at least one of the available resource and the reference resource overlaps the another resource.

5. The method according to claim 4, wherein the at least a part of where at least one of the available resource and the reference resource overlaps the another resource comprises:

at least a part of where at least one of the available resource and the reference resource obtained after being shifted or punctured overlaps the another resource;

and/or

the resource object associated with at least a part of where at least one of the available resource and the reference resource overlaps the another resource comprises:

a resource object associated with at least a part of where at least one of the available resource and the reference resource obtained after being shifted or punctured overlaps the another resource.

6. The method according to claim 1, wherein the resource object comprises at least one of the following:

a symbol, a slot, a resource element RE, a resource block RB, a resource element group REG, a REG bundle, a control channel element CCE, a candidate PDCCH, a control resource set CORESET, a span, a PDCCH monitoring occasion, a search space SS, timer running time, a period, a duration, a bandwidth part, a carrier, a subcarrier spacing SCS, a cell, a bandwidth, a frequency band, and a frequency range.

7. The method according to claim 1, wherein the first behavior related to at least one of reception and monitoring for the target resource comprises at least one of the following:

monitoring the target resource;

receiving the target resource;

assuming that the target resource is used for transmission of at least one of a reference signal RS, a downlink control channel, and a downlink control signal; and

determining that the target resource is used for transmission of at least one of an RS, a downlink control channel, and a downlink control signal;

and/or

the second behavior related to at least one of non-reception and non-monitoring for the target resource comprises at least one of the following:

refraining from monitoring the target resource;

refraining from receiving the target resource;

assuming that the target resource is not used for transmission of at least one of an RS, a downlink control channel, and a downlink control signal; and

determining that the target resource is not used for transmission of at least one of an RS, a downlink control channel, and a downlink control signal;

and/or

the third behavior related to repetition transmission for the target resource comprises at least one of the following:

assuming that the target resource is configured for at least one of downlink control channel repetition transmission and downlink control signal repetition transmission;

assuming that the target resource is configured for RS repetition transmission;

assuming that at least one of a downlink control channel repetition transmission and a downlink control signal repetition transmission is performed on the target resource;

assuming that an RS repetition transmission is performed on the target resource;

determining that the target resource is configured for at least one of downlink control channel repetition transmission and downlink control signal repetition transmission;

determining that the target resource is configured for RS repetition transmission;

determining that at least one of a downlink control channel repetition transmission and a downlink control signal repetition transmission is performed on the target resource; and

determining that an RS repetition transmission is performed on the target resource;

and/or

the fourth behavior related to the subsequent resource of the target resource for the target resource comprises at least one of the following:

monitoring the subsequent resource of the target resource; and

receiving the subsequent resource of the target resource; and/or

the fifth behavior related to resource allocation or resource mapping for the target resource comprises at least one of the following:

assuming that a resource corresponding to the target resource is allocated or mapped; and determining that a resource corresponding to the target resource is allocated or mapped; and/or the sixth behavior related to resource non-allocation or resource non-mapping for the target resource comprises at least one of the following:

assuming that a resource corresponding to the target resource is not allocated or mapped; and

determining that a resource corresponding to the target resource is not allocated or mapped.

8. The method according to claim 7, wherein the monitoring the target resource comprises:

monitoring at least one of an RS, a downlink control channel, and a downlink control signal on the target resource; and/or

the receiving the target resource comprises:

receiving at least one of an RS, a downlink control channel, and a downlink control signal on the target resource;

and/or

the monitoring the subsequent resource of the target resource comprises:

monitoring at least one of an RS, a downlink control channel, and a downlink control signal on the subsequent resource of the target resource;

and/or

the receiving the subsequent resource of the target resource comprises:

receiving at least one of an RS, a downlink control channel, and a downlink control signal on the subsequent resource of the target resource;

and/or

the refraining from monitoring the target resource comprises:

refraining from monitoring at least one of an RS, a downlink control channel, and a downlink control signal on the target resource;

and/or

the refraining from receiving the target resource comprises:

refraining from receiving at least one of an RS, a downlink control channel, and a downlink control signal on the target resource.

9. The method according to claim 7, wherein in a case that the target resource meets a preset condition, the terminal performs at least one of the following on the target resource:
the first behavior, the second behavior, the third behavior, the fourth behavior, the fifth behavior, and the sixth behavior.

10. The method according to claim 9, wherein the preset condition comprises a first condition, and the first condition comprises at least one of the following:

the target resource is a terminal specific resource, or the target resource is a dedicated resource, or the target resource is a resource for unicast transmission;
the target resource is used for terminal specific PDCCH transmission, or the target resource is used for dedicated PDCCH transmission, or the target resource is used for unicast PDCCH transmission;
the target resource is used for terminal specific downlink control information DCI transmission, or the target resource is used for dedicated DCI transmission, or the target resource is used for unicast DCI transmission;
the target resource is used for terminal specific control channel element CCE transmission, or the target resource is used for dedicated CCE transmission, or the target resource is used for CCE for unicast transmission;
an aggregation level corresponding to the target resource is greater than or equal to a first threshold;
a bundle size corresponding to the target resource is greater than or equal to a second threshold;
a resource quantity of the target resource is equal to or less than a third threshold;
a resource proportion corresponding to the target resource is equal to or less than a fourth threshold;
a resource quantity of at least a part of a non-target resource is greater than or equal to a fifth threshold;

a resource proportion of at least a part of a non-target resource is equal to or exceeds a sixth threshold;

a code rate corresponding to the target resource is equal to or less than a seventh threshold;

a DCI size corresponding to the target resource is equal to or less than an eighth threshold;

the target resource is within a multicast broadcast single frequency network MBSFN resource or a normal subframe;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a ninth threshold;

a quantity of resources that need to be or are punctured is equal to or less than a tenth threshold;

a proportion of resources that need to be or are shifted is equal to or less than an eleventh threshold;

a proportion of resources that need to be or are punctured is equal to or less than a twelfth threshold;

a quantity of resources that do not need to be or are not shifted is equal to or exceeds a thirteenth threshold;

a quantity of resources that do not need to be or are not punctured is equal to or exceeds a fourteenth threshold;

a proportion of resources that do not need to be or are not shifted is equal to or exceeds a fifteenth threshold; and

a proportion of resources that do not need to be or are not punctured is equal to or exceeds a sixteenth threshold.

11. The method according to claim 10, wherein in at least one of the following cases, a network side device configures, a protocol specifies, or the terminal determines that the target resource meets the first condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

12. The method according to claim 9, wherein the preset condition comprises a second condition, and the second condition comprises at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a seventeenth threshold;

a bundle size corresponding to the target resource is less than or equal to an eighteenth threshold;

a resource quantity of the target resource is equal to or exceeds a nineteenth threshold;

a resource proportion corresponding to the target resource is equal to or exceeds a twentieth threshold;

a resource quantity of at least a part of a non-target resource is equal to or less than a twenty-first threshold;

a resource proportion of at least a part of a non-target resource is equal to or less than a twenty-second threshold;

a code rate corresponding to the target resource is equal to or exceeds a twenty-third threshold;

a DCI size corresponding to the target resource is equal to or exceeds a twenty-fourth threshold;

the target resource is within a non-MBSFN resource;

a value of a precoding granularity control parameter is set to a precoding granularity or all contiguous RBs;

there is overlapping on at least a part or all of the target resource;

there is the overlapping resource;

it is assumed that at least a part of the target resource needs to be or is shifted;

it is assumed that at least a part of the target resource needs to be or is punctured;

a quantity of resources that need to be or are shifted is equal to or exceeds a twenty-fifth threshold;

a quantity of resources that need to be or are punctured is equal to or exceeds a twenty-sixth threshold;

a proportion of resources that need to be or are shifted is equal to or exceeds a twenty-seventh threshold;

a proportion of resources that need to be or are punctured is equal to or exceeds a twenty-eighth threshold;

a quantity of resources that do not need to be or are not shifted is equal to or less than a twenty-ninth threshold;

a quantity of resources that do not need to be or are not punctured is equal to or less than a thirtieth threshold;

a proportion of resources that do not need to be or are not shifted is equal to or less than a thirty-first threshold; and

a proportion of resources that do not need to be or are not punctured is equal to or less than a thirty-second threshold.

13. The method according to claim 9, wherein
in a case that the target resource comprises at least one of the available resource and the resource object associated with the available resource, the preset condition comprises a third condition, and the third condition comprises at least one of the following:

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific downlink control information DCI transmission, or the target resource is used for dedicated DCI transmission, or the target resource is used for unicast DCI transmission;

the target resource is used for terminal specific control channel element CCE transmission, or the target resource is used for dedicated CCE transmission, or the target resource is used for CCE for unicast transmission;

an aggregation level corresponding to the target resource is greater than or equal to a thirty-third threshold;

a bundle size corresponding to the target resource is greater than or equal to a thirty-fourth threshold;

a resource quantity of the target resource is equal to or exceeds a thirty-fifth threshold;

a resource proportion corresponding to the target resource is equal to or exceeds a thirty-sixth threshold;

a resource quantity of at least a part of a non-target resource is equal to or less than a thirty-seventh threshold;

a resource proportion of at least a part of a non-target resource is equal to or less than a thirty-eighth threshold;

a code rate corresponding to the target resource is equal to or less than a thirty-ninth threshold;

a DCI size corresponding to the target resource is equal to or less than a fortieth threshold;

the target resource is within an MBSFN resource or a non-MBSFN resource;

a value of a precoding granularity control parameter is set to all contiguous RBs or a precoding granularity;

there is no overlapping on at least a part of the target resource;

it is assumed that at least a part of the target resource does not need to be or is not shifted;

it is assumed that at least a part of the target resource does not need to be or is not punctured;

a quantity of resources that need to be or are shifted is equal to or less than a forty-first threshold;

a quantity of resources that need to be or are punctured is equal to or less than a forty-second threshold;

a proportion of resources that need to be or are shifted is equal to or less than a forty-third threshold;

a proportion of resources that need to be or are punctured is equal to or less than a forty-fourth threshold;

a quantity of resources that do not need to be or are not shifted is equal to or exceeds a forty-fifth threshold;

a quantity of resources that do not need to be or are not punctured is equal to or exceeds a forty-sixth threshold;

a proportion of resources that do not need to be or are not shifted is equal to or exceeds a forty-seventh threshold; and

a proportion of resources that do not need to be or are not punctured is equal to or exceeds a forty-eighth threshold.

14. The method according to claim 13, wherein in at least one of the following cases, a network side device configures, a protocol specifies, or the terminal determines that the target resource meets the third condition:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

15. The method according to claim 9, wherein in a case that the target resource comprises at least one of the available resource and the resource object associated with the available resource, the preset condition comprises a fourth condition, and the fourth condition comprises at least one of the following:

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

an aggregation level corresponding to the target resource is less than or equal to a forty-ninth threshold;

a bundle size corresponding to the target resource is less than or equal to a fiftieth threshold;

a resource quantity of the target resource is equal to or less than a fifty-first threshold;

a resource proportion corresponding to the target resource is equal to or less than a fifty-second threshold;

a resource quantity of at least a part of a non-target resource is equal to or exceeds a fifty-third threshold;

a resource proportion of at least a part of a non-target resource is equal to or exceeds a fifty-fourth threshold;

a code rate corresponding to the target resource is equal to or exceeds a fifty-fifth threshold;

a DCI size corresponding to the target resource is equal to or exceeds a fifty-sixth threshold;

the target resource is within an MBSFN resource or a normal subframe;

a value of a precoding granularity control parameter is set to a precoding granularity or all contiguous RBs;

there is overlapping on at least a part or all of the target resource;

it is assumed that at least a part of the target resource needs to be or is shifted;

it is assumed that at least a part of the target resource needs to be or is punctured;

a quantity of resources that need to be or are shifted is equal to or exceeds a fifty-seventh threshold;

a quantity of resources that need to be or are punctured is equal to or exceeds a fifty-eighth threshold;

a proportion of resources that need to be or are shifted is equal to or exceeds a fifty-ninth threshold;

a proportion of resources that need to be or are punctured is equal to or exceeds a sixtieth threshold;

a quantity of resources that do not need to be or are not shifted is equal to or less than a sixty-first threshold;

a quantity of resources that do not need to be or are not punctured is equal to or less than a sixty-second threshold;

a proportion of resources that do not need to be or are not shifted is equal to or less than a sixty-third threshold; and

a proportion of resources that do not need to be or are not punctured is equal to or less than a sixty-fourth threshold.

16. The method according to any one of claims 7 to 15, wherein in a case that the target resource comprises at least one of the overlapping resource and the resource object associated with the overlapping resource, the terminal performs, for the target resource based on first information, the first behavior related to at least one of monitoring and reception, wherein the first information indicates or comprises at least one of the following:

a first preset aggregation level;
a first preset bundle size;
a first preset aggregation level offset;
a first preset bundle size offset;
a first preset code rate;
a first preset DCI size;
a first preset quantity of detection times;
a first preset quantity of reception times;
a first preset maximum aggregation level;
a first preset minimum aggregation level;
a first preset maximum bundle size;
a first preset minimum bundle size;
a first preset aggregation level maximum offset;
a first preset aggregation level minimum offset;
a first preset bundle size maximum offset;
a first preset bundle size minimum offset;
a first preset maximum code rate;
a first preset minimum code rate;
a first preset maximum DCI size;
a first preset minimum DCI size;

a first preset maximum quantity of detection times;

a first preset maximum quantity of reception times;

a first preset minimum quantity of detection times;

a first preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

a resource quantity of the target resource is equal to or less than a sixty-fifth threshold;

a resource proportion corresponding to the target resource is equal to or less than a sixty-sixth threshold;

a resource quantity of at least a part of a non-target resource is equal to or greater than a sixty-seventh threshold;

a resource proportion of at least a part of a non-target resource is equal to or greater than a sixty-eighth threshold;

a code rate corresponding to the target resource is equal to or less than a sixty-ninth threshold;

a DCI size corresponding to the target resource is equal to or less than a seventieth threshold;

the target resource is within an MBSFN resource;

a value of a precoding granularity control parameter is set to a precoding granularity or all contiguous RBs;

there is no overlapping on at least a part of the target resource;

a first number of a downlink control signal repetition transmission;

a first maximum number of a downlink control signal repetition transmission;

a first minimum number of a downlink control signal repetition transmission;

a first number of a downlink control channel repetition transmission;

a first maximum number of a downlink control channel repetition transmission;

a first minimum number of a downlink control channel repetition transmission;

a first number of an RS repetition transmission;

a first maximum number of an RS repetition transmission; and

a first minimum number of an RS repetition transmission.

17. The method according to claim 16, wherein in at least one of the following cases, the network side device configures, the protocol specifies, or the terminal determines that the target resource matches the first information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

18. The method according to claim 16, wherein the first information is determined based on at least one of the following:

other resource information;

control resource set CORESET information;

search space information; and

resource information of overlapping between the another resource and at least one of an RS, a downlink control channel, and a downlink control signal.

19. The method according to claim 18, wherein the CORESET information comprises at least one of the following:

a quantity of resources occupied by a CORESET, a CORESET quantity, a CORESET type, and a CORESET number;

and/or

the search space information comprises at least one of the following:

a quantity of resources of a search space;

a length of a monitoring occasion of the search space;

a quantity of monitoring occasions of the search space;

a location of the monitoring occasion of the search space;

a length of a span of the search space;

a quantity of spans of the search space;

a location of the span of the search space;

a search space period;

a search space quantity; and

a search space index;

and/or

the resource information of overlapping between the another resource and the at least one of the RS, the downlink control channel, and the downlink control signal comprises at least one of the following:

a quantity of symbols of the overlapping part between the downlink control signal and at least one of the RS and the downlink control channel;

a quantity of monitoring occasions of the overlapping part between the downlink control signal and at least one of the RS and the downlink control channel;

a quantity of spans of the overlapping part between the downlink control signal and at least one of the RS and the downlink control channel;

a quantity of search spaces of the overlapping part between the downlink control signal and at least one of the RS and the downlink control channel; and

a quantity of CORESETs of the overlapping part between the downlink control signal and at least one of the RS and the downlink control channel.

20. The method according to any one of claims 7 to 15, wherein in a case that the target resource comprises at least one of the available resource and the resource object associated with the available resource, the terminal performs, for the target resource based on second information, the first behavior related to at least one of monitoring and reception, wherein the second information indicates or comprises at least one of the following:

a second preset aggregation level;

a second preset bundle size;

a second preset aggregation level offset;

a second preset bundle size offset;

a second preset code rate;

a second preset DCI payload;

a second preset quantity of detection times;

a second preset quantity of reception times;

a second preset maximum aggregation level;

a second preset minimum aggregation level;

a second preset maximum bundle size;

a second preset minimum bundle size;

a second preset aggregation level maximum offset;

a second preset aggregation level minimum offset;

a second preset bundle size maximum offset;

a second preset bundle size minimum offset;

a second preset maximum code rate;

a second preset minimum code rate;

a second preset maximum DCI size;

a second preset minimum DCI size;

a second preset maximum quantity of detection times;

a second preset maximum quantity of reception times;

a second preset minimum quantity of detection times;

a second preset minimum quantity of reception times;

the target resource is a cell specific resource, or the target resource is a common resource, or the target resource is a resource for broadcast transmission;

the target resource is used for cell specific PDCCH transmission, or the target resource is used for common PDCCH transmission, or the target resource is used for broadcast PDCCH transmission;

the target resource is used for cell specific DCI transmission, or the target resource is used for common DCI transmission, or the target resource is used for broadcast DCI transmission;

the target resource is used for cell specific CCE transmission, or the target resource is used for common CCE transmission, or the target resource is used for CCE for broadcast transmission;

the target resource is a terminal specific resource, or the target resource is a dedicated resource, or the target resource is a resource for unicast transmission;

the target resource is used for terminal specific PDCCH transmission, or the target resource is used for dedicated PDCCH transmission, or the target resource is used for unicast PDCCH transmission;

the target resource is used for terminal specific DCI transmission, or the target resource is used for dedicated downlink control information DCI transmission, or the target resource is used for unicast DCI transmission;

the target resource is used for terminal specific CCE transmission, or the target resource is used for dedicated downlink control information CCE transmission, or the target resource is used for CCE for unicast transmission;

a resource quantity of the target resource is equal to or exceeds a seventy-first threshold;

a resource proportion of the target resource is equal to or exceeds a seventy-second threshold;

a resource quantity of at least a part of a non-target resource is equal to or less than a seventy-third threshold;

a resource proportion of at least a part of a non-target resource is equal to or less than a seventy-fourth threshold;

a code rate corresponding to the target resource is equal to or less than a seventy-fifth threshold;

a DCI size corresponding to the target resource is equal to or less than a seventy-sixth threshold;

the target resource is within an MBSFN resource;

a value of a precoding granularity control parameter is set to a precoding granularity or all contiguous RBs;

there is no overlapping on at least a part of the target resource;

a second number of a downlink control signal repetition transmission;

a second maximum number of a downlink control signal repetition transmission;

a second minimum number of a downlink control signal repetition transmission;

a second number of a downlink control channel repetition transmission;

a second maximum number of a downlink control channel repetition transmission;

a second minimum number of a downlink control channel repetition transmission;

a second number of an RS repetition transmission;

a second maximum number of an RS repetition transmission; and

a second minimum number of an RS repetition transmission.

21. The method according to claim 20, wherein in at least one of the following cases, the network side device configures, the protocol specifies, or the terminal determines that the target resource matches the second information:

at least one of an RS, a downlink control channel, and a downlink control signal needs to be or is punctured;

at least one of an RS, a downlink control channel, and a downlink control signal needs to be or is shifted;

a resource of at least one of an RS, a downlink control channel, and a downlink control signal is determined based on an offset;

a resource of at least one of an RS, a downlink control channel, and a downlink control signal is determined based on the another resource; and

at least one of an RS, a downlink control channel, and a downlink control signal possibly has a resource conflict with the another resource.

22. The method according to claim 20, wherein the second information is determined based on at least one of the following:

other resource information;

control resource set CORESET information;

search space information; and

resource information of overlapping between the another resource and at least one of an RS, a downlink control channel, and a downlink control signal.

23. The method according to any one of claims 1 to 15, wherein the terminal determines, based on third information, that the target behavior for the target resource is at least one of the first behavior, the second behavior, the third behavior, the fourth behavior, the fifth behavior, and the sixth behavior, wherein the third information comprises at least one of the following:

a quantity of cell reference signal CRS ports;

control resource set CORESET information;

search space information; and

resource information of overlapping between the another resource and at least one of an RS, a downlink control channel, and a downlink control signal.

24. The method according to any one of claims 1 to 15, wherein in a case that the terminal determines a plurality of target resources, the terminal separately determines target behaviors for at least two of the plurality of target resources based on the granularity of the target resource; and/or

in a case that the terminal determines that the target resource comprises a plurality of sub-resources, the terminal separately determines target behaviors for at least two of the plurality of sub-resources based on the granularity of the sub-resource.

25. The method according to any one of claims 1 to 15, wherein the method further comprises:

obtaining a configuration of at least one of monitoring and reception corresponding to the target resource.

26. The method according to claim 25, wherein the configuration of the at least one of monitoring and reception indicates at least one of the following:

a third preset aggregation level;

a third preset bundle size;

a third preset aggregation level offset;

a third preset bundle size offset;

a third preset code rate;

a third preset DCI size;

a third preset quantity of detection times;

a third preset quantity of reception times;

a third preset maximum aggregation level;

a third preset minimum aggregation level;

a third preset maximum bundle size;

a third preset minimum bundle size;

a third preset aggregation level maximum offset;

a third preset aggregation level minimum offset;

a third preset bundle size maximum offset;

a third preset bundle size minimum offset;

a third preset maximum code rate;

a third preset minimum code rate;

a third preset maximum DCI payload;

a third preset minimum DCI payload;

a third preset maximum quantity of detection times;

a third preset maximum quantity of reception times;

a third preset minimum quantity of detection times;

a third preset minimum quantity of reception times;

a resource quantity of the target resource;

a resource quantity upper limit of the target resource;

a resource quantity lower limit of the target resource;

a resource proportion of the target resource;

an overlapping resource upper limit of the target resource;

an overlapping resource lower limit of the target resource;

a resource quantity of the non-target resource;

a resource quantity upper limit of the non-target resource;

a resource quantity lower limit of the non-target resource;

a resource proportion of the non-target resource;

an overlapping resource upper limit of the non-target resource;

an overlapping resource lower limit of the non-target resource;

a code rate corresponding to the target resource;

a code rate upper limit corresponding to the target resource;

a code rate lower limit corresponding to the target resource;

a DCI size of the target resource;

a DCI size upper limit of the target resource;
a DCI size lower limit of the target resource; and
whether the target resource is within an MBSFN resource.

27. A resource monitoring method, comprising:

determining, by a terminal, a control resource, wherein the control resource comprises at least one of the following: a first control resource for self-scheduling on a first cell and a second control resource for scheduling on the first cell from a second cell; and
monitoring, by the terminal, the control resource, wherein
the first control resource is determined based on first carrier information for self-scheduling on the first cell; and
the first carrier information comprises at least one of the following:
first carrier indication information and a first carrier indicator field CIF.

28. The method according to claim 27, wherein the first carrier information is determined based on a carrier indicator field in a target configuration, or the first carrier information is a preset value, wherein the target configuration comprises at least one of the following:

a configuration for configuring or enabling scheduling on the first cell from the second cell;
a configuration for configuring or indicating the second cell for scheduling the first cell;
a configuration for configuring or indicating cross-carrier scheduling information;
a configuration for configuring or indicating self-scheduling on the first cell; and
a configuration for configuring or indicating scheduled information of the first cell;
and/or
the first carrier indication information is determined based on a carrier indicator field corresponding to scheduling on the first cell from the second cell.

29. A resource determining method, comprising:

determining, by a network side device, a target resource, wherein the target resource comprises one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, wherein
a target behavior of the network side device for the target resource comprises at least one of the following:

a first behavior related to sending;
a second behavior related to non-sending;
a third behavior related to repetition transmission;
a fourth behavior related to a subsequent resource of the target resource;
a fifth behavior related to resource allocation or resource mapping; and
a sixth behavior related to resource non-allocation or resource non-mapping.

30. The method according to claim 29, wherein the first behavior related to sending for the target resource comprises at least one of the following:

sending the target resource; and
assuming that the target resource is used for transmission of at least one of a reference signal RS, a downlink control channel, and a downlink control signal;
and/or
the second behavior related to non-sending for the target resource comprises at least one of the following:

refraining from monitoring the target resource;
refraining from receiving the target resource; and
assuming that the target resource is not used for transmission of at least one of an RS, a downlink control channel, and a downlink control signal;
and/or
the third behavior related to repetition transmission for the target resource comprises at least one of the following: assuming that the target resource is configured for at least one of downlink control channel repetition transmission and downlink control signal repetition transmission;
assuming that the target resource is configured for RS repetition transmission;
assuming that at least one of a downlink control channel repetition transmission and a downlink control signal repetition transmission is performed on the target resource; and
assuming that an RS repetition transmission is performed on the target resource;
and/or
the fourth behavior related to the subsequent resource of the target resource for the target resource comprises at least one of the following:

monitoring the subsequent resource of the target resource; and
receiving the subsequent resource of the target resource; and/or
the fifth behavior related to resource allocation or resource mapping for the target resource comprises at least one of the following:

assuming that a resource corresponding to the target resource is allocated or mapped; and
determining that a resource corresponding to the target resource is allocated or mapped; and/or
the sixth behavior related to resource non-allocation or resource non-mapping for the target resource comprises at least one of the following:

assuming that a resource corresponding to the target resource is not allocated or mapped; and
determining that a resource corresponding to the target resource is not allocated or mapped.

31. A resource monitoring method, comprising:

determining, by a network side device, a control resource, wherein the control resource comprises at least one of the following: a first control resource for self-scheduling on a first cell and a second control resource for scheduling on the first cell from a second cell; and
sending, by the network side device, the control resource, wherein
the first control resource is determined based on first carrier information for self-scheduling on the first cell, and the first carrier information comprises at least one of the following:
first carrier indication information and a first carrier indicator field CIF.

32. A resource determining apparatus, comprising:

a determining module, configured to determine a target resource, wherein the target resource comprises one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, wherein
a target behavior of a terminal for the target resource comprises at least one of the following:

a first behavior related to at least one of reception and monitoring;
a second behavior related to at least one of non-reception and non-monitoring;
a third behavior related to repetition transmission;
a fourth behavior related to a subsequent resource of the target resource;
a fifth behavior related to resource allocation or resource mapping; and
a sixth behavior related to resource non-allocation or resource non-mapping.

33. A resource monitoring apparatus, comprising:

a determining module, configured to determine a control resource, wherein the control resource comprises at least one of the following: a first control resource for self-scheduling on a first cell and a second control resource for scheduling on the first cell from a second cell; and
a monitoring module, configured to monitor the control resource, wherein
the first control resource is determined based on first carrier information for self-scheduling on the first cell, and the first carrier information comprises at least one of the following:
first carrier indication information and a first carrier indicator field CIF.

34. A resource determining apparatus, comprising:

a determining module, configured to determine a target resource, wherein the target resource comprises one of the following: an available resource, a resource object associated with the available resource, an overlapping resource, a resource object associated with the overlapping resource, another resource, a resource object associated with the another resource, a reference resource, and a resource object associated with the reference resource, and the another resource is resource overlapping for preset transmission, wherein a target behavior of a network side device for the target resource comprises at least one of the following:

a first behavior related to sending;
a second behavior related to non-sending;
a third behavior related to repetition transmission;
a fourth behavior related to a subsequent resource of the target resource;
a fifth behavior related to resource allocation or resource mapping; and
a sixth behavior related to resource non-allocation or resource non-mapping.

35. A resource monitoring apparatus, comprising:

a determining module, configured to determine a control resource, wherein the control resource comprises at least one of the following: a first control resource for self-scheduling on a first cell and a second control resource for scheduling on the first cell from a second cell; and
a sending module, configured to send the control resource, wherein
the first control resource is determined based on first carrier information for self-scheduling on the first cell, and the first carrier information comprises at least one of the following:
first carrier indication information and a first carrier indicator field CIF.

36. A terminal, comprising a processor and a memory, wherein the memory stores a program or instructions that can be run on the processor, and when the program or the instructions are executed by the processor, steps of the resource determining method according to any one of claims 1 to 26 are implemented, or when the program or the instructions are executed by the processor, steps of the resource monitoring method according to either of claims 27 and 28 are implemented.

37. A network side device, comprising a processor and a memory, wherein the memory stores a program or instructions that can be run on the processor, and when the program or the instructions are executed by the processor, steps of the resource determining method according to either of claims 29 and 30 are implemented, or when the program or the instructions are executed by the processor, steps of the resource monitoring method according to claim 31 are implemented.

38. A readable storage medium, wherein the readable storage medium stores a program or instructions, and when the program or the instructions are executed by a processor, steps of the resource determining method according to any one of claims 1 to 26 are implemented, or steps of the resource monitoring method according to either of claims 27 and 28 are implemented, or steps of the resource determining method according to either of claims 29 and 30 are implemented, or steps of the resource monitoring method according to claim 31 are implemented.

Network side
device

11

11

Terminal

Terminal

FIG. 1

Start

A terminal determines a target resource — 201

End

FIG. 2

Case 1

| LTE |
|---|

| ⊠ NR |
|---|

Case 2

| LTE 1 |
|---|

| ⊠ NR |
|---|

Case 3

| LTE 1 | LTE 2 |
|---|---|

| ⊠ NR |
|---|

Case 4

| LTE 1 | LTE 2 |
|---|---|

| ⊠ NR ▮ |
|---|

✕ Overlap/Collide

| CORESET 1 |
|---|

| CORESET 2 |
|---|

FIG. 3

⬡ Start

A terminal determines a control resource ⟶ 401

The terminal monitors the control resource ⟶ 402

End

FIG. 4

Start

A network side device determines a target resource — 501

End

FIG. 5

Start

A network side device determines a control resource — 601

The network side device sends the control resource — 602

End

FIG. 6

FIG. 7

FIG. 8

FIG. 9

1000

Determining
module ⌐ 1001

Sending module ⌐ 1002

Resource monitoring
apparatus

FIG. 10

1100

Communication device

1101 Processor ⟺ Memory 1102

FIG. 11

FIG. 12

1300

1301

Network side device

1304 — Processor

1302

Radio frequency apparatus

Bus interface

1305 — Memory

1303

Baseband apparatus

Network interface

1306

FIG. 13

## INTERNATIONAL SEARCH REPORT

| International application No. |
|---|
| **PCT/CN2023/070971** |

| A. | CLASSIFICATION OF SUBJECT MATTER |
|---|---|
| | H04W 72/04(2023.01)i |

According to International Patent Classification (IPC) or to both national classification and IPC

| B. | FIELDS SEARCHED |
|---|---|

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

CNKI: CNPAT; WPI; EPODOC; 3GPP: 目标资源, 参考, 参考资源, 打孔, 调度, 检测, 控制, 控制资源, 行为, 操作, 目标, 偏移, 小区, 重叠, 重叠资源, 指示符, PDCCH, DCI, target, destinat+, resource?, reference, RS, punctur+, shedul+, detect+, control, control resource, behavior, operation, offset, cell, overlap, indicat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110830193 A (BEIJING SAMSUNG TELECOM R&D CENTER et al.) 21 February 2020 (2020-02-21) description, paragraphs 93-209 | 1-26, 29-30, 32, 34, 36-38 |
| X | CN 110958094 A (RESEARCH INSTITUTE OF CHINA MOBILE COMMUNICATIONS CORP. et al.) 03 April 2020 (2020-04-03) description, paragraphs 21-118 | 27-28, 31, 33, 35 |
| X | CN 108024317 A (ZTE CORP.) 11 May 2018 (2018-05-11) description, paragraphs 101-326 | 1-26, 29-30, 32, 34, 36-38 |
| A | CN 104053239 A (CHINA ACADEMY OF TELECOMMUNICATIONS TECHNOLOGY) 17 September 2014 (2014-09-17) entire document | 1-38 |
| A | WO 2018120663 A1 (HUAWEI TECHNOLOGIES CO., LTD.) 05 July 2018 (2018-07-05) entire document | 1-38 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 March 2023** | **10 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/070971**

| Patent document cited in search report | | | Publication date (day/month/year) | Patent family member(s) | | | Publication date (day/month/year) |
|---|---|---|---|---|---|---|---|
| CN | 110830193 | A | 21 February 2020 | CN | 110518933 | A | 29 November 2019 |
| | | | | WO | 2019225970 | A1 | 28 November 2019 |
| | | | | US | 2022029761 | A1 | 27 January 2022 |
| | | | | EP | 3769574 | A1 | 27 January 2021 |
| | | | | KR | 20210000314 | A | 04 January 2021 |
| | | | | CN | 110858797 | A | 03 March 2020 |
| | | | | CN | 111263446 | A | 09 June 2020 |
| CN | 110958094 | A | 03 April 2020 | None | | | |
| CN | 108024317 | A | 11 May 2018 | WO | 2018082387 | A1 | 11 May 2018 |
| CN | 104053239 | A | 17 September 2014 | None | | | |
| WO | 2018120663 | A1 | 05 July 2018 | CN | 113905439 | A | 07 January 2022 |
| | | | | CN | 108702756 | A | 23 October 2018 |

Form PCT/ISA/210 (patent family annex) (July 2022)

**EP 4 465 723 A1**

**Patent documents cited in the description**

• CN 202210022490X